(19) Europäisches Patentamt
European Patent Office
Office européen des brevets

(11) EP 2 474 226 A1

(12) **EUROPEAN PATENT APPLICATION**

(43) Date of publication:
**11.07.2012 Bulletin 2012/28**

(51) Int Cl.:
***A01N 25/32*** *(2006.01)* ***A01N 37/34*** *(2006.01)*
***A01P 13/00*** *(2006.01)*

(21) Application number: **12150224.9**

(22) Date of filing: **05.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.01.2011 US 201161430556 P**
**07.01.2011 EP 11150383**

(71) Applicant: **BASF SE**
**67056 Ludwigshafen (DE)**

(72) Inventors:
- **Major, Julia**
**67251 Freinsheim (DE)**
- **Evans, Richard Roger**
**67117 Limburgerhof (DE)**
- **Simon, Anja**
**69469 Weinheim (DE)**
- **Song, Dschun**
**68167 Mannheim (DE)**
- **Newton, Trevor William**
**67435 Neustadt (DE)**
- **Witschel, Matthias**
**67098 Bad Dürkheim (DE)**
- **Seitz, Thomas**
**68519 Viernheim (DE)**
- **Kloet, Andree van der**
**69120 Heidelberg (DE)**
- **Großmann, Klaus**
**67141 Neuhofen (DE)**
- **Kreuz, Klaus**
**79211 Denzlingen (DE)**
- **Parra Rapado, Liliana**
**77654 Offenburg (DE)**

(54) **Herbicidally active composition comprising cyanobutyrates**

(57) The present invention relates to a herbicidal composition comprising:
A) at least one cyanobutyrate compound of the formula I

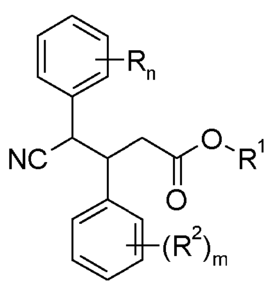

I

wherein the variables are defined as in the specification; and at least one further active compound selected from
B) herbicides of class b1) to b15) as defined in the specification,
and
C) safeners.

EP 2 474 226 A1

## Description

The present invention relates to herbicidally active compositions comprising at least one cyanobutyrate of formula I and at least one further compound selected from herbicidally active compounds and safeners.

In the case of crop protection compositions, it is desirable in principle to increase the specific activity of an active compound and the reliability of the effect. It is particularly desirable for the crop protection composition to control the harmful plants effectively, but at the same time to be compatible with the useful plants in question. Also desirable is a broad spectrum of activity allowing the simultaneous control of harmful plants. Frequently, this cannot be achieved using a single herbicidally active compound.

With many highly effective herbicides, there is the problem that their compatibility with useful plants, in particular dicotyledonous crop plants, such as cotton, oilseed rape and graminaceous plants, such as barley, millet, corn, rice, wheat and sugar cane, is not always satisfactory, i.e. in addition to the harmful plants, the crop plants, too, are damaged on a scale which cannot be tolerated. By reducing the application rates, the useful plants are spared; however, naturally, the extent of the control of harmful plants decreases, too.

Frequently, it is a problem that herbicides can only be applied within a narrow time frame in order to achieve the desired herbicidal action, which time frame may be unpredictably influenced by weather conditions.

It is known that special combinations of different specifically active herbicides result in enhanced activity of a herbicide component in the sense of a synergistic effect. In this manner, it is possible to reduce the application rates of herbicidally active compounds required for controlling the harmful plants.

Furthermore, it is known that in some cases joint application of specifically acting herbicides with organic active compounds, some of which may also have herbicidal activity, allows better crop plant compatibility to be achieved. In these cases, the active compounds act as antidotes or antagonists and are also referred to as safeners, since they reduce or even prevent damage to the crop plants.

Herbicidal cyanobutyrates have been described in EP-A 5 341, EP-A 266 725, EP-A 270 830, JP 04/297 454, JP 04/297 455 and JP 05/058 979.

It is an object of the present invention to provide herbicidal compositions which are highly active against unwanted harmful plants. At the same time, the compositions should have good compatibility with useful plants. In addition, the compositions according to the invention should have a broad spectrum of activity.

This and further objects are achieved by the herbicidally active compositions below.

Accordingly, the present invention relates to herbicidally active compositions comprising:

A) at least one cyanobutyrate of the formula I

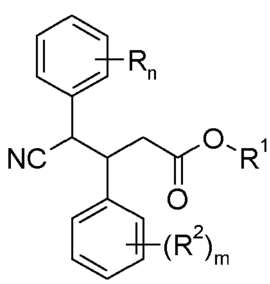

I

wherein

R is halogen, cyano, nitro, $C_1$-$C_4$-alkyl, $C_1$-$C_4$-haloalkyl, $C_2$-$C_6$-alkenyl, $C_2$-$C_6$-alkynyl, $C_1$-$C_4$-alkoxy, $C_1$-$C_4$-haloalkoxy, $S(O)_xR^{aa}$ or
Z-tri($C_1$-$C_4$-alkyl)silyl, x is 0, 1 or 2;
$R^{aa}$ is $C_1$-$C_4$-alkyl, $C_1$-$C_4$-haloalkyl, $C_2$-$C_6$-alkenyl or $C_2$-$C_6$-alkynyl;

$R^1$ is hydrogen, Z-CN, $C_1$-$C_8$-alkyl, Z-$C_3$-$C_6$-cycloalkyl, $C_1$-$C_8$-haloalkyl, $C_1$-$C_4$-alkoxy-$C_1$-$C_4$-alkyl, $C_1$-$C_4$-alkylthio-$C_1$-$C_4$-alkyl, $C_3$-$C_8$-alkenyl, Z-$C_3$-$C_6$-cycloalkenyl, $C_3$-$C_8$-alkynyl, $NR^iR^{ii}$, Z-(tri-$C_1$-$C_4$-alkyl)silyl, Z-N=C$(R^a)_2$, Z-C($R^a$)=N$R^a$, Z-C(=T)-$R^a$, Z-P(=T)$(R^a)_2$, Z-phenyl, or a 3- to 7-membered monocyclic or 9- or 10-membered bicyclic saturated, unsaturated or aromatic heterocycle which is attached via carbon or nitrogen, contains 1, 2, 3 or 4 heteroatoms selected from the group consisting of O, N and S and may carry carbonyl or thiocarbonyl groups;
T is O or S,

$R^a$ is OH, $C_1$-$C_8$-alkyl, $C_1$-$C_4$-haloalkyl, Z-$C_3$-$C_6$-cycloalkyl, $C_2$-$C_8$-alkenyl, Z-$C_5$-$C_6$-cycloalkenyl, $C_2$-$C_8$-alkynyl, Z-$C_1$-$C_6$-alkoxy, Z-$C_1$-$C_4$-haloalkoxy, Z-$C_3$-$C_8$-alkenyloxy, Z-$C_3$-$C_8$-alkynyloxy, $NR^iR^{ii}$, $C_1$-$C_6$-alkylsulfonyl, Z-(tri-$C_1$-$C_4$-alkyl)silyl, Z-phenyl, Z-phenoxy, Z-phenylamino or a 5- or 6-membered monocyclic or 9- or 10-membered bicyclic heterocycle which contains 1, 2, 3 or 4 heteroatoms selected from the group consisting of O, N and S, where the cyclic groups are unsubstituted or substituted by 1, 2, 3 or 4 groups $R^b$;
$R^i$, $R^{ii}$ independently of one another are hydrogen, $C_1$-$C_8$-alkyl, $C_1$-$C_4$-haloalkyl, $C_3$-$C_8$-alkenyl, $C_3$-$C_8$-alkynyl, Z-$C_3$-$C_6$-cycloalkyl, Z-$C_1$-$C_8$-alkoxy, Z-$C_1$-$C_8$-haloalkoxy or Z-C(=O)-$R^A$, where $R^A$ is OH or $C_1$-$C_4$-alkoxy;
$R^i$ and $R^{ii}$ together with the nitrogen atom to which they are attached may also form a 5- or 6-membered monocyclic or 9-or 10-membered bicyclic heterocycle which contains 1, 2, 3 or 4 heteroatoms selected from the group consisting of O, N and S;
$R^b$ independently of one another are Z-CN, Z-OH, Z-$NO_2$, Z-halogen, $C_1$-$C_8$-alkyl, $C_1$-$C_4$-haloalkyl, $C_2$-$C_8$-alkenyl, $C_2$-$C_8$-alkynyl, Z-$C_1$-$C_8$-alkoxy, Z-$C_1$-$C_8$-haloalkoxy, Z-$C_3$-$C_{10}$-cycloalkyl, O-Z-$C_3$-$C_{10}$-cycloalkyl, Z-C(=O)-$R^a$, $NR^iR^{ii}$, **Z-(**tri-$C_1$-$C_4$-alkyl)silyl, Z-phenyl or $S(O)_xR^{bb}$, where $R^{bb}$ is $C_1$-$C_8$-alkyl or $C_1$-$C_6$-haloalkyl;
$R^b$ together with the group $R^b$ attached to the adjacent carbon atom may also form a 5- or 6-membered saturated or partially or fully unsaturated ring which, in addition to carbon atoms, may contain 1, 2 or 3 heteroatoms selected from the group consisting of O, N and S; Z is a covalent bond or $C_1$-$C_8$-alkylene;

$R^2$ is halogen, cyano, nitro, $C_1$-$C_4$-alkyl, $C_1$-$C_4$-alkoxy, $S(O)_xR^{bb}$, $NR^iR^{ii}$, $C_1$-$C_4$-haloalkyl or $C_1$-$C_4$-haloalkoxy;

m, n independently of one another are 0, 1, 2, 3, 4 or 5;
where in the groups R, $R^1$ and $R^2$ and their substituents, the carbon chains and/or the cyclic groups may be partially or fully substituted by groups $R^a$ and/or $R^b$,
or a N-oxide or an agriculturally suitable salt thereof
and at least one further active compound selected from

B) herbicides of class b1) to b15):

- b1) lipid biosynthesis inhibitors;
- b2) acetolactate synthase inhibitors (ALS inhibitors);
- b3) photosynthesis inhibitors;
- b4) protoporphyrinogen-IX oxidase inhibitors,
- b5) bleacher herbicides;
- b6) enolpyruvyl shikimate 3-phosphate synthase inhibitors (EPSP inhibitors);
- b7) glutamine synthetase inhibitors;
- b8) 7,8-dihydropteroate synthase inhibitors (DHP inhibitors);
- b9) mitosis inhibitors;
- b10) inhibitors of the synthesis of very long chain fatty acids (VLCFA inhibitors);
- b11) cellulose biosynthesis inhibitors;
- b12) decoupler herbicides;
- b13) auxinic herbicides;
- b14) auxin transport inhibitors; and
- b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flampropisopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin (CAS 403640-27-7), methyl azide, methyl bromide, methyl-dymron, methyl iodide, MSMA, oleic acid, oxaziclomefone, pelargonic acid, pyributicarb, quinoclamine, triaziflam, tridiphane and 6-chloro-3-(2-cyclopropyl-6-methylphenoxy)-4-pyridazinol (CAS 499223-49-3) and its salts and esters;

including their agriculturally acceptable salts or derivatives;
and

C) safeners.

The invention relates in particular to compositions in the form of herbicidally active crop protection compositions

comprising a herbicidally effective amount of an active compound combination comprising at least one cyanobutyrate of formula I and at least one further compound selected from the herbicides B and the safeners C, as defined above, and also at least one liquid and/or solid carrier and/or one or more surfactants and, if desired, one or more further auxiliaries customary for crop protection compositions.

The invention also relates to compositions in the form of a crop protection composition formulated as a 1-component composition comprising an active compound combination comprising at least one cyanobutyrate of formula I and at least one further active compound selected from the herbicides B and the safeners C, and at least one solid or liquid carrier and/or one or more surfactants and, if desired, one or more further auxiliaries customary for crop protection compositions.

The invention also relates to compositions in the form of a crop protection composition formulated as a 2-component composition comprising a first component comprising at least one cyanobutyrate of formula I, a solid or liquid carrier and/or one or more surfactants, and a second component comprising at least one further active compound selected from the herbicides B and safeners C, a solid or liquid carrier and/or one or more surfactants, where additionally both components may also comprise further auxiliaries customary for crop protection compositions.

Surprisingly, the compositions according to the invention comprising at least one cyanobutyrate of formula I and at least one herbicide B have better herbicidal activity, i.e. better activity against harmful plants, than would have been expected based on the herbicidal activity observed for the individual compounds, or a broader activity spectrum. The herbicidal activity to be expected for mixtures based on the individual compound can be calculated using Colby' s formula (see below). If the activity observed exceeds the expected additive activity of the individual compounds, synergism is said to be present.

Moreover, the time frame, within which the desired herbicidal action can be achieved, may be expanded by the compositions according to the invention comprising at least one cyanobutyrate of formula I and at least one herbicide B and optionally a safener C. This allows a more flexibly timed application of the compositons according to the present invention in comparison with the single compounds.

The compositions according to the invention comprising both at least one cyanobutyrate of formula I and at least one of the compounds mentioned under C also have good herbicidal activity against harmful plants and better compatibility with useful plants.

Surprisingly, the compositions according to the invention comprising at least one cyanobutyrate of formula I, at least one herbicide B and at least one of the compounds mentioned under C have better herbicidal activity, i.e. better activity against harmful plants, than would have been expected based on the herbicidal activity observed for the individual compounds, or a broader activity spectrum, and show better compatibility with useful plants than compositions comprising only one compound I and one herbicide B.

The invention furthermore relates to a method for controlling unwanted vegetation, in particular where crop plants are cultivated.

The invention also relates to a method for the desiccation or defoliation of plants.

As used herein, the terms "controlling" and "combating" are synonyms.

As used herein, the terms "undesirable vegetation" and "harmful plants" are synonyms.

Further embodiments of the present invention are evident from the claims, the description and the examples. It is to be understood that the features mentioned above and still to be illustrated below of the subject matter of the invention can be applied not only in the combination given in each particular case but also in other combinations, without leaving the scope of the invention.

The organic moieties mentioned in the definition of the variables R, $R^1$, $R^2$, $R^a$, $R^b$, $R^{aa}$, $R^{bb}$, $R^i$, $R^{ii}$, $R^A$ and Z are - like the term halogen - collective terms for individual enumerations of the individual group members. The term halogen denotes in each case fluorine, chlorine, bromine or iodine. All hydrocarbon chains, i.e. all alkyl, can be straight-chain or branched, the prefix $C_n$-$C_m$ denoting in each case the possible number of carbon atoms in the group.

Examples of such meanings are:

- $C_1$-$C_4$-alkyl and also the $C_1$-$C_4$-alkyl moieties of Z-(tri-$C_1$-$C_4$-alkyl)silyl, $C_1$-$C_4$-alkoxy-$C_1$-$C_4$-alkyl and $C_1$-$C_4$-alkylthio-$C_1$-$C_4$-alkyl: for example, $CH_3$ and $C_2H_5$, n-propyl, $CH(CH_3)_2$, n-butyl, $CH(CH_3)$-$C_2H_5$, $CH_2$-$CH(CH_3)_2$ and $C(CH_3)_3$;
- $C_1$-$C_6$-alkyl and also the $C_1$-$C_6$-alkyl moieties of $C_1$-$C_6$-alkylsulfonyl a: $C_1$-$C_4$-alkyl as mentioned above, and also, for example, n-pentyl, 1-methylbutyl, 2-methylbutyl, 3-methylbutyl, 2,2-dimethylpropyl, 1,1-dimethylpropyl, 1,2-dimethylpropyl, 1-ethylpropyl n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl or 1-ethyl-2-methylpropyl, preferably methyl, ethyl, n-propyl, 1-methylethyl, n-butyl, 1,1-dimethylethyl, n-pentyl or n-hexyl;
- $C_1$-$C_8$-alkyl: $C_1$-$C_6$-alkyl as mentioned above, and also, for example, n-heptyl, n-octyl or 2-ethylhexyl;
- $C_1$-$C_4$-haloalkyl: a $C_1$-$C_4$-alkyl radical as mentioned above which is partially or fully substituted by fluorine, chlorine,

bromine and/or iodine, for example, chloromethyl, dichloromethyl, trichloromethyl, fluoromethyl, difluoromethyl, trifluoromethyl, chlorofluoromethyl, dichlorofluoromethyl, chlorodifluoromethyl, bromomethyl, iodomethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl, nonafluorobutyl, 1,1,2,2,-tetrafluoroethyl and 1-trifluoromethyl-1,2,2,2-tetrafluoroethyl;

- $C_1$-$C_6$-haloalkyl: $C_1$-$C_4$-haloalkyl as mentioned above, and also, for example, 5-fluoropentyl, 5-chloropentyl, 5-bromopentyl, 5-iodopentyl, undecafluoropentyl, 6-fluorohexyl, 6-chlorohexyl, 6-bromohexyl, 6-iodohexyl and dodecafluorohexyl;
- $C_1$-$C_8$-haloalkyl: $C_1$-$C_6$-haloalkyl as mentioned above, and also, for example, chloroheptyl, bromoheptyl, fluoroheptyl, 1,3-dichloroheptyl, 1,4,4-trichloroheptyl, 2,4-dichloromethylheptyl, chlorooctyl, bromooctyl, iodooctyl, 2,4-dichoromethylhexyl and 2,4-dichlorooctyl;
- $C_3$-$C_6$-cycloalkyl and also the cycloalkyl moieties of Z-$C_3$-$C_6$-cycloalkyl:

  monocyclic saturated hydrocarbons having 3 to 6 ring members, such as cyclopropyl, cyclobutyl, cyclopentyl and cyclohexyl;

- $C_3$-$C_{10}$-cycloalkyl and also the cycloalkyl moieties of Z-$C_3$-$C_{10}$-cycloalkyl and O-Z-$C_3$-$C_{10}$-cycloalkyl: $C_3$-$C_6$-cycloalkyl as mentioned above, and also, for example, cycloheptyl, cyclooctyl, cyclononyl and cyclodecyl;
- $C_2$-$C_6$-alkenyl: for example ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl and 1-ethyl-2-propeny1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl;
- $C_2$-$C_8$-alkenyl: $C_2$-$C_6$-alkenyl as mentioned above, and also, for example 1-heptenyl, 2-heptenyl, 3-heptenyl, 1-octenyl, 2-octenyl, 3-octenyl and 4-octenyl.
- $C_3$-$C_8$-alkenyl and also the alkenyl moieties of Z-$C_3$-$C_8$-alkenyloxy: $C_2$-$C_8$-alkenyl as mentioned above, with the exception of ethenyl;
- $C_3$-$C_6$-cycloalkenyl and also the cycloalkenyl moieties of Z-$C_3$-$C_6$-cycloalkenyl: for example cyclopropenyl, cyclobutenyl, cyclopentenyl and cyclohexenyl;
- $C_5$-$C_6$-cycloalkenyl and also the cycloalkenyl moieties of Z-$C_5$-$C_6$-cycloalkenyl: for example cyclopentenyl and cyclohexenyl;
- $C_2$-$C_6$-alkynyl: for example ethynyl, 1-propynyl, 2-propynyl, 1-butynyl, 2-butynyl, 3-butynyl, 1-methyl-2-propynyl, 1-pentynyl, 2-pentynyl, 3-pentynyl, 4-pentynyl, 1-methyl-2-butynyl, 1-methyl-3-butynyl, 2-methyl-3-butynyl, 3-methyl-1-butynyl, 1,1-dimethyl-2-propynyl and 1-ethyl-2-propynyl;1-hexynyl, 2-hexynyl, 3-hexynyl, 4-hexynyl, 5-hexynyl, 1-methyl-2-pentynyl, 1-methyl-3-pentynyl, 1-methyl-4-pentynyl, 2-methyl-3-pentynyl, 2-methyl-4-pentynyl, 3-methyl-1-pentynyl, 3-methyl-4-pentynyl, 4-methyl-1-pentynyl, 4-methyl-2-pentynyl, 1,1-dimethyl-2-butynyl, 1,1-dimethyl-3-butynyl, 1,2-dimethyl-3-butynyl, 2,2-dimethyl-3-butynyl, 3,3-dimethyl-1-butynyl, 1-ethyl-2-butynyl, 1-ethyl-3-butynyl, 2-ethyl-3-butynyl and 1-ethyl-1-methyl-2-propynyl;
- $C_2$-$C_8$-alkynyl: $C_2$-$C_6$-alkynyl as mentioned above, and also, for example, 1-heptynyl, 2-heptynyl,1-octynyl and 2-octynyl;
- $C_3$-$C_8$-alkynyl and also the alkynyl moieties of Z-$C_3$-$C_8$-alkynyloxy: a $C_2$-$C_8$-alkynyl radical as mentioned above with the exception of $C_2$-alkynyl radicals;
- $C_1$-$C_4$-alkoxy and also the $C_1$-$C_4$-alkoxy moieties of $C_1$-$C_4$-alkoxy-$C_1$-$C_4$-alkyl:

  methoxy, ethoxy, propoxy, 1-methylethoxy butoxy, 1-methylpropoxy, 2-methylpropoxy and 1,1-dimethylethoxy;

- $C_1$-$C_6$-alkoxy and also the $C_1$-$C_6$-alkoxy moieties of Z-$C_1$-$C_6$-alkoxy: $C_1$-$C_4$-alkoxy as mentioned above, and also, for example, pentoxy, 1-methylbutoxy, 2-methylbutoxy, 3-methoxylbutoxy, 1,1-dimethylpropoxy, 1,2-dimethylpropoxy, 2,2-dimethylpropoxy, 1-ethylpropoxy, hexoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy;
- $C_1$-$C_8$-alkoxy and also the $C_1$-$C_8$-alkoxy moieties of Z-$C_1$-$C_8$-alkoxy: $C_1$-$C_6$-alkoxy as mentioned above, and also, for example, heptoxy, octoxy, 1,1,3,3-tetramethylbutoxy and 2-ethylhexoxy;
- $C_1$-$C_4$-haloalkoxy and also the $C_1$-$C_4$-haloalkoxy moieties of Z-$C_1$-$C_4$-haloalkoxy:

  for example $OCH_2F$, $OCHF_2$, $OCF_3$, $OCH_2Cl$, $OCHCl_2$, $OCCl_3$, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy or $OC_2F_5$. $C_1$-$C_4$-haloalkoxy is additionally, for example, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, $OCH_2$-$C_2F_5$, $OCF_2$-$C_2F_5$, 1-($CH_2F$)-2-fluoroethoxy, 1-($CH_2Cl$)-2-chloroethoxy, 1-($CH_2Br$)-2-bromoethoxy, 4-fluorobutoxy, 4-chlorobutoxy, 4-bromobutoxy or nonafluorobutoxy;

- $C_1$-$C_8$-haloalkoxy and also the $C_1$-$C_8$-haloalkoxy moieties of Z-$C_1$-$C_8$-haloalkoxy:

  $C_1$-$C_4$-haloalkoxy as mentioned above, and also, for example, 5-fluoropentoxy, 5-chloropentoxy, 5-brompentoxy, 5-iodopentoxy, undecafluoropentoxy, 6-fluorohexoxy, 6-chlorohexoxy, 6-bromohexoxy, 6-iodohexoxy, dodecafluorohexoxy 7-fluoroheptoxy, 7-chloroheptoxy, 7-bromoheptoxy, 7-iodoheptoxy, perfluoroheptoxy, 8-fluorooctoxy, 8-chlorooctoxy, 8-bromooctoxy, 8-iodooctoxy and octadecafluorooctoxy;

- $C_1$-$C_4$-alkylthio also the $C_1$-$C_4$-alkylthio moieties of $C_1$-$C_4$-alkylthio-$C_1$-$C_4$-alkyl: for example methylthio, ethylthio, propylthio, 1-methylethylthio, butylthio, 1-methylpropylthio, 2-methylpropylthio and 1,1-dimethylethylthio;
- $C_1$-$C_8$-alkylene: a straight carbon chain having from 1 to 8 carbon atoms and having only carbon-carbon single bonds, for example methylene ($CH_2$), ethylene ($CH_2CH_2$), n-propylene ($CH_2CH_2CH_2$) and n-butylene ($CH_2CH_2CH_2CH_2$).
- a 3- to 7-membered monocyclic or 9- or 10-membered bicyclic saturated, unsaturated or aromatic heterocycle which contains 1, 2, 3 or 4 heteroatoms selected from the group consisting of O, N and S means, for example, pyridazin-3-yl, pyridazin-4-yl, pyrimidin-2-yl, pyrimidin-4-yl, pyrimidin-5-yl, pyrazin-2-yl, 2-furyl, 3-furyl, 2-thienyl, 3-thienyl, pyrazol-1-yl, pyrazol-3-yl, pyrazol-4-yl, isoxazol-3-yl, isoxazol-4-yl, isoxazol-5-yl, isothiazol-3-yl, isothiazol-4-yl, isothiazol-5-yl, imidazol-1-yl, imidazol-2-yl, imidazol-4-yl, oxazol-2-yl, oxazol-4-yl, oxazol-5-yl, thiazol-2-yl, thiazol-4-yl, thiazol-5-yl, pyrazol-3-yl, imidazol-5-yl, oxazol-2-yl, thiazol-2-yl, thiazol-4-yl, thiazol-5-yl, pyridin-2-yl, pyridin-3-yl, pyridin-4-yl, pyrimidin-2-yl, pyrimidin-4-yl, pyrimidin-5-yl, pyridazin-4-yl, pyrazin-2-yl, [1H]-tetrazol-5-yl; [2H]-tetrazol-5-yl, 2-tetrahydrofuryl, 3-tetrahydrofuryl, 2-oxetanyl and 3-oxetanyl;
- a 5- or 6-membered monocyclic or 9- or 10-membered bicyclic heterocycle which contains 1, 2, 3 or 4 heteroatoms selected from the group consisting of O, N and S means, for example: pyridazin-3-yl, pyridazin-4-yl, pyrimidin-2-yl, pyrimidin-4-yl, pyrimidin-5-yl, pyrazin-2-yl, 2-furyl, 3-furyl, 2-thienyl, 3-thienyl, pyrazol-1-yl, pyrazol-3-yl, pyrazol-4-yl, isoxazol-3-yl, isoxazol-4-yl, isoxazol-5-yl, isothiazol-3-yl, isothiazol-4-yl, isothiazol-5-yl, imidazol-1-yl, imidazol-2-yl, imidazol-4-yl, oxazol-2-yl, oxazol-4-yl, oxazol-5-yl, thiazol-2-yl, thiazol-4-yl and thiazol-5-yl, pyrazol-3-yl, imidazol-5-yl, oxazol-2-yl, thiazol-2-yl, thiazol-4-yl, thiazol-5-yl, pyridin-2-yl, pyridin-3-yl, pyridin-4-yl, pyrimidin-2-yl, pyrimidin-4-yl, pyrimidin-5-yl, pyridazin-4-yl, pyrazin-2-yl, [1H]-tetrazol-5-yl and [2H]-tetrazol-5-yl, 2-tetrahydrofuryl and 3-tetrahydrofuryl;
- 5- or 6-membered saturated or partially or fully unsaturated ring which, in addition to carbon atoms, may contain 1, 2 or 3 heteroatoms selected from the group consisting of O, N and S means, for example: pyridazin-3-yl, pyridazin-4-yl, pyrimidin-2-yl, pyrimidin-4-yl, pyrimidin-5-yl, pyrazin-2-yl, 2-furyl, 3-furyl, 2-thienyl, 3-thienyl, pyrazol-1-yl, pyrazol-3-yl, pyrazol-4-yl, isoxazol-3-yl, isoxazol-4-yl, isoxazol-5-yl, isothiazol-3-yl, isothiazol-4-yl, isothiazol-5-yl, imidazol-1-yl, imidazol-2-yl, imidazol-4-yl, oxazol-2-yl, oxazol-4-yl, oxazol-5-yl, thiazol-2-yl, thiazol-4-yl and thiazol-5-yl, pyrazol-3-yl, imidazol-5-yl, oxazol-2-yl, thiazol-2-yl, thiazol-4-yl, thiazol-5-yl, pyridin-2-yl, pyridin-3-yl, pyridin-4-yl, pyrimidin-2-yl, pyrimidin-4-yl, pyrimidin-5-yl, pyridazin-4-yl, pyrazin-2-yl, [1H]-tetrazol-5-yl and [2H]-tetrazol-5-yl, cyclopentyl, cyclohexyl, 2-tetrahydrofuryl and 3-tetrahydrofuryl.

The preferred embodiments of the invention mentioned herein below have to be understood as being preferred either independently from each other or in combination with one another.

The compounds of the formula I contain two centers of chirality and may, depending on the substitution pattern, contain one or more further. Accordingly, the compounds according to the invention can be present as pure enantiomers or diastereomers or as enantiomer or diastereomer mixtures. The invention provides both the pure enantiomers or diastereomers and their mixtures.

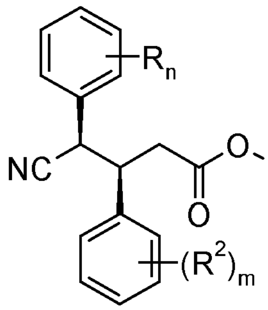

threo

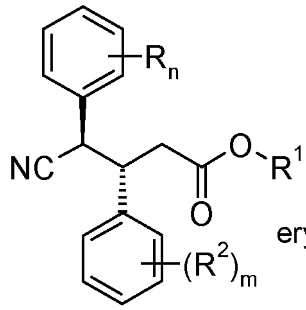

erythro

The compounds of the formula I may also be present in the form of the N-oxides and/or of their agriculturally useful salts, the type of salt generally not being important. Suitable salts are generally the salts of those cations or the acid addition salts of those acids whose cations and anions, respectively, have no adverse effect on the herbicidal activity of the compounds I.
Suitable cations are in particular ions of the alkali metals, preferably lithium, sodium or potassium, of the alkaline earth metals, preferably calcium or magnesium, and of the transition metals, preferably manganese, copper, zinc or iron. Another cation that may be used is ammonium, where, if desired, one to four hydrogen atoms may be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, tetramethylammonium, tetrabutylammonium, 2-(2-hydroxyeth-1-oxy)eth-1-ylammonium, di(2-hydroxyeth-1-yl)ammonium, trimethylbenzylammonium. Another suitable ammonium cation is the pyridine nitrogen atom of the formula I quaternized by alkylation or arylation. Also suitable are phosphonium ions, sulfonium ions, preferably tri($C_1$-$C_4$-alkyl)sulfonium, or sulfoxonium ions, preferably tri($C_1$-$C_4$-alkyl) sulfoxonium. Anions of suitable acid addition salts are primarily chloride, bromide, fluoride, hydrogensulfate, sulfate, dihydrogenphosphate, hydrogenphosphate, nitrate, bicarbonate, carbonate, hexafluorosilicate, hexafluorophosphate, benzoate and also the anions of $C_1$-$C_4$-alkanoic acids, preferably formate, acetate, propionate, butyrate or trifluoroacetate.

The preferred embodiments of the invention mentioned herein below have to be understood as being preferred either independently from each other or in combination with one another.

Among the cyanobutyrates of formula I, preference is given to those in which the variables R, $R^1$, $R^2$, n and m, either independently of one another or in combination with one another, have the following meanings:

In one embodiment of the compounds of the formula I, the index n has a value of 0 to 3, preferably 0, 1 or 2, in particular 1. In a further embodiment, n is 0. If at least one group R is present, it is preferably located in positions 3, 4 and/or 5, in particular 3 or 4.
If the index n has the value 2, the two groups R are preferably in the positions 3 and 5 (hereinafter also referred to as "3,5") or the positions 3 and 4 (hereinafter also referred to as "3,4").

Preferred embodiments of group(s) $R_n$ relate to halogen, in particular chlorine or fluorine, particularly preferably fluorine. Further embodiments of group(s) $R_n$ relate to cyano or nitro, in particular cyano. In a further preferred embodiment, $R_n$ represents halomethyl, such as $CF_3$ or $CHF_2$. In a further preferred embodiment, $R_n$ represents halomethoxy, such as $OCF_3$ or $OCHF_2$. In a further preferred embodiment, $R_n$ represents $C_1$-$C_4$-alkyl, preferably methyl. In a further preferred embodiment, $R_n$ represents $C_2$-$C_6$-alkynyl, preferably propargyl. In a further preferred embodiment, $R_n$ represents $C_1$-$C_4$-alkoxy, $C_1$-$C_4$-haloalkoxy or $S(O)_xR^{aa}$, where $R^{aa}$ preferably represents methyl and the index x is preferably 0 or 2. In a particularly preferred embodiment, $R_n$ is selected from the group consisting of 3-F; 3,4-$F_2$; 3,5-$F_2$; 3,4,5-$F_3$; 3-F,4-Cl; 3-Cl,4-F; 3-Cl; 4-Cl; 4-F and 3-CN.

Preferably, the index m is 0, 1, 2, 3 or 4, more preferably 0, 1, 2 or 3, even more preferably 1 or 2 and in particular 2.

In a preferred embodiment, $R^1$ is selected from the group consisting of hydrogen, $C_1$-$C_8$-alkyl, cyano-$C_1$-$C_4$-alkyl, $C_3$-$C_6$-alkenyl, $C_3$-$C_6$-alkynyl, $C_1$-$C_8$-haloalkyl, $C_1$-$C_4$-alkoxy-$C_1$-$C_4$-alkyl, optionally substituted Z-phenyl and $NR^iR^{ii}C_1$-$C_4$-alkyl, where $R^i$ is hydrogen or $C_1$-$C_4$-alkyl and $R^{ii}$ is hydrogen, $C_1$-$C_4$-alkyl or C(=O)-$R^A$.

In a particularly preferred embodiment, the group $R^1$ is selected from the group consisting of hydrogen, $C_1$-$C_4$-alkyl, cyanomethyl, allyl, propargyl, $C_1$-$C_4$-haloalkyl (comprising preferably 1 to 3 halogen atoms), $C_1$-$C_4$-alkoxy-

$C_1$-$C_4$-alkyl, phenyl and benzyl, which phenyl or benzyl groups may partially substituted at any position or fully substituted.

In an even more preferred embodiment, $R^1$ is slected from the group consisting of H, $CH_3$, $C_2H_5$, $CH_2CN$, $CH_2C{\equiv}CH$, $CH_2CH_2F$, $CH_2CHF_2$, $CH_2CF_3$ and $CH_2OCH_3$.

In another preferred embodiment, the group $R^1$ is selected from the group consisting of hydrogen, $C_1$-$C_4$-alkyl, phenyl and benzyl, which phenyl or benzyl groups may be partially substituted at any position or fully substituted. More preferably, $R^1$ is hydrogen or $C_1$-$C_4$-alkyl. Yet more preferably, $R^1$ is selected from the group consisting of H, $CH_3$ and $C_2H_5$. Even more preferably, $R^1$ is selected from the group consisting of H and $CH_3$.

In another preferred embodiment, the group $R^1$ is cyano-$C_1$-$C_4$-alkyl, in particular $CH_2CN$.

In another preferred embodiment, the group $R^1$ is $C_3$-$C_6$-alkynyl, in particular propargyl ($CH_2C{\equiv}CH$).

In a further embodiment, the group $R^1$ is $C_1$-$C_4$-haloalkyl, in particular $C_2$-$C_3$-haloalkyl. The aforementioned $C_1$-$C_4$- or $C_2$-$C_3$-haloalkyl groups preferably comprise 1 to 3 halogen atoms which are in particular selected from the group consisting of chlorine and fluorine. In a particularly preferred embodiment, $R^1$ is haloethyl, such as 2,2-dihaloethyl, where the halogen atoms are selected from the group consisting of chlorine and fluorine. In a further aspect, $R^1$ is halopropyl, such as 3,3,3-trihalopropyl or 2,2,3,3-tetrahalopropyl, where the halogen atoms are selected from the group consisting of chlorine and fluorine. In an even preferred embodiment, $R^1$ is selected from the group consisting of CH2CH2F, $CH_2CHF_2$, $CH_2CF_3$, $CH_2CH_2CF_3$, $CH_2CF_2CHF_2$, $CH_2CClF_2$, $CH_2CH_2Cl$, $CH_2CHCl_2$ and $CH_2CCl_3$. In a yet more preferred embodiment, $R^1$ is selected from the group consisting of CH2CH2F, $CH_2CHF_2$, $CH_2CF_3$, $CH_2CH_2CF_3$, $CH_2CF_2CHF_2$, $CH_2CClF_2$, $CH_2CH_2Cl$, $CH_2CHCl_2$ and $CH_2CCl_3$, more preferably from the group consisting of CH2CH2F, $CH_2CHF_2$, and $CH_2CF_3$.

In another preferred embodiment, the group $R^1$ is $C_1$-$C_4$-alkoxy-$C_1$-$C_4$-alkyl, in particular $CH_2OCH_3$.

In a preferred embodiment, the group $R^1$ is phenyl which is unsubstituted or partially substituted at any position or fully substituted, more preferably with halogen atoms (in particular with fluorine and/or chlorine and especially fluorine). More preferably, the group $R^1$ is phenyl being unsubstituted or substituted by one or two halogen atoms (in particular fluorine and/or chlorine and especially fluorine) at any position. Even more preferably, the group $R^1$ is phenyl which is substituted in positions 2, 3 and/or 4 with one or two halogen atoms, in particular fluorine and/or chlorine and especially fluorine. In a particularly preferred aspect, $R^1$ is selected from the group consisting of 2-F-$C_6H_4$, 3-F-$C_6H_4$, 4-F-$C_6H_4$, 2,4-$F_2$-$C_6H_3$ and 2,4-$Cl_2$-$C_6H_3$.

A further preferred embodiment of the group $R^1$ relates to benzyl which is unsubstituted or partially substituted at any position or fully substituted, in particular with halogen atoms (especially fluorine) or with $C_1$-$C_4$-alkyl (especially methyl). More preferably, $R^1$ is benzyl which is unsubstituted or substituted at any position by 1 or 2 groups independently selected from halogen (especially fluorine) or $C_1$-$C_4$-alkyl (especially methyl). In a particularly preferred aspect, $R^1$ is selected from the group consisting of $CH_2C_6H_5$, $CH(CH_3)C_6H_5$, $CH_2$(2-F-$C_6H_5$), $CH(CH_3)$(2-F-$C_6H_5$), $CH_2$-(2-F-$C_6H_4$), $CH_2$-(3-F-$C_6H_4$), $CH_2$-(4-F-$C_6H_4$) and $CH_2$-(2,4-$F_2$-$C_6H_3$).

In a preferred embodiment of the compounds of the formula I, in particular those where $R^1$ is benzyl which is unsubstituted or partially substituted at any position or fully substituted, in particular with halogen atoms, especially fluorine, or with $C_1$-$C_4$-alkyl, especially methyl, the index m is preferably 2.

In an advantageous embodiment, the group $R^2$ is selected from the group consisting of halogen, cyano, nitro, $C_1$-$C_4$-alkyl, $C_1$-$C_4$-alkoxy, $S(O)_mR^{bb}$, $C_1$-$C_4$-haloalkyl and $C_1$-$C_4$-haloalkoxy. Preferably, $R^2$ is selected from the group consisting of halogen, cyano, nitro, $C_1$-$C_4$-alkyl, $C_1$-$C_4$-alkoxy, $C_1$-$C_4$-haloalkyl and $C_1$-$C_4$-haloalkoxy. In a more preferred embodiment, $R^2$ is selected from the group consisting of halogen, CN, $NO_2$, $CH_3$, $CHF_2$, $CF_3$, $OCHF_2$ and $OCF_3$. Even more preferably, $R^2$ is halogen, in particular fluorine, chlorine, bromine or iodine, still more preferably fluorine, chlorine or bromine and yet more preferably fluorine or chlorine. In one aspect, $R^2$ is fluorine. In another aspect, $R^2$ is chlorine. In yet another aspect, $R^2$ is bromine. In another preferred aspect of this invention, the group(s) $(R^2)_m$ is/are selected from the group consisting of 2,5-$F_2$; 2-F,5-Cl; 2-F,5-Br; 2-F,5-CN; 2-F,5-$NO_2$; 2-F,5-$CF_3$; 2-F,5-$OCH_3$; 2-Cl,5-F; 2-Cl; 5-F; 2,6-$F_2$; 4-Cl; 4-Br; 3-F; 3-Cl; 3-Br; 3-$CF_3$; 3-$OCHF_2$; 3,5-$Cl_2$; 3-F,5-Cl; 3-F,5-Br; 3-F,5-CN; 3-F,5-$NO_2$; 3-Cl,5-CN; 3-F,5-$OCHF_2$; 3-Cl,5-$OCHF_2$ and 3,5-$F_2$.

In preferred compounds of the formula I, at least one group selected from the radicals R and $R^2$ is fluorine.

Among the cynaobutyrates of formula I, particular preference is given to those, in which the the variables R, $R^1$, $R^2$, n and m, either independently of one another or in combination with one another, have the following meanings:

R is halogen or cyano;

$R^1$ is hydrogen, $C_1$-$C_4$-alkyl, cyano-$C_1$-$C_4$-alkyl, $C_1$-$C_4$-haloalkyl, $C_1$-$C_4$-alkoxy-$C_1$-$C_4$-alkyl, $C_3$-$C_6$-alkynyl, phenyl being unsubstituted or substituted by 1 or 2 halogen atoms at any position or benzyl being unsubstituted or substituted at any position by 1 or 2 groups independently selected from halogen or $C_1$-$C_4$-alkyl;

$R^2$ is halogen, cyano, nitro, $C_1$-$C_4$-alkyl, $C_1$-$C_4$-alkoxy, $C_1$-$C_4$-haloalkyl or $C_1$-$C_4$-haloalkoxy;

n is 0, 1, 2 or 3; and

m is 0, 1, 2, 3 or 4.

Among the cynaobutyrates of formula I, very particular preference is given to those, in which the the variables R, $R^1$, $R^2$, n and m, either independently of one another or in combination with one another, have the following meanings :

R is fluorine, chlorine or cyano;
$R^1$ is hydrogen, $C_1$-$C_4$-alkyl, cyano-$C_1$-$C_4$-alkyl, $C_1$-$C_4$-haloalkyl, $C_1$-$C_4$-alkoxy-$C_1$-$C_4$-alkyl or $C_3$-$C_6$-alkynyl;
$R^2$ is halogen, cyano, nitro, $C_1$-$C_4$-alkoxy, $C_1$-$C_4$-haloalkyl or $C_1$-$C_4$-haloalkoxy;
n is 0 or 1 and
m is 1 or 2.

Examples of particularly preferred cyanobutyrates of the formula I are compiled in the tables below. The groups mentioned for a substituent in the tables are furthermore per se, independently of the combination in which they are mentioned, a particularly preferred aspect of the substituent in question.

Table 1
Compounds of the formula I in which $R_n$ is H and the combination of $R^1$ and $(R^2)_m$ for a compound corresponds in each case to one row of table A

Table 2
Compounds of the formula I in which $R_n$ is 3-CN and the combination of $R^1$ and $(R^2)_m$ for a compound corresponds in each case to one row of table A

Table 3
Compounds of the formula I in which $R_n$ is 4-Cl and the combination of $R^1$ and $(R^2)_m$ for a compound corresponds in each case to one row of table A

Table 4
Compounds of the formula I in which $R_n$ is 3-F and the combination of $R^1$ and $(R^2)_m$ for a compound corresponds in each case to one row of table A

Table 5
Compounds of the formula I in which $R_n$ is 4-F and the combination of $R^1$ and $(R^2)_m$ for a compound corresponds in each case to one row of table A

Table 6
Compounds of the formula I in which $R_n$ is 3,4-$F_2$ and the combination of $R^1$ and $(R^2)_m$ for a compound corresponds in each case to one row of table A

Table 7
Compounds of the formula I in which $R_n$ is 3,5-$F_2$ and the combination of $R^1$ and $(R^2)_m$ for a compound corresponds in each case to one row of table A

Table 8
Compounds of the formula I in which $R_n$ is 3-F,4-Cl and the combination of $R^1$ and $(R^2)_m$ for a compound corresponds in each case to one row of table A

Table 9
Compounds of the formula I in which $R_n$ is 3-Cl,4-F and the combination of $R^1$ and $(R^2)_m$ for a compound corresponds in each case to one row of table A

Table 10
Compounds of the formula I in which $R_n$ is 3,4,5-$F_3$ and the combination of $R^1$ and $(R^2)_m$ for a compound corresponds in each case to one row of table A

Table A - Compounds of the formula I

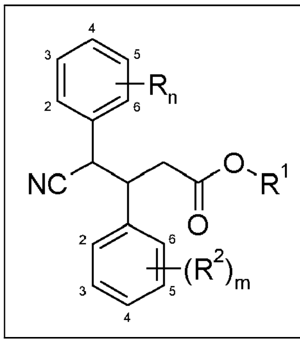

I

(continued)

| No. | $R^1$ | $(R^2)_m$ | No. | $R^1$ | $(R^2)_m$ |
|---|---|---|---|---|---|
| I.1 | H | 2,5-$F_2$ | I.33 | $C_2H_5$ | 2,5-$F_2$ |
| I.2 | H | 2-F,5-Cl | I.34 | $C_2H_5$ | 2-F,5-Cl |
| I.3 | H | 2-F,5-Br | I.35 | $C_2H_5$ | 2-F,5-Br |
| I.4 | H | 2-F,5-CN | I.36 | $C_2H_5$ | 2-F,5-CN |
| I.5 | H | 2-F,5-$NO_2$ | I.37 | $C_2H_5$ | 2-F,5-$NO_2$ |
| I.6 | H | 2-F,5-$CF_3$ | I.38 | $C_2H_5$ | 2-F,5-$CF_3$ |
| I.7 | H | 2-F,5-$OCH_3$ | I.39 | $C_2H_5$ | 2-F,5-$OCH_3$ |
| I.8 | H | 2-Cl,5-F | I.40 | $C_2H_5$ | 2-Cl,5-F |
| I.9 | H | 3,5-$Cl_2$ | 1.41 | $C_2H_5$ | 3,5-$Cl_2$ |
| I.10 | H | 3-F,5-Cl | I.42 | $C_2H_5$ | 3-F,5-Cl |
| I.11 | H | 3-F,5-Br | I.43 | $C_2H_5$ | 3-F,5-Br |
| I.12 | H | 3-F,5-CN | I.44 | $C_2H_5$ | 3-F,5-CN |
| I.13 | H | 3-F,5-$NO_2$ | I.45 | $C_2H_5$ | 3-F,5-$NO_2$ |
| I.14 | H | 3-Cl,5-CN | I.46 | $C_2H_5$ | 3-Cl,5-CN |
| I.15 | H | 3-F,5-$OCHF_2$ | I.47 | $C_2H_5$ | 3-F,5-$OCHF_2$ |
| I.16 | H | 3,5-$F_2$ | I.48 | $C_2H_5$ | 3,5-$F_2$ |
| I.17 | $CH_3$ | 2,5-$F_2$ | I.49 | $C_6H_5$ | 2,5-$F_2$ |
| I.18 | $CH_3$ | 2-F,5-Cl | I.50 | $C_6H_5$ | 2-F,5-Cl |
| I.19 | $CH_3$ | 2-F,5-Br | I.51 | $C_6H_5$ | 2-F,5-Br |
| I.20 | $CH_3$ | 2-F,5-CN | I.52 | $C_6H_5$ | 2-F,5-CN |
| I.21 | $CH_3$ | 2-F,5-$NO_2$ | I.53 | $C_6H_5$ | 2-F,5-$NO_2$ |
| I.22 | $CH_3$ | 2-F,5-$CF_3$ | I.54 | $C_6H_5$ | 2-F,5-$CF_3$ |
| I.23 | $CH_3$ | 2-F,5-$OCH_3$ | I.55 | $C_6H_5$ | 2-F,5-$OCH_3$ |
| I.24 | $CH_3$ | 2-Cl,5-F | I.56 | $C_6H_5$ | 2-Cl,5-F |
| I.25 | $CH_3$ | 3,5-$Cl_2$ | I.57 | $C_6H_5$ | 3,5-$Cl_2$ |
| I.26 | $CH_3$ | 3-F,5-Cl | I.58 | $C_6H_5$ | 3-F,5-Cl |
| I.27 | $CH_3$ | 3-F,5-Br | I.59 | $C_6H_5$ | 3-F,5-Br |
| I.28 | $CH_3$ | 3-F,5-CN | I.60 | $C_6H_5$ | 3-F,5-CN |
| I.29 | $CH_3$ | 3-F,5-$NO_2$ | 1.61 | $C_6H_5$ | 3-F,5-$NO_2$ |
| I.30 | $CH_3$ | 3-F,5-$OCHF_2$ | I.62 | $C_6H_5$ | 3-Cl,5-CN |
| I.31 | $CH_3$ | 3-Cl,5-CN | I.63 | $C_6H_5$ | 3-F,5-$OCHF_2$ |
| I.32 | $CH_3$ | 3,5-$F_2$ | I.64 | $C_6H_5$ | 3,5-$F_2$ |
| I.65 | 2-F-$C_6H_4$ | 2,5-$F_2$ | I.104 | $CH_2$(2-F-$C_6H_5$) | 2-Cl,5-F |
| 1.66 | 2-F-$C_6H_4$ | 2-F,5-Cl | I.105 | $CH_2$(2-F-$C_6H_5$) | 3,5-$Cl_2$ |
| I.67 | 2-F-$C_6H_4$ | 2-F,5-Br | I.106 | $CH_2$(2-F-$C_6H_5$) | 3-F,5-Cl |
| I.68 | 2-F-$C_6H_4$ | 2-F,5-CN | I.107 | $CH_2$(2-F-$C_6H_5$) | 3-F,5-Br |
| I.69 | 2-F-$C_6H_4$ | 2-F,5-$NO_2$ | I.108 | $CH_2$(2-F-$C_6H_5$) | 3-F,5-CN |
| I.70 | 2-F-$C_6H_4$ | 2-F,5-$CF_3$ | I.109 | $CH_2$(2-F-$C_6H_5$) | 3-F,5-$NO_2$ |

(continued)

| No. | $R^1$ | $(R^2)_m$ |
|---|---|---|
| I.71 | 2-F-$C_6H_4$ | 2-F,5-$OCH_3$ |
| I.72 | 2-F-$C_6H_4$ | 2-Cl,5-F |
| I.73 | 2-F-$C_6H_4$ | 3,5-$Cl_2$ |
| I.74 | 2-F-$C_6H_4$ | 3-F,5-Cl |
| I.75 | 2-F-$C_6H_4$ | 3-F,5-Br |
| I.76 | 2-F-$C_6H_4$ | 3-F,5-CN |
| I.77 | 2-F-$C_6H_4$ | 3-F,5-$NO_2$ |
| I.78 | 2-F-$C_6H_4$ | 3-Cl,5-CN |
| I.79 | 2-F-$C_6H_4$ | 3-F,5-$OCHF_2$ |
| I.80 | 2-F-$C_6H_4$ | 3,5-$F_2$ |
| I.81 | $CH_2C_6H_5$ | 2,5-$F_2$ |
| I.82 | $CH_2C_6H_5$ | 2-F,5-Cl |
| I.83 | $CH_2C_6H_5$ | 2-F,5-Br |
| I.84 | $CH_2C_6H_5$ | 2-F,5-CN |
| I.85 | $CH_2C_6H_5$ | 2-F,5-$NO_2$ |
| I.86 | $CH_2C_6H_5$ | 2-F,5-$CF_3$ |
| I.87 | $CH_2C_6H_5$ | 2-F,5-$OCH_3$ |
| I.88 | $CH_2C_6H_5$ | 2-Cl,5-F |
| I.89 | $CH_2C_6H_5$ | 3,5-$Cl_2$ |
| I.90 | $CH_2C_6H_5$ | 3-F,5-Cl |
| I.91 | $CH_2C_6H_5$ | 3-F,5-Br |
| I.92 | $CH_2C_6H_5$ | 3-F,5-CN |
| I.93 | $CH_2C_6H_5$ | 3-F,5-$NO_2$ |
| I.94 | $CH_2C_6H_5$ | 3-Cl,5-CN |
| I.95 | $CH_2C_6H_5$ | 3-F,5-$OCHF_2$ |
| I.96 | $CH_2C_6H_5$ | 3,5-$F_2$ |
| I.97 | $CH_2$(2-F-$C_6H_5$) | 2,5-$F_2$ |
| I.98 | $CH_2$(2-F-$C_6H_5$) | 2-F,5-Cl |
| I.99 | $CH_2$(2-F-$C_6H_5$) | 2-F,5-Br |
| I.100 | $CH_2$(2-F-$C_6H_5$) | 2-F,5-CN |
| I.101 | $CH_2$(2-F-$C_6H_5$) | 2-F,5-$NO_2$ |
| I.102 | $CH_2$(2-F-$C_6H_5$) | 2-F,5-$CF_3$ |
| I.103 | $CH_2$(2-F-$C_6H_5$) (2-F-$C_6H_5$) | 2-F,5-$OCH_3$ |
| | | |
| | | |
| I.137 | $CH(CH_3)$-(2-F-$C_6H_5$) | 3,5-$Cl_2$ |

| No. | $R^1$ | $(R^2)_m$ |
|---|---|---|
| I.110 | $CH_2$(2-F-$C_6H_5$) | 3-Cl,5-CN |
| I.111 | $CH_2$(2-F-$C_6H_5$) | 3-F,5-$OCHF_2$ |
| I.112 | $CH_2$(2-F-$C_6H_5$) | 3,5-$F_2$ |
| I.113 | $CH(CH_3)C_6H_5$ | 2,5-$F_2$ |
| I.114 | $CH(CH_3)C_6H_5$ | 2-F,5-Cl |
| I.115 | $CH(CH_3)C_6H_5$ | 2-F,5-Br |
| I.116 | $CH(CH_3)C_6H_5$ | 2-F,5-CN |
| I.117 | $CH(CH_3)C_6H_5$ | 2-F,5-$NO_2$ |
| I.118 | $CH(CH_3)C_6H_5$ | 2-F,5-$CF_3$ |
| I.119 | $CH(CH_3)C_6H_5$ | 2-F,5-$OCH_3$ |
| I.120 | $CH(CH_3)C_6H_5$ | 2-Cl,5-F |
| I.121 | $CH(CH_3)C_6H_5$ | 3,5-$Cl_2$ |
| I.122 | $CH(CH_3)C_6H_5$ | 3-F,5-Cl |
| I.123 | $CH(CH_3)C_6H_5$ | 3-F,5-Br |
| I.124 | $CH(CH_3)C_6H_5$ | 3-F,5-CN |
| I.125 | $CH(CH_3)C_6H_5$ | 3-F,5-$NO_2$ |
| I.126 | $CH(CH_3)C_6H_5$ | 3-Cl,5-CN |
| I.127 | $CH(CH_3)C_6H_5$ | 3-F,5-$OCHF_2$ |
| I.128 | $CH(CH_3)C_6H_5$ | 3,5-$F_2$ |
| I.129 | $CH(CH_3)$- (2-F-$C_6H_5$) | 2,5-$F_2$ |
| I.130 | $CH(CH_3)$- (2-F-$C_6H_5$) | 2-F,5-Cl |
| I.131 | $CH(CH_3)$- (2-F-$C_6H_5$) | 2-F,5-Br |
| I.132 | $CH(CH_3)$- (2-F-$C_6H_5$) | 2-F,5-CN |
| I.133 | $CH(CH_3)$- (2-F-$C_6H_5$) | 2-F,5-$NO_2$ |
| I.134 | $CH(CH_3)$- (2-F-$C_6H_5$) | 2-F,5-$CF_3$ |
| I.135 | $CH(CH_3)$- (2-F-$C_6H_5$) | 2-F,5-$OCH_3$ |
| I.136 | $CH(CH_3)$- | 2-Cl,5-F |
| I.145 | $CH_2C{\equiv}CH$ | 2,5-$F_2$ |
| I.146 | $CH_2C{\equiv}CH$ | 2-F,5-Cl |
| I.147 | $CH_2C{\equiv}CH$ | 2-F,5-Br |

(continued)

| No. | $R^1$ | $(R^2)_m$ |
|---|---|---|
| I.138 | $CH(CH_3)$-(2-F-$C_6H_5$) | 3-F,5-Cl |
| I.139 | $CH(CH_3)$-(2-F-$C_6H_5$) | 3-F,5-Br |
| I.140 | $CH(CH_3)$-(2-F-$C_6H_5$) | 3-F,5-CN |
| I.141 | $CH(CH_3)$-(2-F-$C_6H_5$) | 3-F,5-$NO_2$ |
| I.142 | $CH(CH_3)$-(2-F-$C_6H_5$) | 3-Cl, 5-C N |
| I.143 | $CH(CH_3)$-(2-F-$C_6H_5$) | 3-F,5-$OCHF_2$ |
| I.144 | $CH(CH_3)$-(2-F-$C_6H_5$) | 3,5-$F_2$ |
| I.148 | $CH_2C{\equiv}CH$ | 2-F,5-CN |
| I.149 | $CH_2C{\equiv}CH$ | 2-F,5-$NO_2$ |
| I.150 | $CH_2C{\equiv}CH$ | 2-F,5-$CF_3$ |
| I.151 | $CH_2C{\equiv}CH$ | 2-F,5-$OCH_3$ |
| I.152 | $CH_2C{\equiv}CH$ | 2-Cl,5-F |
| I.153 | $CH_2C{\equiv}CH$ | 3,5-$Cl_2$ |
| I.154 | $CH_2C{\equiv}CH$ | 3-F,5-Cl |
| I.155 | $CH_2C{\equiv}CH$ | 3-F,5-Br |
| I.156 | $CH_2C{\equiv}CH$ | 3-F,5-CN |
| I.157 | $CH_2C{\equiv}CH$ | 3-F,5-$NO_2$ |
| I.158 | $CH_2C{\equiv}CH$ | 3-Cl,5-CN |
| I.159 | $CH_2C{\equiv}CH$ | 3-F,5-$OCHF_2$ |
| I.160 | $CH_2C{\equiv}CH$ | 3,5-$F_2$ |

According to a first preferred embodiment of the invention, the composition comprises as active compound A or component A at least one, preferably exactly one, compound of formula I.a (corresponds to a compound of formula I wherein $R^1$ is $CH_3$ and $(R^2)_m$ is 3-F,5-Cl)

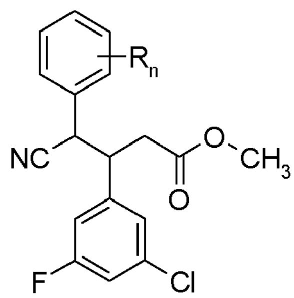

I.a

wherein $R_n$ has the meaning, in particular the preferred meanings as defined above.

According to a second embodiment of the invention, the composition comprises as component A at least one, preferably exactly one, compound of the formula I.b (corresponds to a compound of formula I wherein $R^1$ is $CH_3$ and $(R^2)_m$ is 3-F,5-Br)

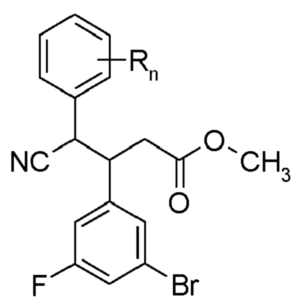

I.b

wherein $R_n$ has the meaning, in particular the preferred meanings as defined above.

According to a third embodiment of the invention, the composition comprises as component A at least one, preferably exactly one, compound of the formula I.c (corresponds to a compound of formula I wherein $R^1$ is $CH_3$ and $(R^2)_m$ is 3-F,5-$OCHF_2$)

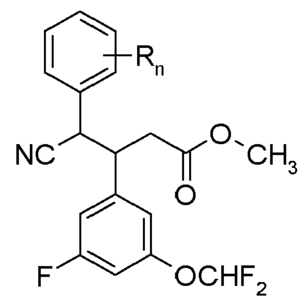

I.c

wherein $R_n$ has the meaning, in particular the preferred meanings as defined above.

According to a forth embodiment of the invention, the composition comprises as component A at least one, preferably exactly one, compound of the formula I.d (corresponds to a compound of formula I wherein $R^1$ is propargyl ($CH_2C{\equiv}CH$) and $(R^2)_m$ is 3,5-$Cl_2$)

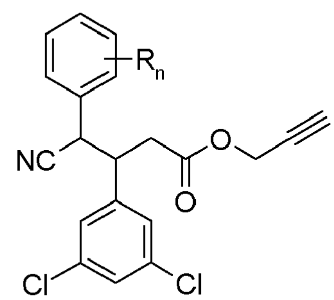

I.d

wherein $R_n$ has the meaning, in particular the preferred meanings as defined above.

Preferred compounds of the formula I which, as component A, are constituent of the composition according to the invention are the compounds I.a to I.d as defined above; in particular the compounds I.26.1, I.26.2, I.27.1, I.27.2, I. 30.1, I.30.2, I.153.1 and I.153.2 listed below.

I.26.1 3-(3-Chloro-5-fluoro-phenyl)-4-cyano-4-phenyl-butyric acid methyl ester

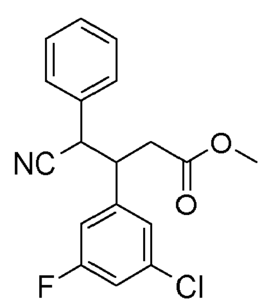

I.26.2 3-(3-Chloro-5-fluoro-phenyl)-4-cyano-4-(4-fluoro-phenyl)-butyric acid methyl ester

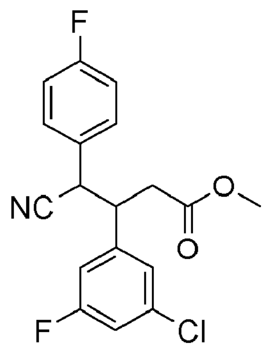

I.27.1 3-(3-Bromo-5-fluoro-phenyl)-4-cyano-4-phenyl-butyric acid methyl ester

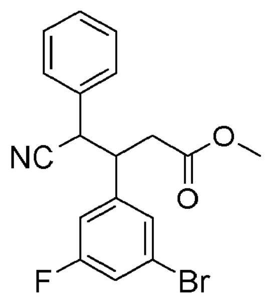

I.27.2 3-(3-Bromo-5-fluoro-phenyl)-4-cyano-4-(4-fluoro-phenyl)-butyric acid methyl ester

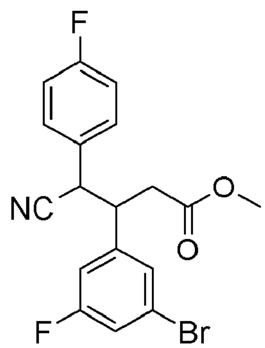

I.30.1 4-Cyano-3-(3-difluoromethoxy-5-fluoro-phenyl)-4-phenyl-butyric acid methyl ester

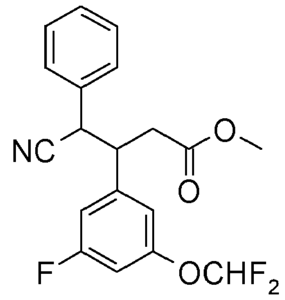

I.30.2 4-Cyano-3-(3-difluoromethoxy-5-fluoro-phenyl)-4-(4-fluoro-phenyl)-butyric acid methyl ester

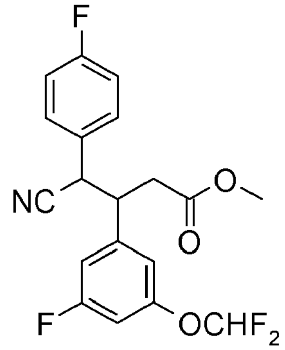

I.153.1 4-Cyano-3-(3,5-dichloro-phenyl)-4-phenyl-butyric acid prop-2-ynyl ester,

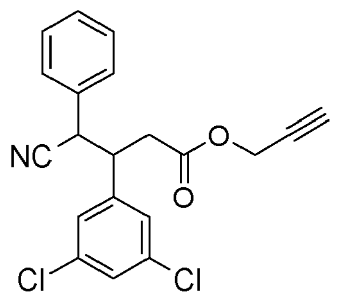

I.153.2 4-Cyano-3-(3,5-dichloro-phenyl)-4-(4-fluoro-phenyl)-butyric acid prop-2-ynyl ester

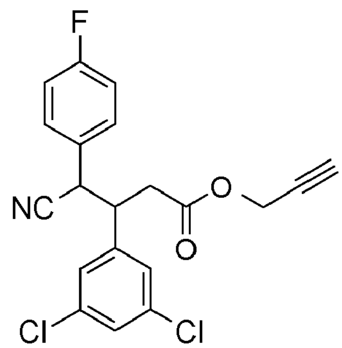

According to a particular preferred embodiment of the invention the composition contains as component A the compound of formula I.26.1.
According to a further particular preferred embodiment of the invention the composition contains as component A the compound of formula I.26.2.
According to a further particular preferred embodiment of the invention the composition contains as component A the compound of formula I.27.1.
According to a further particular preferred embodiment of the invention the composition contains as component A the compound of formula I.27.2.
According to a further particular preferred embodiment of the invention the composition contains as component A the compound of formula I.30.1.
According to a further particular preferred embodiment of the invention the composition contains as component A the compound of formula I.30.2.
According to a further particular preferred embodiment of the invention the composition contains as component A the compound of formula I.153.1.
According to a further particular preferred embodiment of the invention the composition contains as component A the compound of formula I.153.2.

The cyanobutyrates of formula I can be prepared by standard processes of organic chemistry, for example by the following synthesis route:

Phenylacetonitrile derivatives of the formula II can be reacted with cinnamate derivatives of the formula III according to a Michael addition to give compounds of the formula I. In the formulae II and III, the variables have the meaning given for formula I.

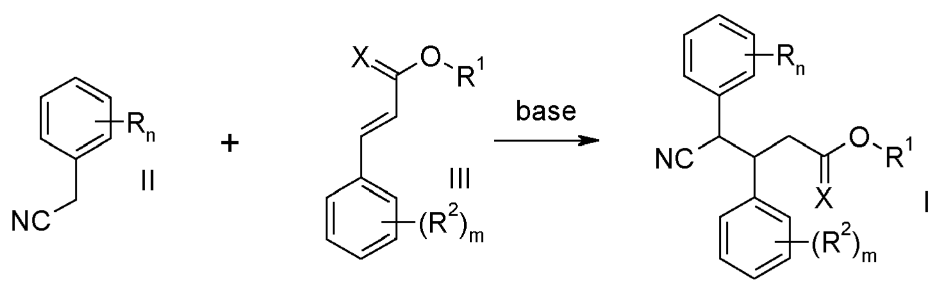

II + III → I

This reaction is usually carried out at temperatures of from -100˚C to 150˚C, preferably from -78˚C to 50˚C, in an inert organic solvent in the presence of a base and/or a catalyst [cf. J. Chem. Soc. (1945), p. 438].

Suitable solvents are aliphatic hydrocarbons, such as pentane, hexane, cyclohexane and petroleum ether, aromatic hydrocarbons, such as toluene, o-, m- and p-xylene, halogenated hydrocarbons, such as methylene chloride, chloroform and chlorobenzene, ethers, such as diethyl ether, diisopropyl ether, tert-butyl methyl ether, dioxane, anisole and tetrahydrofuran (TH F), nitriles, such as acetonitrile and propionitrile, ketones, such as acetone, methyl ethyl ketone, diethyl ketone and tert-butyl methyl ketone (MTBE), alcohols such as methanol, ethanol, n-propanol, isopropanol, n-butanol and tert-butanol, and also dimethyl sulfoxide (DMSO), dimethylformamide (DMF) and dimethylacetamide (DMA) and water, particularly preferably THF and methanol. It is also possible to use mixtures of the solvents mentioned.
Suitable bases are, in general, inorganic compounds, such as alkali metal and alkaline earth metal hydroxides, alkali metal and alkaline earth metal oxides, alkali metal and alkaline earth metal hydrides, alkali metal amides, such as lithiumbis(trimethylsilyl)amide, lithium amide, sodium amide and potassium amide, alkali metal and alkaline earth metal

carbonates, and also alkali metal bicarbonates, organometallic compounds, in particular alkali metal alkyls, alkylmagnesium halides, and also alkali metal and alkaline earth metal alkoxides, such as sodium methoxide, sodium ethoxide, potassium ethoxide, potassium tert-butoxide and dimethoxymagnesium, moreover organic bases, for example tertiary amines, such as trimethylamine, triethylamine, tributylamine, diisopropylethylamine and N-methylpiperidine, pyridine, substituted pyridines, such as collidine, lutidine and 4-dimethylaminopyridine, and also bicyclic amines. Particular preference is given to potassium tert-butoxide, lithium bis(trimethylsilyl)amide and 7-methyl-1,5,7-triazabicyclo[4.4.0]dec-5-ene.

The bases are generally employed in catalytic amounts; however, they can also be used in equimolar amounts, in excess or, if appropriate, as solvents.

Suitable for use as acidic catalysts are inorganic acids, such as hydrofluoric acid, hydrochloric acid, hydrobromic acid, sulfuric acid and perchloric acid, Lewis acids, such as boron trifluoride, aluminum trichloride, iron(III) chloride, tin(IV) chloride, titanium(IV) chloride, scandium(III) triflate and zinc(II) chloride, and also organic acids, such as formic acid, acetic acid, propionic acid, oxalic acid, toluenesulfonic acid, benzenesulfonic acid, camphorsulfonic acid, citric acid and trifluoroacetic acid.

The acids are generally employed in catalytic amounts; however, they can also be used in equimolar amounts, in excess or, if appropriate, as solvent.

Alternatively, the compounds of the formula I can also be obtained by transesterification of other cyanobutyrates. This may take place by various methods, for example those described below:

The transesterification can be carried out in the presence of molecular sieves in an alcohol $R^1$-OH, if appropriate in an aprotic solvent. This reaction is usually carried out at temperatures of from 0°C to 180°C, preferably from 20°C to 80°C, in the presence of a Lewis or Bronsted acid or an enzyme [cf. J. Org. Chem. 2002, 67, 431].

Suitable solvents are aliphatic hydrocarbons, such as pentane, hexane, cyclohexane and petroleum ether, aromatic hydrocarbons, such as toluene, o-, m- and p-xylene, halogenated hydrocarbons, such as methylene chloride, chloroform and chlorobenzene, ethers, such as diethyl ether, diisopropyl ether, tert-butyl methyl ether, dioxane, anisole and THF, nitriles, such as acetonitrile and propionitrile, ketones, such as dimethyl sulfoxide, dimethylformamide and dimethylacetamide, particularly preferably the alcohol $R^1$-OH. It is also possible to use mixtures of the solvents mentioned.

Alternatively, the transesterification may be carried out by acidic or basic hydrolysis of other cyanobutyrates (a), followed by reaction with an alcohol $R^1$-OH. These reactions are usually carried out at temperatures of from 0°C to 120°C, preferably from 20°C to 50°C, in the presence of a base or an acid and/or a catalyst [cf. J. Am. Chem. Soc. 2007, 129 (43), 13321; J. Org. Chem. 1984, 49 (22), 4287.].

Suitable solvents are aliphatic hydrocarbons, such as pentane, hexane, cyclohexane and petroleum ether, aromatic hydrocarbons, such as toluene, o-, m- and p-xylene, halogenated hydrocarbons, such as methylene chloride, chloroform and chlorobenzene, ethers, such as diethyl ether, diisopropyl ether, tert-butyl methyl ether, dioxane, anisole and THF, nitriles, such as acetonitrile and propionitrile, ketones, such as acetone, methyl ethyl ketone, diethyl ketone and tert-butyl methyl ketone, alcohols, such as methanol, ethanol, n-propanol, isopropanol, n-butanol and tert-butanol, and also dimethyl sulfoxide, dimethylformamide and dimethylacetamide and water, particularly preferably (a) water, THF; (b) $R^1$-OH. It is also possible to use mixtures of the solvents mentioned.

Suitable bases are, in general, inorganic compounds, such as alkali metal and alkaline earth metal hydroxides, such as lithium hydroxide, sodium hydroxide, potassium hydroxide and calcium hydroxide, alkali metal and alkaline earth metal oxides, such as lithium oxide, sodium oxide, calcium oxide and magnesium oxide, alkali metal and alkaline earth metal hydrides, such as lithium hydride, sodium hydride, potassium hydride and calcium hydride, alkali metal amides, such as lithium amide, sodium amide and potassium amide, alkali metal and alkaline earth metal carbonates, such as lithium carbonate, potassium carbonate and calcium carbonate, and also alkali metal bicarbonates, such as sodium bicarbonate, organometallic compounds, in particular alkali metal alkyls, such as methyllithium, butyllithium and phenyllithium, alkylmagnesium halides, such as methylmagnesium chloride, and also alkali metal and alkaline earth metal alkoxides, such as sodium methoxide, sodium ethoxide, potassium ethoxide, potassium tert-butoxide and dimethoxymagnesium, moreover organic bases, for example tertiary amines, such as trimethylamine, triethylamine, tributylamine, diisopropylethylamine and N-methylpiperidine, pyridine, substituted pyridines, such as collidine, lutidine and 4-dimethylaminopyridine, and also bicyclic amines. Particular preference is given to lithium hydroxide.

The bases are generally employed in catalytic amounts; however, they can also be used in equimolar amounts, in excess or, if appropriate, as solvents.

Suitable for use as acids and acidic catalysts are inorganic acids, such as hydrofluoric acid, hydrochloric acid, hydrobromic acid, sulfuric acid and perchloric acid,

Lewis acids, such as boron trifluoride, aluminum trichloride, iron(III) chloride, tin(IV) chloride, titanium(IV) chloride and zinc(II) chloride, and also organic acids, such as formic acid, acetic acid, propionic acid, oxalic acid, toluenesulfonic acid, benzenesulfonic acid, camphorsulfonic acid, citric acid and trifluoroacetic acid.

The acids are generally employed in catalytic amounts; however, they can also be used in equimolar amounts, in excess or, if appropriate, as solvent.

The starting materials required for preparing the compounds I are known from the literature or can be prepared in accordance with the literature cited.

The reaction mixtures are worked up in a customary manner, for example by mixing with water, separating the phases and, if appropriate, chromatographic purification of the crude products. Some of the intermediates and end products are obtained in the form of colorless or slightly brownish viscous oils which are purified or freed from volatile components under reduced pressure and at moderately elevated temperature. If the intermediates and end products are obtained as solids, the purification can also be carried out by recrystallization or digestion.

If individual compounds I cannot be obtained by the routes described above, they can be prepared by derivatization of other compounds I.

If the synthesis yields mixtures of isomers, a separation is generally however not necessarily required since in some cases the individual isomers can be interconverted during work-up for use or during application (for example under the action of light, acids or bases). Such conversions may also take place after application, for example in the case of the treatment of plants in the treated plant or in the harmful plant to be controlled.

In one embodiment of the present invention the compositions according to the present invention comprise at least one cyanobutyrate of formula I and at least one further active compound B (herbicide B).

According to a first embodiment of the invention the compositions contain at least one inhibitor of the lipid biosynthesis (herbicide b1). These are compounds that inhibit lipid biosynthesis. Inhibition of the lipid biosynthesis can be affected either through inhibition of acetylCoA carboxylase (hereinafter termed ACC herbicides) or through a different mode of action (hereinafter termed non-ACC herbicides). The ACC herbicides belong to the group A of the HRAC classification system whereas the non-ACC herbicides belong to the group N of the HRAC classification.

According to a second embodiment of the invention the compositions contain at least one ALS inhibitor (herbicide b2). The herbicidal activity of these compounds is based on the inhibition of acetolactate synthase and thus on the inhibition of the branched chain amino acid biosynthesis. These inhibitors belong to the group B of the HRAC classification system.

According to a third embodiment of the invention the compositions contain at least one inhibitor of photosynthesis (herbicide b3). The herbicidal activity of these compounds is based either on the inhibition of the photosystem II in plants (so-called PSII inhibitors, groups C1, C2 and C3 of HRAC classification) or on diverting the electron transfer in photosystem I in plants (so-called PSI inhibitors, group D of HRAC classification) and thus on an inhibition of photosynthesis. Amongst these, PSII inhibitors are preferred.

According to a fourth embodiment of the invention the compositions contain at least one inhibitor of protoporphyrinogen-IX-oxidase (herbicide b4). The herbicidal activity of these compounds is based on the inhibition of the protoporphyrinogen-IX-oxidase. These inhibitors belong to the group E of the HRAC classification system.

According to a fifth embodiment of the invention the compositions contain at least one bleacher-herbicide (herbicide b5). The herbicidal activity of these compounds is based on the inhibition of the carotenoid biosynthesis. These include compounds which inhibit carotenoid biosynthesis by inhibition of phytoene desaturase (so-called PDS inhibitors, group F1 of HRAC classification), compounds that inhibit the 4-hydroxyphenylpyruvate-dioxygenase (HPPD inhibitors, group F2 of HRAC classification), compounds that inhibit DOXsynthase (group F4 of HRAC class) and compounds which inhibit carotenoid biosynthesis by an unknown mode of action (bleacher - unknown target, group F3 of H RAC classification).

According to a sixth embodiment of the invention the compositions contain at least one EPSP synthase inhibitor (herbicide b6). The herbicidal activity of these compounds is based on the inhibition of enolpyruvyl shikimate 3-phosphate synthase, and thus on the inhibition of the amino acid biosynthesis in plants. These inhibitors belong to the group G of the HRAC classification system.

According to a seventh embodiment of the invention the compositions contain at least one glutamine synthetase inhibitor (herbicide b7). The herbicidal activity of these compounds is based on the inhibition of glutamine synthetase, and thus on the inhibition of the aminoacid biosynthesis in plants. These inhibitors belong to the group H of the HRAC classification system.

According to an eighth embodiment of the invention the compositions contain at least one DHP synthase inhibitor (herbicide b8). The herbicidal activity of these compounds is based on the inhibition of 7,8-dihydropteroate synthase. These inhibitors belong to the group I of the HRAC classification system.

According to a ninth embodiment of the invention the compositions contain at least one mitosis inhibitor (herbicide b9). The herbicidal activity of these compounds is based on the disturbance or inhibition of microtubule formation or organization, and thus on the inhibition of mitosis. These inhibitors belong to the groups K1 and K2 of the HRAC classification system. Among these, compounds of the group K1, in particular dinitroanilines, are preferred.

According to a tenth embodiment of the invention the compositions contain at least one VLCFA inhibitor (herbicide b10). The herbicidal activity of these compounds is based on the inhibition of the synthesis of very long chain fatty acids and thus on the disturbance or inhibition of cell division in plants. These inhibitors belong to the group K3 of the HRAC classification system.

According to an eleventh embodiment of the invention the compositions contain at least one cellulose biosynthesis inhibitor (herbicide b11). The herbicidal activity of these compounds is based on the inhibition of the biosynthesis of cellulose and thus on the inhibition of the synthesis of cell walls in plants. These inhibitors belong to the group L of the HRAC classification system.

According to a twelfth embodiment of the invention the compositions contain at least one decoupler herbicide (herbicide b12). The herbicidal activity of these compounds is based on the disruption of the cell membrane. These inhibitors belong to the group M of the HRAC classification system.

According to a thirteenth embodiment of the invention the compositions contain at least one auxinic herbicide (herbicide b13). These include compounds that mimic auxins, i.e. plant hormones, and affect the growth of the plants. These compounds belong to the group O of the HRAC classification system.

According to a fourteenth embodiment of the invention the compositions contain at least one auxin transport inhibitor (herbicide b14). The herbicidal activity of these compounds is based on the inhibition of the auxin transport in plants. These compounds belong to the group P of the HRAC classification system.

As to the given mechanisms of action and classification of the active substances, see e.g. "HRAC, Classification of Herbicides According to Mode of Action", http://www.plantprotection.org/hrac/MOA.html).

Preference is given to those compositions according to the present invention comprising at least one herbicide B selected from herbicides of class b2, b3, b4, b5, b6, b9 and b10.

Specific preference is given to those compositions according to the present invention which comprise at least one herbicide B selected from the herbicides of class b4, b6, b9 and b10.

Particular preference is given to those compositions according to the present invention which comprise at least one herbicide B selected from the herbicides of class b4, b6 and b10.

Examples of herbicides B which can be used in combination with the compounds of the formula I according to the present invention are:

b1) from the group of the lipid biosynthesis inhibitors:

ACC-herbicides such as alloxydim, alloxydim-sodium, butroxydim, clethodim, clodinafop, clodinafop-propargyl, cycloxydim, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, pinoxaden, profoxydim, propaquizafop, quizalofop, quizalofop-ethyl, quizalofop-tefuryl, quizalofop-P, quizalofop-P-ethyl, quizalofop-P-tefuryl, sethoxydim, tepraloxydim and tralkoxydim, and non ACC herbicides such as benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate and vernolate;

b2) from the group of the ALS inhibitors:

sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron,
imidazolinones such as imazamethabenz, imazamethabenz-methyl, imazamox, imazapic, imazapyr, imazaquin and imazethapyr, triazolopyrimidine herbicides and
sulfonanilides such as cloransulam, cloransulam-methyl, diclosulam, flumetsulam, florasulam, metosulam, penoxsulam, pyrimisulfan and pyroxsulam,
pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8),
sulfonylaminocarbonyl-triazolinone herbicides such as flucarbazone, flucarbazonesodium, propoxycarbazone,

propoxycarbazone-sodium, thiencarbazone and
thiencarbazone-methyl,
and triafamone.
Among these, a preferred embodiment of the invention relates to those compositions comprising at least one imidazolinone herbicide;

b3) from the group of the photosynthesis inhibitors:

amicarbazone, inhibitors of the photosystem II, e.g. triazine herbicides, including of chlorotriazine, triazinones, triazindiones, methylthiotriazines and pyridazinones such as ametryn, atrazine, chloridazone, cyanazine, desmetryn, dimethametryn,hexazinone, metribuzin, prometon, prometryn, propazine, simazine, simetryn, terbumeton, terbuthylazin, terbutryn and trietazin, aryl urea such as chlorobromuron, chlorotoluron, chloroxuron, dimefuron, diuron, fluometuron, isoproturon, isouron, linuron, metamitron, methabenzthiazuron, metobenzuron, metoxuron, monolinuron, neburon, siduron, tebuthiuron and thiadiazuron, phenyl carbamates such as desmedipham, karbutilat, phenmedipham, phenmedipham-ethyl, nitrile herbicides such as bromofenoxim, bromoxynil and its salts and esters, ioxynil and its salts and esters, uraciles such as bromacil, lenacil and terbacil, and bentazon and bentazon-sodium, pyridate, pyridafol, pentanochlor and propanil and inhibitors of the photosystem I such as diquat, diquatdibromide, paraquat, paraquat-dichloride and paraquat-dimetilsulfate. Among these, a preferred embodiment of the invention relates to those compositions comprising at least one aryl urea herbicide. Among these, likewise a preferred embodiment of the invention relates to those compositions comprising at least one triazine herbicide. Among these, likewise a preferred embodiment of the invention relates to those compositions comprising at least one nitrile herbicide;

b4) from the group of the protoporphyrinogen-IX oxidase inhibitors:

acifluorfen, acifluorfen-sodium, azafenidin, bencarbazone, benzfendizone, bifenox, butafenacil, carfentrazone, carfentrazone-ethyl, chlomethoxyfen, cinidon-ethyl, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100;), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05- 7), N-tetrahydrofurfuryl-3-(2-chloro-6-fluoro-4-trifluoromethylphenoxy)-5-methyl-1*H*-pyrazole-1-carboxamide (CAS 45100-03-7), 3-[7-fluoro-3-oxo-4-(prop-2-ynyl)-3,4-dihydro-2H-benzo[1,4]oxazin-6-yl]-1,5-dimethyl-6- thioxo-[1,3,5]triazinan-2,4-dione, 1,5-dimethyl-6-thioxo-3-(2,2,7-trifluoro-3-oxo-4-(prop-2-ynyl)-3,4-dihydro-
2H-benzo[b][1,4]oxazin-6-yl)-1,3,5-triazinane-2,4-dione, 2-(2,2,7-Trifluoro-3-oxo-4-prop-2-ynyl-3,4-dihydro-2H-benzo[1,4]oxazin-6-yl)-4,5,6,7-tetrahydro-isoindole-1,3-dione, and 1-Methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione;

b5) from the group of the bleacher herbicides:

PDS inhibitors: beflubutamid, diflufenican, fluridone, flurochloridone, flurtamone, norflurazon, picolinafen, and 4-(3-trifluoromethylphenoxy)-2-(4-trifluoromethylphenyl)-pyrimidine (CAS 180608-33-7), HPPD inhibitors: benzobicyclon, benzofenap, clomazone, isoxaflutole, mesotrione, pyrasulfotole, pyrazolynate, pyrazoxyfen, sulcotrione, tefuryltrione, tembotrione, topramezone and bicyclopyrone, bleacher,
unknown target: aclonifen, amitrole and flumeturon;

b6) from the group of the EPSP synthase inhibitors: glyphosate, glyphosate-isopropylammonium, glyposate-potassium and glyphosate-trimesium (sulfosate);

b7) from the group of the glutamine synthase inhibitors:

bilanaphos (bialaphos), bilanaphos-sodium, glufosinate, glufosinate-P and glufosinate-ammonium;

b8) from the group of the DHP synthase inhibitors: asulam;

b9) from the group of the mitosis inhibitors:

compounds of group K1: dinitroanilines such as benfluralin, butralin, dinitramine, ethalfluralin, fluchloralin, oryzalin, pendimethalin, prodiamine and trifluralin,
phosphoramidates such as amiprophos, amiprophos-methyl, and butamiphos, benzoic acid herbicides such as chlorthal, chlorthal-dimethyl, pyridines such as dithiopyr and
thiazopyr, benzamides such as propyzamide and tebutam; compounds of group K2: chlorpropham, propham and carbetamide, among these, compounds of group K1, in particular dinitroanilines are preferred;

b10) from the group of the VLCFA inhibitors:

chloroacetamides such as acetochlor, alachlor, butachlor, dimethachlor, dimethenamid, dimethenamid-P, metazachlor, metolachlor, metolachlor-S, pethoxamid, pretilachlor, propachlor, propisochlor and thenylchlor, oxyacetanilides such as flufenacet and
mefenacet, acetanilides such as diphenamid, naproanilide and napropamide,
tetrazolinones such fentrazamide, and other herbicides such as anilofos, cafenstrole, fenoxasulfone, ipfencarbazone, piperophos, pyroxasulfone and isoxazoline compounds of the formula II,

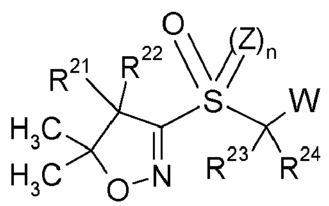

(II)

wherein $R^{21}$, $R^{22}$, $R^{23}$, $R^{24}$, W, Z and n have the following meanings:

$R^{21}$, $R^{22}$, $R^{23}$, $R^{24}$ independently of one another hydrogen, halogen or $C_1$-$C_4$-alkyl;

W phenyl or monocyclic 5-, 6-, 7-, 8-, 9- or 10-membered heterocyclyl containing, in addition to carbon ring members one, two or three same or different heteroatoms selected from oxygen, nitrogen and sulfur as ring members, wherein phenyl and heterocyclyl are unsubstituted or carry 1, 2 or 3 substituents $R^{yy}$ selected from halogen, $C_1$-$C_4$-alkyl, $C_1$-$C_4$-alkoxy, $C_1$-$C_4$-haloalkyl and $C_1$-$C_4$-haloalkoxy; preferably phenyl or 5- or 6-membered aromatic heterocyclyl (hetaryl) which contains, in addition to carbon ring members, one, two or three nitrogen atoms as ring members, wherein phenyl and hetaryl are unsubstituted or carry 1, 2 or 3 substituents $R^{yy}$;

Z oxygen or NH; and

n zero or one;

among the isoxazoline compounds of the formula II, preference is given to isoxazoline compounds of the formula II, wherein

$R^{21}$, $R^{22}$, $R^{23}$, $R^{24}$ independently of one another are H, F, Cl or methyl;

Z is oxygen;
n is 0 or 1; and
W is phenyl, pyrazolyl or 1,2,3-triazolyl, wherein the three last-mentioned radicals are unsubstituted or carry one, two or three substituents $R^{yy}$, especially one of the following radicals

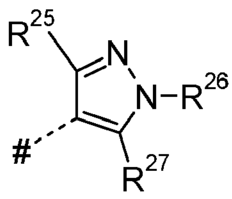
,
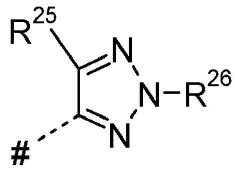
or
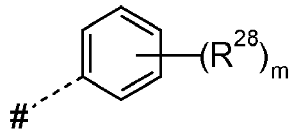

wherein

- $R^{25}$ is halogen, $C_1$-$C_4$-alkyl or $C_1$-$C_4$-haloalkyl;
- $R^{26}$ is $C_1$-$C_4$-alkyl;
- $R^{27}$ is halogen, $C_1$-$C_4$-alkoxy or $C_1$-$C_4$-haloalkoxy;
- $R^{28}$ is halogen, $C_1$-$C_4$-alkyl, $C_1$-$C_4$-haloalkyl or $C_1$-$C_4$-haloalkoxy;
- m is 0, 1, 2 or 3; and
- # denotes the point of attachment to the group $CR^{23}R^{24}$;

among the isoxazoline compounds of the formula II, particular preference is given to those isoxazoline compounds of the formula II, wherein

- $R^{21}$ is hydrogen;
- $R^{22}$ is fluorine;
- $R^{23}$ is hydrogen or fluorine;
- $R^{24}$ is hydrogen or fluorine;
- W is one of the radicals of the formulae $W^1$, $W^2$, $W^3$ or $W^4$

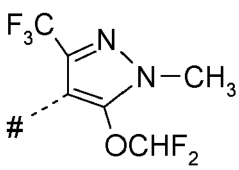
,
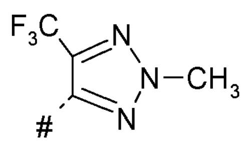
,
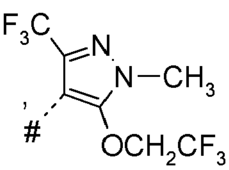
or
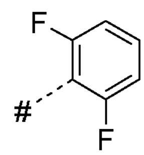

$W^1$ $W^2$ $W^3$ $W^4$

wherein # denotes the point of attachment to the group $CR^{23}R^{24}$;

- Z is oxygen;
- n is zero or 1, in particular 1; and

among these, especially preferred are the isoxazoline compounds of the formulae II.1, II.2, II.3, II.4, II.5, II.6, II.7, II.8 and II.9

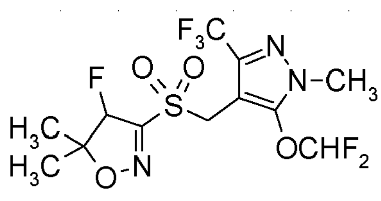

II.1

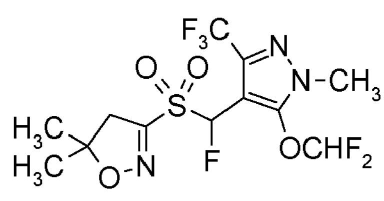

II.2

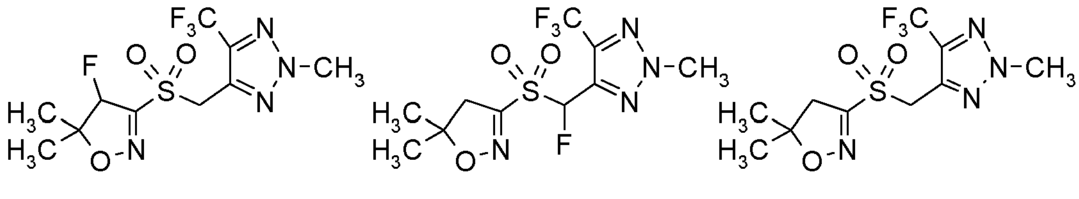

II.3 II.4 II.5

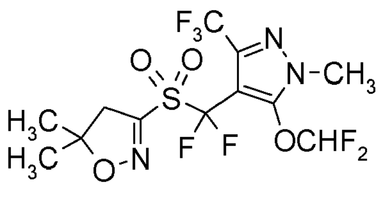

II.6

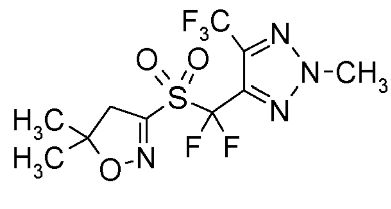

II.7

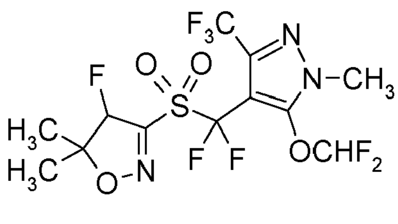

II.8

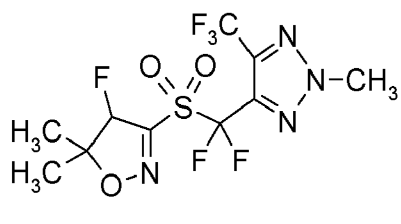

II.9

the isoxazoline compounds of the formula II are known in the art, e.g. from WO 2006/024820, WO 2006/037945, WO 2007/071900 and WO 2007/096576; among the VLCFA inhibitors, preference is given to chloroacetamides and oxyacetamides;

b11) from the group of the cellulose biosynthesis inhibitors:

chlorthiamid, dichlobenil, flupoxam, isoxaben, 1-Cyclohexyl-5-pentafluorphenyloxy-1[4]-[1,2,4,6]thiatriazin-3-ylamine and piperazine compounds of formula III,

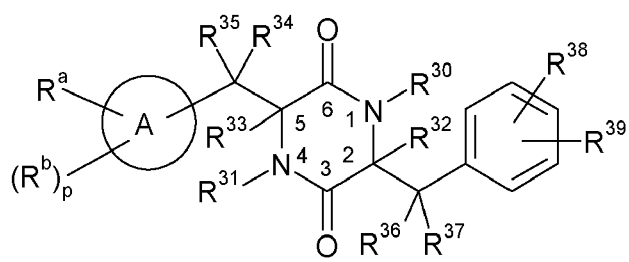

III,

in which

A is phenyl or pyridyl where $R^a$ is attached in the ortho-position to the point of attachment of A to a carbon atom;

$R^a$ is CN, $NO_2$, $C_1$-$C_4$-alkyl, D-$C_3$-$C_6$-cycloalkyl, $C_1$-$C_4$-haloalkyl, $C_1$-$C_4$-alkoxy, $C_1$-$C_4$-haloalkoxy, O-D-$C_3$-$C_6$-cycloalkyl, $S(O)_qR^y$, $C_2$-$C_6$-alkenyl, D-$C_3$-$C_6$-cycloalkenyl, $C_3$-$C_6$-alkenyloxy, $C_2$-$C_6$-alkynyl, $C_3$-$C_6$-alkynyloxy, $NR^AR^B$, tri-$C_1$-$C_4$-alkylsilyl, D-C(=O)-$R^{a1}$, D-P(=O)$(R^{a1})_2$, phenyl, naphthyl, a 3- to 7-membered monocyclic or 9- or 10-membered bicyclic saturated, unsaturated or aromatic heterocycle which is attached via carbon or nitrogen, which contains 1, 2, 3 or 4 heteroatoms selected from the group consisting of O, N and S, and which

may be partially or fully substituted by groups $R^{aa}$ and/or $R^{a1}$, and, if $R_a$ is attached to a carbon atom, additionally halogen;

$R^y$ is $C_1$-$C_6$-alkyl, $C_3$-$C_4$-alkenyl, $C_3$-$C_4$-alkynyl, $NR^AR^B$ or $C_1$-$C_4$-haloalkyl and q is 0, 1 or 2;

$R^A$,$R^B$ independently of one another are hydrogen, $C_1$-$C_6$-alkyl, $C_3$-$C_6$-alkenyl and $C_3$-$C_6$-alkynyl; together with the nitrogen atom to which they are attached, $R^A$,$R^B$ may also form a five- or six-membered saturated, partially or fully unsaturated ring which, in addition to carbon atoms, may contain 1, 2 or 3 heteroatoms selected from the group consisting of O, N and S, which ring may be substituted by 1 to 3 groups $R^{aa}$;

D is a covalent bond, $C_1$-$C_4$-alkylene, $C_2$-$C_6$-alkenyl or $C_2$-$C_6$-alkynyl;

$R^{a1}$ is hydrogen, OH, $C_1$-$C_8$-Alkyl, $C_1$-$C_4$-haloalkyl, $C_3$-$C_6$-cycloalkyl, $C_2$-$C_8$-alkenyl, $C_5$-$C_6$-cycloalkenyl, $C_2$-$C_8$-alkynyl, $C_1$-$C_6$-alkoxy, $C_1$-$C_4$-haloalkoxy, $C_3$-$C_8$-alkenyloxy, $C_3$-$C_8$-alkynyloxy, $NR^AR^B$, $C_1$-$C_6$-alkoxyamino, $C_1$-$C_6$-alkylsulfonylamino, $C_1$-$C_6$-alkylaminosulfonylamino, [di-($C_1$-$C_6$)alkylamino]sulfonylamino, $C_3$-$C_6$-alkenylamino, $C_3$-$C_6$-alkynylamino, N-($C_2$-$C_6$-alkenyl)-N-($C_1$-$C_6$-alkyl)amino, N-($C_2$-$C_6$-alkynyl)-N-($C_1$-$C_6$-alkyl)amino, N-($C_1$-$C_6$-alkoxy)-N- ($C_1$-$C_6$-alkyl)amino, N-($C_2$-$C_6$-alkenyl)-N-($C_1$-$C_6$-alkoxy)amino, N-($C_2$-$C_6$-alkynyl)-N-($C_1$-$C_6$- alkoxy)-amino, $C_1$-$C_6$-alkylsulfonyl, tri-$C_1$-$C_4$-alkylsilyl, phenyl, phenoxy, phenylamino or a 5- or 6-membered monocyclic or 9- or 10-membered bicyclic heterocycle which contains 1, 2, 3 or 4 heteroatoms selected from the group consisting of O, N and S, where the cyclic groups are unsubstituted or substituted by 1, 2, 3 or 4 groups $R^{aa}$;

$R^{aa}$ is halogen, OH, CN, $NO_2$, $C_1$-$C_4$-alkyl, $C_1$-$C_4$-haloalkyl, $C_1$-$C_4$-alkoxy, $C_1$-$C_4$-haloalkoxy, $S(O)_qR^y$, D-C(=O)-$R^{a1}$ and tri-$C_1$-$C_4$-alkylsilyl;

| | |
|---|---|
| $R^b$ | independently of one another are hydrogen, CN, $NO_2$, halogen, $C_1$-$C_4$-alkyl, $C_1$-$C_4$-haloalkyl, $C_2$-$C_4$-alkenyl, $C_3$-$C_6$-alkynyl, $C_1$-$C_4$-alkoxy, $C_1$-$C_4$-haloalkoxy, benzyl or $S(O)_qR^y$, $R^b$ together with the group $R^a$ or $R^b$ attached to the adjacent ring atom may also form a five- or six-membered saturated or partially or fully unsaturated ring which, in addition to carbon atoms, may contain 1, 2 or 3 heteroatoms selected from the group consisting of O, N and S, which ring may be partially or fully substituted by $R^{aa}$; |
| p | is 0, 1, 2 or 3; |
| $R^{30}$ | is hydrogen, OH, CN, $C_1$-$C_{12}$-alkyl, $C_3$-$C_{12}$-alkenyl, $C_3$-$C_{12}$-alkynyl, $C_1$-$C_4$-alkoxy, $C_3$-$C_6$-cycloalkyl, $C_5$-$C_6$-cycloalkenyl, $NR^AR^B$, $S(O)_nR^y$, $S(O)_nNR^AR^B$, C(=O)$R^{40}$, $CONR^AR^B$, phenyl or a 5- or 6-membered monocyclic or 9- or 10-membered bicyclic aromatic heterocycle which contains 1, 2, 3 or 4 heteroatoms selected from the group consisting of O, N and S, where the cyclic groups are attached via $D^1$ and are unsubstituted or substituted by 1, 2, 3 or 4 groups $R^{aa}$, and also the following partially or fully $R^{aa}$-substituted groups: $C_1$-$C_4$-alkyl, $C_3$-$C_4$-alkenyl, $C_3$-$C_4$-alkynyl, $C_1$-$C_4$-alkoxy, $C_3$-$C_6$-cycloalkyl, $C_5$-$C_6$-cycloalkenyl, $NR^AR^B$, S $(O)_nR_y$, $S(O)_nR^AR^B$, C(=O)$R^{40}$ and $CONR^AR^B$;<br>$R^{40}$ is hydrogen, $C_1$-$C_4$-alkyl, $C_1$-$C_4$-haloalkyl, $C_1$-$C_4$-alkoxy or $C_1$-$C_4$-halo-alkoxy;<br>$D^1$ is carbonyl or a group D; where in groups $R^{15}$, $R^a$ and their sub-substituents the carbon chains and/or the cyclic groups may carry 1, 2, 3 or 4 substituents $R^{aa}$ and/or $R^{a1}$; |
| $R^{31}$ | is $C_1$-$C_4$-alkyl, $C_3$-$C_4$-alkenyl or $C_3$-$C_4$-alkynyl; |
| $R^{32}$ | is OH, $NH_2$, $C_1$-$C_4$-alkyl, $C_3$-$C_6$-cycloalkyl, $C_3$-$C_6$-alkenyl, $C_3$-$C_6$-alkynyl, $C_1$-$C_4$-hydroxyalkyl, $C_1$-$C_4$-cyanoalkyl, $C_1$-$C_4$-haloalkyl, $C_1$-$C_4$-alkoxy-$C_1$-$C_4$-alkyl or C(=O)$R^{40}$; |
| $R^{33}$ | is hydrogen, halogen, $C_1$-$C_4$-alkyl or $C_1$-$C_4$-haloalkyl, or $R^{33}$ and $R^{34}$ together are a covalent bond; |
| $R^{34}$, $R^{35}$, $R^{36}$, $R^{37}$ | independently of one another are hydrogen, halogen, OH, CN, $NO_2$, $C_1$-$C_4$-alkyl, $C_1$-$C_4$-haloalkyl, $C_2$-$C_6$-alkenyl, $C_2$-$C_6$-alkynyl, $C_1$-$C_4$-alkoxy, $C_1$-$C_4$-haloalkoxy, $C_3$-$C_6$-cycloalkyl, $C_3$-$C_6$-cycloalkenyl and $C_3$-$C_6$-cycloalkynyl; |
| $R^{38}$, $R^{39}$ | independently of one another are hydrogen, halogen, OH, haloalkyl, $NR^AR^B$, $NR^AC(O)R^{41}$, CN, $NO_2$, $C_1$-$C_4$-alkyl, $C_1$-$C_4$-haloalkyl, $C_2$-$C_4$-alkenyl, $C_3$-$C_6$-alkynyl, $C_1$-$C_4$-alkoxy, $C_1$-$C_4$-haloalkoxy, O-C(O)$R^{41}$, phenoxy or benzyloxy, where in groups $R^{38}$ and $R^{39}$ the carbon chains and/or the cyclic groups may carry 1, 2, 3 or 4 substituents $R^{aa}$; $R^{41}$ is $C_1$-$C_4$-alkyl or $NR^AR^B$; |

among the piperazine compounds of formula III, preference is given to the piperazine compounds of the formula III, wherein

| | |
|---|---|
| A | is phenyl or pyridyl where $R^a$ is attached in the ortho-position to the point of attachment of A to a carbon atom; |
| $R^a$ | is CN, $NO_2$, $C_1$-$C_4$-alkyl, $C_1$-$C_4$-haloalkyl, $C_1$-$C_4$-alkoxy, $C_1$-$C_4$-haloalkoxy or D-C(=O)-$R^{a1}$; |

$R^y$ is $C_1$-$C_6$-alkyl, $C_3$-$C_4$-alkenyl, $C_3$-$C_4$-alkynyl, $NR^AR^B$ or $C_1$-$C_4$-haloalkyl and q is 0, 1 or 2;
$R^A$,$R^B$ independently of one another are hydrogen, $C_1$-$C_6$-alkyl, $C_3$-$C_6$-alkenyl and $C_3$-$C_6$-alkynyl; together with the nitrogen atom to which they are attached, $R^A$,$R^B$ may also form a five- or six-membered saturated, partially or fully unsaturated ring which, in addition to carbon atoms, may contain 1, 2 or 3 heteroatoms selected from the group consisting of O, N and S, which ring may be substituted by 1 to 3 groups $R^{aa}$;
D is a covalent bond or $C_1$-$C_4$-alkylene;
$R^{a1}$ is hydrogen, OH, $C_1$-$C_8$-Alkyl, $C_1$-$C_4$-haloalkyl, $C_3$-$C_6$-cycloalkyl;
$R^{aa}$ is halogen, OH, CN, $NO_2$, $C_1$-$C_4$-alkyl, $C_1$-$C_4$-haloalkyl, $C_1$-$C_4$-alkoxy, $C_1$-$C_4$-haloalkoxy, $S(O)_qR^y$, D-C(=O)-$R^{a1}$ and tri-$C_1$-$C_4$-alkylsilyl;

| | |
|---|---|
| $R^b$ | independently of one another is CN, $NO_2$, halogen, $C_1$-$C_4$-alkyl, $C_1$-$C_4$-haloalkyl, $C_2$-$C_4$-alkenyl, $C_3$-$C_6$-alkynyl, $C_1$-$C_4$-alkoxy, $C_1$-$C_4$-haloalkoxy, benzyl or $S(O)_qR^y$, $R^b$ together with the group $R^a$ or $R^b$ attached to the adjacent ring atom may also form a five- or six-membered saturated or partially or fully unsaturated ring which, in addition to carbon atoms, may contain 1, 2 or 3 heteroatoms selected from the group consisting of O, N and S, which ring may be partially or fully substituted by $R^{aa}$; |
| p | is 0 or 1; |
| $R^{30}$ | is hydrogen, $C_1$-$C_{12}$-alkyl, $C_3$-$C_{12}$-alkenyl, $C_3$-$C_{12}$-alkynyl, $C_1$-$C_4$-alkoxy or C(=O)$R^{40}$, which can be partially or fully be substituted by $R^{aa}$ groups; |
| $R^{40}$ | is hydrogen, $C_1$-$C_4$-alkyl, $C_1$-$C_4$-haloalkyl, $C_1$-$C_4$-alkoxy or $C_1$-$C_4$-halo-alkoxy; where in groups $R^{30}$, $R^a$ and their sub-substituents the carbon chains and/or cyclic groups may carry 1, 2, 3 or 4 substituents $R^{aa}$ and/or $R^{a1}$; |
| $R^{31}$ | is $C_1$-$C_4$-alkyl; |
| $R^{32}$ | is OH, $NH_2$, $C_1$-$C_4$-alkyl, $C_3$-$C_6$-cycloalkyl, $C_1$-$C_4$-haloalkyl or C(=O)$R^{25}$; |
| $R^{33}$ | is hydrogen, or $R^{33}$ and $R^{34}$ together are a covalent bond; |
| $R^{34}$, $R^{35}$, $R^{36}$, $R^{37}$ | independently of one another are hydrogen; |
| $R^{38}$, $R^{39}$ | independently of one another are hydrogen, halogen or OH; |

b12) from the group of the decoupler herbicides:

dinoseb, dinoterb and DNOC and its salts;

b13) from the group of the auxinic herbicides:

2,4-D and its salts and esters, 2,4-DB and its salts and esters, aminopyralid and its salts such as aminopyralid-tris(2-hydroxypropyl)ammonium and its esters, benazolin, benazolin-ethyl, chloramben and its salts and esters, clomeprop, clopyralid and its salts and esters, dicamba and its salts and esters, dichlorprop and its salts and esters, dichlorprop-P and its salts and esters, fluroxypyr, fluroxypyr-butometyl, fluroxypyr-meptyl, MCPA and its salts and esters, MCPA-thioethyl, MCPB and its salts and esters, mecoprop and its salts and esters, mecoprop-P and its salts and esters, picloram and its salts and esters, quinclorac, quinmerac, TBA (2,3,6) and its salts and esters, triclopyr and its salts and esters, and aminocyclopyrachlor and its salts and esters;

b14) from the group of the auxin transport inhibitors: diflufenzopyr, diflufenzopyr-sodium, naptalam and naptalam-sodium;

b15) from the group of the other herbicides: bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin (CAS 403640-27-7), methyl azide, methyl bromide, methyl-dymron, methyl iodide, MSMA, oleic acid, oxaziclomefone, pelargonic acid, pyributicarb, quinoclamine, triaziflam, tridiphane and 6-chloro-3-(2-cyclopropyl-6-methylphenoxy)-4-pyridazinol (CAS 499223-49-3) and its salts and esters.

Preferred herbicides B that can be used in combination with the cyanobutyrates of the formula I according to the present invention are:

b1) from the group of the lipid biosynthesis inhibitors:

clethodim, clodinafop-propargyl, cycloxydim, cyhalofop-butyl, diclofop-methyl, fenoxaprop-P-ethyl, fluazifop-P-butyl, haloxyfop-P-methyl, metamifop, pinoxaden, profoxydim, propaquizafop, quizalofop-P-ethyl, quizalofop-P-tefuryl, sethoxydim, tepraloxydim, tralkoxydim, benfuresate, dimepiperate, EPTC, esprocarb, ethofumesate, molinate, orbencarb, prosulfocarb, thiobencarb and triallate;

b2) from the group of the ALS inhibitors:

amidosulfuron, azimsulfuron, bensulfuron-methyl, bispyribac-sodium, chlorimuron-ethyl, chlorsulfuron, cloransulam-methyl, cyclosulfamuron, diclosulam, ethametsulfuron-methyl, ethoxysulfuron, flazasulfuron, florasulam, flucarbazonesodium, flucetosulfuron, flumetsulam, flupyrsulfuron-methyl-sodium, foramsulfuron, halosulfuron-methyl, imazamethabenz-methyl, imazamox, imazapic, imazapyr, imazaquin, imazethapyr, imazosulfuron, iodosulfuron, iodosulfuron-methyl-sodium, mesosulfuron, metazosulfuron, metosulam, metsulfuron-methyl, nicosulfuron, orthosulfamuron, oxasulfuron, penoxsulam, primisulfuron-methyl, propoxycarbazon-sodium, propyrisulfuron, prosulfuron, pyrazosulfuron-ethyl, pyribenzoxim, pyrimisulfan, pyriftalid, pyriminobac-methyl, pyrithiobac-sodium, pyroxsulam, rimsulfuron, sulfometuron-methyl, sulfosulfuron, thiencarbazone-methyl, thifensulfuron-methyl, triasulfuron, tribenuron-methyl, trifloxysulfuron, triflusulfuron-methyl, tritosulfuron and triafamone;

b3) from the group of the photosynthesis inhibitors:

ametryn, amicarbazone, atrazine, bentazone, bentazone-sodium, bromoxynil and its salts and esters, chloridazone, chlorotoluron, cyanazine, desmedipham, diquatdibromide, diuron, fluometuron, hexazinone, ioxynil and its salts and esters, isoproturon, lenacil, linuron, metamitron, methabenzthiazuron, metribuzin, paraquat, paraquat-dichloride, phenmedipham, propanil, pyridate, simazine, terbutryn,
terbuthylazine and thidiazuron;

b4) from the group of the protoporphyrinogen-IX oxidase inhibitors: acifluorfen-sodium, bencarbazone, benzfendizone, butafenacil, carfentrazone-ethyl, cinidon-ethyl, flufenpyr-ethyl, flumiclorac-pentyl, flumioxazin, fluoroglycofen-ethyl, fomesafen, lactofen, oxadiargyl, oxadiazon, oxyfluorfen, pentoxazone, pyraflufen-ethyl, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-31 00), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 45100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione, 1,5-dimethyl-6-thioxo-3-(2,2,7-trifluoro-3-oxo-4-(prop-2-ynyl)-3,4-dihydro-2H-benzo[b][1,4]oxazin-6-yl)-1,3,5-triazinane-2,4-dione, 2-(2,2,7-Trifluoro-3-
oxo-4-prop-2-ynyl-3,4-dihydro-2H-benzo[1,4]oxazin-6-yl)-4,5,6,7-tetrahydroisoindole-1,3-dione and 1-Methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione;

b5) from the group of the bleacher herbicides:

aclonifen, beflubutamid, benzobicyclon, clomazone, diflufenican, flurochloridone, flurtamone, isoxaflutole, mesotrione, norflurazon, picolinafen, pyrasulfotole, pyrazolynate, sulcotrione, tefuryltrione, tembotrione, topramezone, bicyclopyrone, 4-(3-trifluoromethylphenoxy)-2-(4-trifluoromethylphenyl)pyrimidine (CAS 180608-33-7), amitrole and flumeturon;

b6) from the group of the EPSP synthase inhibitors:

glyphosate, glyphosate-isopropylammonium, glyphosate-potassium and glyphosate-trimesium (sulfosate);

b7) from the group of the glutamine synthase inhibitors:

glufosinate, glufosinate-P, glufosinate-ammonium;

b8) from the group of the DHP synthase inhibitors: asulam;

b9) from the group of the mitosis inhibitors:

benfluralin, dithiopyr, ethalfluralin, oryzalin, pendimethalin, thiazopyr and trifluralin;

b10) from the group of the VLCFA inhibitors:

acetochlor, alachlor, anilofos, butachlor, cafenstrole, dimethenamid, dimethenamid-P, fentrazamide, flufenacet, mefenacet, metazachlor, metolachlor, S-metolachlor, naproanilide, napropamide, pretilachlor, fenoxasulfone, ipfencarbazone, pyroxasulfone thenylchlor and isoxazoline-compounds of the formulae II.1, II.2, II.3, II.4, II.5, II.6, II.7, II.8 and II.9 as mentioned above;

b11) from the group of the cellulose biosynthesis inhibitors: dichlobenil, flupoxam, isoxaben, 1-Cyclohexyl-5-pentafluorphenyloxy-$1^{4}$-[1,2,4,6]thiatriazin-3-ylamine and the piperazine compounds of formula III as mentioned above;

b13) from the group of the auxinic herbicides:

2,4-D and its salts and esters, aminopyralid and its salts such as aminopyralid-tris(2-hydroxypropyl)ammonium and its esters, clopyralid and its salts and esters, dicamba and its salts and esters, dichlorprop-P and its salts and esters, fluroxypyr-meptyl, MCPA and its salts and esters, MCPB and its salts and esters, mecoprop-P and its salts and esters, picloram and its salts and esters, quinclorac, quinmerac, triclopyr and its salts and esters, and aminocyclopyrachlor and its salts and esters;

b14) from the group of the auxin transport inhibitors: diflufenzopyr and diflufenzopyr-sodium;

b15) from the group of the other herbicides: bromobutide, cinmethylin, cumyluron, dalapon, difenzoquat, difenzoquat-metilsulfate, DSMA, dymron (= daimuron), flamprop, flamprop-isopropyl, flamprop-methyl, flamprop-M-isopropyl, flamprop-M-methyl, indanofan, indaziflam, metam, methylbromide, MSMA, oxaziclomefone, pyributicarb, triaziflam, tridiphane and 6-chloro-3-(2-cyclopropyl-6-methylphenoxy)-4-pyridazinol (CAS 499223-49-3) and its salts and esters.

Particularly preferred herbicides B that can be used in combination with the cyanobutyrates of the formula I according to the present invention are:

b1) from the group of the lipid biosynthesis inhibitors: clodinafop-propargyl, cycloxydim, cyhalofop-butyl, fenoxaprop-P-ethyl, pinoxaden, profoxydim, tepraloxydim, tralkoxydim, esprocarb, prosulfocarb, thiobencarb and triallate;

b2) from the group of the ALS inhibitors: bensulfuron-methyl, bispyribac-sodium, cyclosulfamuron, diclosulam, flumetsulam, flupyrsulfuron-methyl-sodium, foramsulfuron, imazamox, imazapic, imazapyr, imazaquin, imazethapyr, imazosulfuron, iodosulfuron, iodosulfuron-methyl-sodium, mesosulfuron, metazosulfuron, nicosulfuron, penoxsulam, propoxycarbazon-sodium, pyrazosulfuron-ethyl, pyroxsulam, rimsulfuron, sulfosulfuron, thiencarbazon-methyl and tritosulfuron;

b3) from the group of the photosynthesis inhibitors: ametryn, atrazine, diuron, fluometuron, hexazinone, isoproturon, linuron, metribuzin, paraquat, paraquat-dichloride, propanil, terbutryn and terbuthylazine;

b4) from the group of the protoporphyrinogen-IX oxidase inhibitors: flumioxazin, oxyfluorfen, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione, 1,5-dimethyl-6-thioxo-3-(2,2,7-trifluoro-3-oxo-4-(prop-2-ynyl)-3,4-dihydro-2H-benzo[b][1,4]oxazin-6-yl)-1,3,5-triazinane-2,4-dione and 2-(2,2,7-Trifluoro-3-oxo-4-prop-2-ynyl-3,4-dihydro-2H-benzo[1,4]oxazin-6-yl)-4,5,6,7-tetrahydro-isoindole-1,3-dione, and 1-Methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione;

b5) from the group of the bleacher herbicides: clomazone, diflufenican, flurochloridone, isoxaflutole, mesotrione, picolinafen, sulcotrione, tefuryltrione, tembotrione, topramezone, bicyclopyrone, amitrole and flumeturon;

b6) from the group of the EPSP synthase inhibitors: glyphosate, glyphosate-isopropylammonium and glyphosate-trimesium (sulfosate);

b7) from the group of the glutamine synthase inhibitors: glufosinate, glufosinate-P and glufosinate-ammonium;

b9) from the group of the mitosis inhibitors: pendimethalin and trifluralin;

b10) from the group of the VLCFA inhibitors: acetochlor, cafenstrole, dimethenamid-P, fentrazamide, flufenacet, mefenacet, metazachlor, metolachlor, S-metolachlor, fenoxasulfone, ipfencarbazone and pyroxasulfone; likewise, preference is given to isoxazoline compounds of the formulae II.1, II.2, II.3, II.4, II.5, II.6, II.7, II.8 and II.9 as mentioned above;

b11) from the group of the cellulose biosynthesis inhibitors: isoxaben and and the piperazine compounds of formula III as mentioned above;

b13) from the group of the auxinic herbicides: 2,4-D and its salts and esters, aminopyralid and its salts and its esters, clopyralid and its salts and esters, dicamba and its salts and esters, fluroxypyr-meptyl, quinclorac, quinmerac and aminocyclopyrachlor and its salts and esters;

b14) from the group of the auxin transport inhibitors: diflufenzopyr and diflufenzopyr-sodium,

b15) from the group of the other herbicides: dymron (= daimuron), indanofan, indaziflam, oxaziclomefone and triaziflam.

In another embodiment of the present invention the compositions according to the present invention comprise at least one cyanobutyrate of formula I and at least one safener C.

Safeners are chemical compounds which prevent or reduce damage on useful plants without having a major impact on the herbicidal action of the herbicidal active componts of the present compostions towards unwanted plants. They can be applied either before sowings (e.g. on seed treatments, shoots or seedlings) or in the pre-emergence application or post-emergence application of the useful plant. The safeners and the cyanobutyrates of the formula I and/or the herbicides B can be applied simultaneously or in succession.

Examples of preferred safeners C are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Especially preferred safeners C are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro-[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Particularly preferred safeners C are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

The active compounds B of groups b1) to b15) and the active compounds C are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

The piperazine compounds of formula III as defined above (hereinafter also referred to as "compound III") as well as its pesticidal action and methods for preparation are described in WO 2010/049369, WO 2010/037727 und WO 2010/012649.

The assignment of the active compounds to the respective mechanisms of action is based on current knowledge. If several mechanisms of action apply to one active compound, this substance was only assigned to one mechanism of action.

If the herbicides B and/or the safeners C are capable of forming geometrical isomers, for example E/Z isomers, both the pure isomers and mixtures thereof may be used in the compositions according to the invention.

If the herbicides B and/or the safeners C have one of more centers of chirality and are thus present as enantiomers or

diastereomers, both the pure enantiomers and diastereomers and mixtures thereof may be used in the compositions according to the invention.

If the herbicides B and/or the safeners C have ionizable functional groups, they can also be employed in the form of their agriculturally acceptable salts. Suitable are, in general, the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyeth-1-oxy)eth-1-ylammonium, di(2-hydroxyeth-1-yl)-ammonium, benzyltrimethylammonium, benzyltriethylammonium, furthermore phosphonium ions, sulfonium ions, preferably tri($C_1$-$C_4$-alkyl)sulfonium, such as trimethylsulfonium, and sulfoxonium ions, preferably tri($C_1$-$C_4$-alkyl)sulfoxonium.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of $C_1$-$C_4$-alkanoic acids, preferably formate, acetate, propionate and butyrate.

Active compounds B and C having a carboxyl group can be employed in the form of the acid, in the form of an agriculturally suitable salt as mentioned above or else in the form of an agriculturally acceptable derivative in the compositions according to the invention, for example as amides, such as mono- and di-$C_1$-$C_6$-alkylamides or arylamides, as esters, for example as allyl esters, propargyl esters, $C_1$-$C_{10}$-alkyl esters, alkoxyalkyl esters and also as thioesters, for example as $C_1$-$C_{10}$-alkylthio esters. Preferred mono- and di-$C_1$-$C_6$-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred $C_1$-$C_4$-alkoxy-$C_1$-$C_4$-alkyl esters are the straight-chain or branched $C_1$-$C_4$-alkoxy ethyl esters, for example the methoxyethyl, ethoxyethyl or butoxyethyl ester. An example of a straight-chain or branched $C_1$-$C_{10}$-alkylthio ester is the ethylthio ester.

In the case of dicamba, suitable salts include those, where the counterion is an agriculturally acceptable cation. For example, suitable salts of dicamba are dicambasodium, dicamba-potassium, dicamba-methylammonium, dicamba-dimethylammonium, dicamba-isopropylammonium, dicamba-diglycolamine, dicamba-olamine, dicamba-diolamine and dicamba-trolamine. Examples of a suitable ester are dicamba-methyl and dicamba-butoyl.

Suitable salts of 2,4-D are 2,4-D dimethylammonium, 2,4-D diethanolammonium, 2,4-D triethanolammonium, 2,4-D triisopropanolammonium, 2,4-D sodium; 2,4-D isopropylammonium. Examples of a suitable ester of 2,4-D are 2,4-D-butotyl, 2,4-D-butyl, 2,4-D-ethyl, 2,4-D-ethylhexyl, 2,4-D-isobutyl, 2,4-D-isoctyl, 2,4-D-isopropyl. Suitable salts of 2,4-DB are for example 2,4-DB sodium, 2,4-DB potassium and 2,4-DB dimethylammonium.

Suitable salts of dichlorprop are for example dichlorprop potassium and dichlorprop dimethylammonium. Examples of a suitable ester of dichlorprop are dichlorprop-butotyl and dichlorprop-isoctyl.

Suitable salts and esters of MCPA include MCPA-butotyl, MCPA-butyl, MCPA-dimethylammonium, MCPA-diolamine, MCPA-ethyl, MCPA-thioethyl, MCPA-2-ethylhexyl, MCPA-isobutyl, MCPA-isoctyl, MCPA-isopropyl, MCPA-methyl, MCPA-olamine, MCPA-potassium, MCPA-sodium and MCPA-trolamine. A suitable salt of MCPB is MCPB sodium. A suitable ester of MCPB is MCPB-ethyl.

Suitable salts of clopyralid are clopyralid potassium, clopyralid olamine and clopyralid triisopropanolammonium.

Examples of a suitable ester of fluroxypyr are fluroxypyr-meptyl and fluroxypyr-2-butoxy-1-methylethyl, wherein fluroxypyr-meptyl is preferred.

Suitable salts of picloram are picloram dimethylammonium, picloram potassium, picloram triisopropanolammonium, picloram triisopropylammonium and picloram trolamine. A suitable ester of picloram is picloram-isoctyl.

A suitable salt of triclopyr is triclopyr triethalammonium. A suitable ester of triclopyr is triclopyr-butotyl.

Suitable salts and esters of chloramben include chloramben-ammonium, chloramben-diolamine, chloramben-methyl, chloramben-methylammonium and chloramben-sodium. Suitable salts and esters of 2,3,6-TBA include 2,3,6-TBA-dimethylammonium, 2,3,6-TBA-lithium, 2,3,6-TBA-potassium and 2,3,6-TBA-sodium.

Suitable salts and esters of aminopyralid include aminopyralid-potassium and aminopyralid-tris(2-hydroxypropyl)ammonium.

Suitable salts of glyphosate are for example glyphosate-ammonium, glyphosate-diammonium, glyphoste-dimethylammonium, glyphosate-isopropylammonium, glyphosate-potassium, glyphosate-sodium, glyphosate-trimesium as well as the ethanolamine and diethanolamine salts, preferably glyphosate-diammonium, glyphosate-isopropylammonium and glyphosate-trimesium (sulfosate).

Suitable salts of glufosinate are for example glufosinate-ammonium and glufosinate-P. Suitable salts and esters of

bromoxynil are for example bromoxynil butyrate, bromoxynil heptanoate, bromoxynil octanoate, bromoxynil potassium and bromoxynil sodium;

Suitable salts of ioxonil are for example ioxonil-octanoate, ioxonil-potassium and ioxonil-sodium.

Suitable salts and esters of mecoprop include mecoprop-butotyl, mecopropdimethylammonium, mecoprop-diolamine, mecoprop-ethadyl, mecoprop-2-ethylhexyl, mecoprop-isoctyl, mecoprop-methyl, mecoprop-potassium, mecoprop-sodium and mecoprop-trolamine.

Suitable salts of mecoprop-P are for example butotyl, dimethylammonium, ethylhexyl, potassium and sodium

A suitable salt of diflufenzopyr is diflufenzopyr-sodium.

A suitable salt of naptalam is naptalam-sodium.

Suitable salts of DNOC are for example DNOC-ammonium, DNOC-potassium and DNOC-sodium

Suitable salts and esters of 2,4-DB are for example 2,4-DB-butylester, 2,4-DB-dimethylammonium, 2,4-DB-triisopropanolammonium, 2,4-DB-isoctyl, 2,4-DB-potassium and 2,4-DB-sodium

Suitable salts of aminocyclopyrachlor are for example aminocyclopyrachlor dimethylammonium, aminocyclopyrachlor triisopropanolammonium, aminocyclopyrachlor sodium and aminocyclopyrachlor potassium.

According to a preferred embodiment of the invention, the composition comprises as herbicidal active compound B or component B, at least one, preferably exactly one herbicide B.

According to another preferred embodiment of the invention, the composition comprises as herbicidal active compound B or component B, at least two, preferably exactly two herbicides B different from each other.

According to another preferred embodiment of the invention, the composition comprises as herbicidal active compound B or component B, at least three, preferably exactly three herbicides B different from each other.

According to another preferred embodiment of the invention, the composition comprises as safening component C at least one, preferably exactly one safener C. According to another preferred embodiment of the invention, the composition comprises as component B, at least one, preferably exactly one herbicide B, and at lest one, preferably exactly one, safener C.

According to another preferred embodiment of the invention, the composition comprises as component B, preferably exactly two herbicides B different from each other, and at lest one, preferably exactly one, safener C.

According to another preferred embodiment of the invention, the composition comprises as component B, at least three, preferably exactly three herbicides B different from each other, and at lest one, preferably exactly one, safener C.

According to another preferred embodiment of the invention, the composition comprises as component A at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and as component B, at least one, preferably exactly one, herbicide B.

According to another preferred embodiment of the invention, the composition comprises as component A at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and as component B, at least two, preferably exactly two, herbicides B different from each other.

According to another preferred embodiment of the invention, the composition comprises as component A at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and as component B, at least three, preferably exactly three herbicides, B different from each other.

According to another preferred embodiment of the invention, the composition comprises as active componets at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and at least one, preferably exactly one, herbicide B.

According to another preferred embodiment of the invention, the composition comprises as active components at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and at least two, preferably exactly two, herbicides B different from each other.

According to another preferred embodiment of the invention, the composition comprises as active components at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and at least three, preferably exactly three, herbicides B different from each other.

According to another preferred embodiment of the invention, the composition comprises as active componets at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, and at least one, preferably exactly one, safener C.

According to another preferred embodiment of the invention, the composition comprises as active componets

at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, at least one, preferably exactly one, herbicide B, and at least one, preferably exactly one safener C.

According to another preferred embodiment of the invention, the composition comprises as active componets at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, at least two, preferably exactly two herbicides B different from each other, and at least one, preferably exactly one, safener C.

According to another preferred embodiment of the invention, the composition comprises as active componets at least one, preferably exactly one cyanobutyrate of formula I, preferably of formulae I.a, I.b, I.c or I.d, especially the compounds I.26.1, I.26.2, I.27.1, I.27.2, I.30.1, I.30.2, I.153.1 or I.153.2, at least three, preferably exactly three herbicides B different from each other, and at least one, preferably exactly one, safener C.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b1), in particular selected from the group consisting of clodinafop-propargyl, cycloxydim, cyhalofop-butyl, fenoxaprop-P-ethyl, pinoxaden, profoxydim, tepraloxydim, tralkoxydim, esprocarb, prosulfocarb, thiobencarb and triallate.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b2), in particular selected from the group consisting of bensulfuron-methyl, bispyribac-sodium, cyclosulfamuron, diclosulam, flumetsulam, flupyrsulfuron-methyl-sodium, foramsulfuron, imazamox, imazapic, imazapyr, imazaquin, imazethapyr, imazosulfuron, iodosulfuron, iodosulfuron-methyl-sodium, mesosulfuron, metazosulfuron, nicosulfuron, penoxsulam, propoxycarbazon-sodium, pyrazosulfuron-ethyl, pyroxsulam, rimsulfuron, sulfosulfuron, thiencarbazon-methyl and tritosulfuron.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b3), in particular selected from the group consisting of ametryn, atrazine, diuron, fluometuron, hexazinone, isoproturon, linuron, metribuzin, paraquat, paraquat-dichloride, propanil, terbutryn and terbuthylazine.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b4), in particular selected from the group consisting of flumioxazin, oxyfluorfen, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100) , 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione, 1,5-dimethyl-6-thioxo-3-(2,2,7-trifluoro-3-oxo-4-(prop-2-ynyl)-3,4-dihydro-2H-benzo[b][1,4]oxazin-6-yl)-1,3,5-triazinane-2,4-dione, 2-(2,2,7-Trifluoro-3-oxo-4-prop-2-ynyl-3,4-dihydro-2H-benzo[1,4]oxazin-6-yl)-4,5,6,7-tetrahydro-isoindole-1,3-dione and 1-Methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b5), in particular selected from the group consisting of clomazone, diflufenican, flurochloridone, isoxaflutole, mesotrione, picolinafen, sulcotrione, tefuryltrione, tembotrione, topramezone, bicyclopyrone, amitrole and flumeturon.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b6), in particular selected from the group consisting of glyphosate, glyphosate-isopropylammonium and glyphosate-trimesium (sulfosate).

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b7), in particular selected from the group consisting of glufosinate, glufosinate-P and glufosinate-ammonium.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b9), in particular selected from the group consisting of pendimethalin and trifluralin.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b10), in particular selected from the group consisting of acetochlor, cafenstrole, dimethenamid-P, fentrazamide, flufenacet, mefenacet, metazachlor, metolachlor, S-metolachlor, fenoxasulfone and pyroxasulfone. Likewise, preference is given to compositions comprising in addition to a cyanobutyrate of the formula I, especially an active compound from the group consisting of I.a, I.b, I.c and I.d (in particular from the group consisting of I.26.1, I.26.2, I.27.1, I.27.2, I.30.1, I.30.2, I.153.1 and I.153.2), at least one and especially exactly one herbicidally active compound from group b10), in particular selected from the group consisting of isoxazoline compounds of the formulae 11.1, 11.2, II8.3, II.4, II.5, II.6, II.7, II.8 and II.9, as defined above.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, 1.27.2, I.30.1, I.30.2, I.153.1 and I.153.2), at least one and especially exactly one herbicidally active compound from group b11), in particular isoxaben. Likewise, preference is given to compositions comprising in addition to a cyanobutyrate of the formula I, preferably of formulae I.a, I.b, I.c or I.d, especially an active compound from the group consisting of I.26.1, I.26.2, I.27.1, 1.27.2, I.30.1, I.30.2, I.153.1 and I.153.2, at least one and especially exactly one herbicidally active compound from group b11), in particular selected from the group consisting of piperazine compounds of formula III as defined above.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, 1.27.2, I.30.1, I.30.2, I.153.1 and I.153.2), at least one and especially exactly one herbicidally active compound from group b13), in particular selected from the group consisting of 2,4-D and its salts and esters, aminopyralid and its salts such as aminopyralid-tris(2-hydroxypropyl)ammonium and its esters, clopyralid and its salts and esters, dicamba and its salts and esters, fluroxypyr-meptyl, quinclorac, quinmerac and aminocyclopyrachlor and its salts and esters.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, 1.27.2, I.30.1, I.30.2, I.153.1 and I.153.2), at least one and especially exactly one herbicidally active compound from group b14), in particular selected from the group consisting of diflufenzopyr and diflufenzopyr-sodium.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, 1.27.2, I.30.1, I.30.2, I.153.1 and I.153.2), at least one and especially exactly one herbicidally active compound from group b15), in particular selected from the group consisting of dymron (= daimuron), indanofan, indaziflam, oxaziclomefone and triaziflam.

According to another preferred embodiment of the invention, the composition comprises, in addition to a cyanobutyrate of the formula I, especially an active compound from the group consisting of I.a, I.b, I.c and I.d (in particular from the group consisting of I.26.1, I.26.2, I.27.1, 1.27.2, I.30.1, I.30.2, I.153.1 and I.153.2), at least one and especially exactly one herbicidally active compound from the safeners C, in particular selected from the group consisting of benoxacor, cloquintocet, cyprosulfamide, dichlormid, fenchlorazole, fenclorim, furilazole, isoxadifen, mefenpyr, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Further preferred embodiments relate to ternary compositions which correspond to the binary compositions mentioned above and additionally comprise a safener C, in particular selected from the group consisting of benoxacor, cloquintocet, cyprosulfamide, dichlormid, fenchlorazole, fenclorim, furilazole, isoxadifen, mefenpyr, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Here and below, the term " binary compositions" includes compositions comprising one or more, for example 1, 2 or 3, active compounds of the formula I and either one or more, for example 1, 2 or 3, herbicides B or one or more safeners. Correspondingly, the term "ternary compositions" includes compositions comprising one or more, for example 1, 2 or 3, active compounds of the formula I, one or more, for example 1, 2 or 3, herbicides B and one or more, for example 1, 2 or 3, safeners C.

In binary compositions comprising at least one compound of the formula I as component A and at least one herbicide B, the weight ratio of the active compounds A: B is generally in the range of from 1:1000 to 1000:1, preferably

in the range of from 1:500 to 500:1, in particular in the range of from 1:250 to 250:1 and particularly preferably in the range of from 1:75 to 75:1.

In binary compositions comprising at least one compound of the formula I as component A and at least one safener C, the weight ratio of the active compounds A:C is generally in the range of from 1:1000 to 1000:1, preferably in the range of from 1:500 to 500:1, in particular in the range of from 1:250 to 250:1 and particularly preferably in the range of from 1:75 to 75:1.

In ternary compositions comprising both at least one compound of the formula I as component A, at least one herbicide B and at least one safener C, the relative proportions by weight of the components A: B are generally in the range of from 1:1000 to 1000:1, preferably in the range of from 1:500 to 500:1, in particular in the range of from 1:250 to 250:1 and particularly preferably in the range of from 1:75 to 75:1, the weight ratio of the components A:C is generally in the range of from 1:1000 to 1000:1, preferably in the range of from 1:500 to 500:1, in particular in the range of from 1:250 to 250:1 and particularly preferably in the range of from 1:75 to 75:1, and the weight ratio of the components B: C is generally in the range of from 1:1000 to 1000:1, preferably in the range of from 1:500 to 500:1, in particular in the range of from 1:250 to 250:1 and particularly preferably in the range of from 1:75 to 75:1. The weight ratio of components A + B to component C is preferably in the range of from 1:500 to 500:1, in particular in the range of from 1:250 to 250: 1 and particularly preferably in the range of from 1:75 to 75:1.

Particularly preferred herbicides B are the herbicides B as defined above; in particular the herbicides B.1 - B. 144 listed below in table B:

Table B:

| | Herbicide B | | | Herbicide B |
|---|---|---|---|---|
| B.1 | clethodim | | B.38 | metsulfuron |
| B.2 | clodinafop-propargyl | | B.39 | metosulam |
| B.3 | cycloxydim | | B.40 | nicosulfuron |
| B.4 | cyhalofop-butyl | | B.41 | penoxsulam |
| B.5 | fenoxaprop-P-ethyl | | B.42 | propoxycarbazon-sodium |
| B.6 | metamifop | | B.43 | pyrazosulfuron-ethyl |
| B.7 | pinoxaden | | B.44 | pyribenzoxim |
| B.8 | profoxydim | | B.45 | pyriftalid |
| B.9 | sethoxydim | | B.46 | pyroxsulam |
| B.10 | tepraloxydim | | B.47 | rimsulfuron |
| B.11 | tralkoxydim | | B.48 | sulfosulfuron |
| B.12 | esprocarb | | B.49 | thiencarbazone-methyl |
| B.13 | ethofumesate | | B.50 | thifensulfuron |
| B.14 | molinate | | B.51 | tribenuron |
| B.15 | prosulfocarb | | B.52 | tritosulfuron |
| B.16 | thiobencarb | | B.53 | ametryne |
| B.17 | triallate | | B.54 | atrazine |
| B.18 | bensulfuron-methyl | | B.55 | bentazon |
| B.19 | bispyribac-sodium | | B.56 | bromoxynil |
| B.20 | cloransulam | | B.57 | diuron |
| B.21 | chlorsulfuron | | B.58 | fluometuron |
| B.22 | clorimuron | | B.59 | hexazinone |
| B.23 | cyclosulfamuron | | B.60 | isoproturon |
| B.24 | diclosulam | | B.61 | linuron |
| B.25 | florasulam | | B.62 | metamitron |
| B.26 | flumetsulam | | B.63 | metribuzin |
| B.27 | flupyrsulfuron-methyl-sodium | | B.64 | propanil |
| B.28 | foramsulfuron | | B.65 | simazin |
| B.29 | imazamox | | B.66 | terbuthylazine |
| B.30 | imazapic | | B.67 | terbutryn |
| B.31 | imazapyr | | B.68 | paraquat-dichloride |
| B.32 | imazaquin | | B.69 | acifluorfen |
| B.33 | imazethapyr | | B.70 | butafenacil |
| B.34 | imazosulfuron | | B.71 | carfentrazone-ethyl |
| B.35 | iodosulfuron-methyl-sodium | | B.72 | flumioxazin |
| B.36 | mesosulfuron | | B.73 | fomesafen |
| B.37 | metazosulfuron | | B.74 | oxadiargyl |
| B.75 | oxyfluorfen | | B.97 | fluometuron |

(continued)

| | Herbicide B | | | Herbicide B |
|---|---|---|---|---|
| B.76 | saflufenacil | | B.98 | glyphosate |
| B.77 | sulfentrazone | | B.99 | glyphosate-isopropylammonium |
| B.78 | ethyl [3-[2-chloro-4-fluoro-5-(1-methyl-6-trifluoromethyl-2,4-di-oxo-1,2,3,4-tetrahydropyrimidin- 3-yl)phenoxy]-2-pyridyl-oxy] acetate (CAS 353292-31-6) | | B.100 | glyphosate-trimesium (sulfosate) |
| | | | B.101 | glufosinate |
| | | | B.102 | glufosinate-P |
| | | | B.103 | glufosinate-ammonium |
| B.79 | 3-[7-fluoro-3-oxo-4-(prop-2-yn-yl)-3,4-dihydro-2H-benzo[1,4]-oxazin-6-yl]-1,5-dimethyl-6-thi-oxo-[1,3,5]triazinan-2,4-dione | | B.104 | pendimethalin |
| | | | B.105 | trifluralin |
| | | | B.106 | acetochlor |
| | | | B.107 | butachlor |
| B.80 | 1,5-dimethyl-6-thioxo-3-(2,2,7-trifluoro-3-oxo-4-(prop-2-ynyl)-3,4-dihydro-2H-benzo[b][1,4]-oxazin-6-yl)-1,3,5-triazinane- 2,4-dione | | B.108 | cafenstrole |
| | | | B.109 | dimethenamid-P |
| | | | B.110 | fentrazamide |
| | | | B.111 | flufenacet |
| | | | B.112 | mefenacet |
| B.81 | 2-(2,2,7-Trifluoro-3-oxo-4-prop-2-ynyl-3,4-dihydro-2H-benzo[1,4]oxazin-6-yl)-4,5,6,7- tetrahydro-isoindole-1,3-dione | | B.113 | metazachlor |
| | | | B.114 | metolachlor |
| | | | B.115 | S-metolachlor |
| | | | B.116 | pretilachlor |
| B.82 | 1-Methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione | | B.117 | fenoxasulfone |
| | | | B.118 | isoxaben |
| | | | B.119 | pyroxasulfone |
| | | | B.120 | 2,4-D |
| | | | B.121 | aminopyralid |
| B.83 | benzobicyclon | | B.122 | clopyralid |
| B.84 | clomazone | | B.123 | dicamba |
| B.85 | diflufenican | | B.124 | fluroxypyr-meptyl |
| B.86 | flurochloridone | | B.125 | MCPA |
| B.87 | isoxaflutole | | B.126 | quinclorac |
| B.88 | mesotrione | | B.127 | quinmerac |
| B.89 | norflurazone | | B.128 | aminocyclopyrachlor |
| B.90 | picolinafen | | B.129 | diflufenzopyr |
| B.91 | sulcotrione | | B.130 | diflufenzopyr-sodium |
| B.92 | tefuryltrione | | B.131 | dymron |
| B.93 | tembotrione | | B.132 | indanofan |
| B.94 | topramezone | | B.133 | indaziflam |
| B.95 | bicyclopyrone | | B.134 | oxaziclomefone |
| B.96 | amitrole | | | |

(continued)

| | Herbicide B | | | Herbicide B |
|---|---|---|---|---|
| B.135 | triaziflam | | B.140 | II.5 |
| B.136 | II.1 | | B.141 | II.6 |
| B.137 | II.2 | | B.142 | II.7 |
| B.138 | II.3 | | B.143 | II.8 |
| B.139 | II.4 | | B.144 | II.9 |

Particularly preferred safeners C, which, as component C, are constituent of the composition according to the invention are the safeners C as defined above; in particular the safeners C.1 - C.13 listed below in table C:

Table C

| | Safener C |
|---|---|
| C.1 | benoxacor |
| C.2 | cloquintocet |
| C.3 | cyprosulfamide |
| C.4 | dichlormid |
| C.5 | fenchlorazole |
| C.6 | fenclorim |
| C.7 | furilazole |
| C.8 | isoxadifen |
| C.9 | mefenpyr |
| C.10 | naphtalic acid anhydride |
| C.11 | 4-(dichloroacetyl)-1-oxa-4-azaspiro[4.5]decane (MON4660, CAS 71526-07-3) |
| C.12 | 2,2,5-trimethyl-3-(dichloroacetyl)-1,3-oxazolidine (R-29148, CAS 52836-31-4) |
| C.13 | N-(2-Methoxybenzoyl)-4-[(methylaminocarbonyl)amino]benzenesulfonamide (CAS 129531-12-0) |

The weight ratios of the individual components in the preferred mixtures mentioned below are within the limits given above, in particular within the preferred limits.

Particularly preferred are the compositions mentioned below comprising the cyanobutyrates of formula I as defined and the substance(s) as defined in the respective row of table I;
especially preferred comprising as only herbicidal active compounds the cyanobutyrates of formula I as defined and the substance(s) as defined in the respective row of table I;
most preferably comprising as only active compounds the cyanobutyrates of formula I as defined and the substance(s) as defined in the respective row of table I.

Particularly preferred are compositions 1.1 to 1.2029, comprising the compound I (especially the compound I.a, I.b, I.c or I.d and in particular the compound I.26.1, I.26.2, I.27.1, I.27.2, I.30.1, I.30.2, I.153.1 or I.153.2) and the substance(s) as defined in the respective row of table I:

Table I (compositions 1.1 to 1.2029):

| comp. no. | herbicide B | safener C | comp. no. | herbicide B | safener C | comp. no. | herbicide B | safener C |
|---|---|---|---|---|---|---|---|---|
| 1.1 | B.1 | -- | 1.33 | B.33 | -- | 1.65 | B.65 | – |
| 1.2 | B.2 | -- | 1.34 | B.34 | -- | 1.66 | B.66 | – |
| 1.3 | B.3 | -- | 1.35 | B.35 | -- | 1.67 | B.67 | – |
| 1.4 | B.4 | -- | 1.36 | B.36 | -- | 1.68 | B.68 | – |
| 1.5 | B.5 | -- | 1.37 | B.37 | -- | 1.69 | B.69 | – |
| 1.6 | B.6 | -- | 1.38 | B.38 | -- | 1.70 | B.70 | – |
| 1.7 | B.7 | -- | 1.39 | B.39 | -- | 1.71 | B.71 | – |
| 1.8 | B.8 | -- | 1.40 | B.40 | -- | 1.72 | B.72 | – |
| 1.9 | B.9 | -- | 1.41 | B.41 | -- | 1.73 | B.73 | – |
| 1.10 | B.10 | -- | 1.42 | B.42 | -- | 1.74 | B.74 | – |
| 1.11 | B.11 | -- | 1.43 | B.43 | -- | 1.75 | B.75 | – |
| 1.12 | B.12 | -- | 1.44 | B.44 | -- | 1.76 | B.76 | – |
| 1.13 | B.13 | -- | 1.45 | B.45 | -- | 1.77 | B.77 | – |
| 1.14 | B.14 | -- | 1.46 | B.46 | -- | 1.78 | B.78 | – |
| 1.15 | B.15 | -- | 1.47 | B.47 | -- | 1.79 | B.79 | – |
| 1.16 | B.16 | -- | 1.48 | B.48 | -- | 1.80 | B.80 | – |
| 1.17 | B.17 | -- | 1.49 | B.49 | -- | 1.81 | B.81 | – |
| 1.18 | B.18 | -- | 1.50 | B.50 | -- | 1.82 | B.82 | – |
| 1.19 | B.19 | -- | 1.51 | B.51 | -- | 1.83 | B.83 | – |
| 1.20 | B.20 | -- | 1.52 | B.52 | -- | 1.84 | B.84 | – |
| 1.21 | B.21 | -- | 1.53 | B.53 | -- | 1.85 | B.85 | – |
| 1.22 | B.22 | -- | 1.54 | B.54 | -- | 1.86 | B.86 | — |
| 1.23 | B.23 | -- | 1.55 | B.55 | -- | 1.87 | B.87 | – |
| 1.24 | B.24 | -- | 1.56 | B.56 | -- | 1.88 | B.88 | – |
| 1.25 | B.25 | -- | 1.57 | B.57 | -- | 1.89 | B.89 | – |
| 1.26 | B.26 | -- | 1.58 | B.58. | -- | 1.90 | B.90 | – |
| 1.27 | B.27 | -- | 1.59 | B.59 | -- | 1.91 | B.91 | – |
| 1.28 | B.28 | -- | 1.60 | B.60 | -- | 1.92 | B.92 | – |
| 1.29 | B.29 | -- | 1.61 | B.61 | -- | 1.93 | B.93 | – |
| 1.30 | B.30 | -- | 1.62 | B.62 | -- | 1.94 | B.94 | – |
| 1.31 | B.31 | -- | 1.63 | B.63 | -- | 1.95 | B.95 | – |
| 1.32 | B.32 | -- | 1.64 | B.64 | -- | 1.96 | B.96 | – |

| comp. no. | herbicide B | safener C |
|---|---|---|
| 1.97 | B.97 | -- |
| 1.98 | B.98 | -- |
| 1.99 | B.99 | -- |
| 1.100 | B.100 | -- |
| 1.101 | B.101 | -- |
| 1.102 | B.102 | -- |
| 1.103 | B.103 | -- |
| 1.104 | B.104 | -- |
| 1.105 | B.105 | -- |
| 1.106 | B.106 | -- |
| 1.107 | B.107 | -- |
| 1.108 | B.108 | -- |
| 1.109 | B.109 | -- |
| 1.110 | B.110 | -- |
| 1.111 | B.111 | -- |
| 1.112 | B.112 | -- |
| 1.113 | B.113 | -- |
| 1.114 | B.114 | -- |
| 1.115 | B.115 | -- |
| 1.116 | B.116 | -- |
| 1.117 | B.117 | -- |
| 1.118 | B.118 | -- |
| 1.119 | B.119 | -- |
| 1.120 | B.120 | -- |
| 1.121 | B.121 | -- |
| 1.122 | B.122 | -- |
| 1.123 | B.123 | -- |
| 1.124 | B.124 | -- |
| 1.125 | B.125 | -- |
| 1.126 | B.126 | -- |
| 1.127 | B.127 | -- |
| 1.128 | B.128 | -- |
| 1.129 | B.129 | -- |
| 1.130 | B.130 | -- |
| 1.131 | B.131 | -- |
| 1.132 | B.132 | -- |
| 1.133 | B.133 | -- |
| 1.134 | B.134 | -- |

| comp. no. | herbicide B | safener C |
|---|---|---|
| 1.135 | B.135 | -- |
| 1.136 | B.136 | -- |
| 1.137 | B.137 | -- |
| 1.138 | B.138 | -- |
| 1.139 | B.139 | -- |
| 1.140 | B.140 | -- |
| 1.141 | B.141 | -- |
| 1.142 | B.142 | -- |
| 1.143 | B.143 | -- |
| 1.144 | B.144 | -- |

| comp. no. | herbi-cide B | safe-ner C |
|---|---|---|
| 1.145 | B.1 | C.1 |
| 1.146 | B.2 | C.1 |
| 1.147 | B.3 | C.1 |
| 1.148 | B.4 | C.1 |
| 1.149 | B.5 | C.1 |
| 1.150 | B.6 | C.1 |
| 1.151 | B.7 | C.1 |
| 1.152 | B.8 | C.1 |
| 1.153 | B.9 | C.1 |
| 1.154 | B.10 | C.1 |
| 1.155 | B.11 | C.1 |
| 1.156 | B.12 | C.1 |
| 1.157 | B.13 | C.1 |
| 1.158 | B.14 | C.1 |
| 1.159 | B.15 | C.1 |
| 1.160 | B.16 | C.1 |
| 1.161 | B.17 | C.1 |
| 1.162 | B.18 | C.1 |
| 1.163 | B.19 | C.1 |
| 1.164 | B.20 | C.1 |
| 1.165 | B.21 | C.1 |
| 1.166 | B.22 | C.1 |
| 1.167 | B.23 | C.1 |
| 1.168 | B.24 | C.1 |
| 1.169 | B.25 | C.1 |
| 1.170 | B.26 | C.1 |
| 1.171 | B.27 | C.1 |
| 1.172 | B.28 | C.1 |
| 1.173 | B.29 | C.1 |
| 1.174 | B.30 | C.1 |
| 1.175 | B.31 | C.1 |
| 1.176 | B.32 | C.1 |
| 1.177 | B.33 | C.1 |
| 1.178 | B.34 | C.1 |
| 1.179 | B.35 | C.1 |
| 1.180 | B.36 | C.1 |
| 1.181 | B.37 | C.1 |

| comp. no. | herbi-cide B | safe-ner C |
|---|---|---|
| 1.182 | B.38 | C.1 |
| 1.183 | B.39 | C.1 |
| 1.184 | B.40 | C.1 |
| 1.185 | B.41 | C.1 |
| 1.186 | B.42 | C.1 |
| 1.187 | B.43 | C.1 |
| 1.188 | B.44 | C.1 |
| 1.189 | B.45 | C.1 |
| 1.190 | B.46 | C.1 |
| 1.191 | B.47 | C.1 |
| 1.192 | B.48 | C.1 |
| 1.193 | B.49 | C.1 |
| 1.194 | B.50 | C.1 |
| 1.195 | B.51 | C.1 |
| 1.196 | B.52 | C.1 |
| 1.197 | B.53 | C.1 |
| 1.198 | B.54 | C.1 |
| 1.199 | B.55 | C.1 |
| 1.200 | B.56 | C.1 |
| 1.201 | B.57 | C.1 |
| 1.202 | B.58. | C.1 |
| 1.203 | B.59 | C.1 |
| 1.204 | B.60 | C.1 |
| 1.205 | B.61 | C.1 |
| 1.206 | B.62 | C.1 |
| 1.207 | B.63 | C.1 |
| 1.208 | B.64 | C.1 |
| 1.209 | B.65 | C.1 |
| 1.210 | B.66 | C.1 |
| 1.211 | B.67 | C.1 |
| 1.212 | B.68 | C.1 |
| 1.213 | B.69 | C.1 |
| 1.214 | B.70 | C.1 |
| 1.215 | B.71 | C.1 |
| 1.216 | B.72 | C.1 |
| 1.217 | B.73 | C.1 |
| 1.218 | B.74 | C.1 |
| 1.219 | B.75 | C.1 |

| comp. no. | herbi-cide B | safe-ner C |
|---|---|---|
| 1.220 | B.76 | C.1 |
| 1.221 | B.77 | C.1 |
| 1.222 | B.78 | C.1 |
| 1.223 | B.79 | C.1 |
| 1.224 | B.80 | C.1 |
| 1.225 | B.81 | C.1 |
| 1.226 | B.82 | C.1 |
| 1.227 | B.83 | C.1 |
| 1.228 | B.84 | C.1 |
| 1.229 | B.85 | C.1 |
| 1.230 | B.86 | C.1 |
| 1.231 | B.87 | C.1 |
| 1.232 | B.88 | C.1 |
| 1.233 | B.89 | C.1 |
| 1.234 | B.90 | C.1 |
| 1.235 | B.91 | C.1 |
| 1.236 | B.92 | C.1 |
| 1.237 | B.93 | C.1 |
| 1.238 | B.94 | C.1 |
| 1.239 | B.95 | C.1 |
| 1.240 | B.96 | C.1 |
| 1.241 | B.97 | C.1 |
| 1.242 | B.98 | C.1 |
| 1.243 | B.99 | C.1 |
| 1.244 | B.100 | C.1 |
| 1.245 | B.101 | C.1 |
| 1.246 | B.102 | C.1 |
| 1.247 | B.103 | C.1 |
| 1.248 | B.104 | C.1 |
| 1.249 | B.105 | C.1 |
| 1.250 | B.106 | C.1 |
| 1.251 | B.107 | C.1 |
| 1.252 | B.108 | C.1 |
| 1.253 | B.109 | C.1 |
| 1.254 | B.110 | C.1 |
| 1.255 | B.111 | C.1 |
| 1.256 | B.112 | C.1 |
| 1.257 | B.113 | C.1 |

| comp. no. | herbicide B | safener C |
|---|---|---|
| 1.258 | B.114 | C.1 |
| 1.259 | B.115 | C.1 |
| 1.260 | B.116 | C.1 |
| 1.261 | B.117 | C.1 |
| 1.262 | B.118 | C.1 |
| 1.263 | B.119 | C.1 |
| 1.264 | B.120 | C.1 |
| 1.265 | B.121 | C.1 |
| 1.266 | B.122 | C.1 |
| 1.267 | B.123 | C.1 |
| 1.268 | B.124 | C.1 |
| 1.269 | B.125 | C.1 |
| 1.270 | B.126 | C.1 |
| 1.271 | B.127 | C.1 |
| 1.272 | B.128 | C.1 |
| 1.273 | B.129 | C.1 |
| 1.274 | B.130 | C.1 |
| 1.275 | B.131 | C.1 |
| 1.276 | B.132 | C.1 |
| 1.277 | B.133 | C.1 |
| 1.278 | B.134 | C.1 |
| 1.279 | B.135 | C.1 |
| 1.280 | B.136 | C.1 |
| 1.281 | B.137 | C.1 |
| 1.282 | B.138 | C.1 |
| 1.283 | B.139 | C.1 |
| 1.284 | B.140 | C.1 |
| 1.285 | B.141 | C.1 |
| 1.286 | B.142 | C.1 |
| 1.287 | B.143 | C.1 |
| 1.288 | B.144 | C.1 |

| comp. no. | herbi-cide B | safe-ner C |
|---|---|---|
| 1.289 | B.1 | C.2 |
| 1.290 | B.2 | C.2 |
| 1.291 | B.3 | C.2 |
| 1.292 | B.4 | C.2 |
| 1.293 | B.5 | C.2 |
| 1.294 | B.6 | C.2 |
| 1.295 | B.7 | C.2 |
| 1.296 | B.8 | C.2 |
| 1.297 | B.9 | C.2 |
| 1.298 | B.10 | C.2 |
| 1.299 | B.11 | C.2 |
| 1.300 | B.12 | C.2 |
| 1.301 | B.13 | C.2 |
| 1.302 | B.14 | C.2 |
| 1.303 | B.15 | C.2 |
| 1.304 | B.16 | C.2 |
| 1.305 | B.17 | C.2 |
| 1.306 | B.18 | C.2 |
| 1.307 | B.19 | C.2 |
| 1.308 | B.20 | C.2 |
| 1.309 | B.21 | C.2 |
| 1.310 | B.22 | C.2 |
| 1.311 | B.23 | C.2 |
| 1.312 | B.24 | C.2 |
| 1.313 | B.25 | C.2 |
| 1.314 | B.26 | C.2 |
| 1.315 | B.27 | C.2 |
| 1.316 | B.28 | C.2 |
| 1.317 | B.29 | C.2 |
| 1.318 | B.30 | C.2 |
| 1.319 | B.31 | C.2 |
| 1.320 | B.32 | C.2 |
| 1.321 | B.33 | C.2 |
| 1.322 | B.34 | C.2 |
| 1.323 | B.35 | C.2 |
| 1.324 | B.36 | C.2 |
| 1.325 | B.37 | C.2 |

| comp. no. | herbi-cide B | safe-ner C |
|---|---|---|
| 1.326 | B.38 | C.2 |
| 1.327 | B.39 | C.2 |
| 1.328 | B.40 | C.2 |
| 1.329 | B.41 | C.2 |
| 1.330 | B.42 | C.2 |
| 1.331 | B.43 | C.2 |
| 1.332 | B.44 | C.2 |
| 1.333 | B.45 | C.2 |
| 1.334 | B.46 | C.2 |
| 1.335 | B.47 | C.2 |
| 1.336 | B.48 | C.2 |
| 1.337 | B.49 | C.2 |
| 1.338 | B.50 | C.2 |
| 1.339 | B.51 | C.2 |
| 1.340 | B.52 | C.2 |
| 1.341 | B.53 | C.2 |
| 1.342 | B.54 | C.2 |
| 1.343 | B.55 | C.2 |
| 1.344 | B.56 | C.2 |
| 1.345 | B.57 | C.2 |
| 1.346 | B.58. | C.2 |
| 1.347 | B.59 | C.2 |
| 1.348 | B.60 | C.2 |
| 1.349 | B.61 | C.2 |
| 1.350 | B.62 | C.2 |
| 1.351 | B.63 | C.2 |
| 1.352 | B.64 | C.2 |
| 1.353 | B.65 | C.2 |
| 1.354 | B.66 | C.2 |
| 1.355 | B.67 | C.2 |
| 1.356 | B.68 | C.2 |
| 1.357 | B.69 | C.2 |
| 1.358 | B.70 | C.2 |
| 1.359 | B.71 | C.2 |
| 1.360 | B.72 | C.2 |
| 1.361 | B.73 | C.2 |
| 1.362 | B.74 | C.2 |
| 1.363 | B.75 | C.2 |

| comp. no. | herbi-cide B | safe-ner C |
|---|---|---|
| 1.364 | B.76 | C.2 |
| 1.365 | B.77 | C.2 |
| 1.366 | B.78 | C.2 |
| 1.367 | B.79 | C.2 |
| 1.368 | B.80 | C.2 |
| 1.369 | B.81 | C.2 |
| 1.370 | B.82 | C.2 |
| 1.371 | B.83 | C.2 |
| 1.372 | B.84 | C.2 |
| 1.373 | B.85 | C.2 |
| 1.374 | B.86 | C.2 |
| 1.375 | B.87 | C.2 |
| 1.376 | B.88 | C.2 |
| 1.377 | B.89 | C.2 |
| 1.378 | B.90 | C.2 |
| 1.379 | B.91 | C.2 |
| 1.380 | B.92 | C.2 |
| 1.381 | B.93 | C.2 |
| 1.382 | B.94 | C.2 |
| 1.383 | B.95 | C.2 |
| 1.384 | B.96 | C.2 |
| 1.385 | B.97 | C.2 |
| 1.386 | B.98 | C.2 |
| 1.387 | B.99 | C.2 |
| 1.388 | B.100 | C.2 |
| 1.389 | B.101 | C.2 |
| 1.390 | B.102 | C.2 |
| 1.391 | B.103 | C.2 |
| 1.392 | B.104 | C.2 |
| 1.393 | B.105 | C.2 |
| 1.394 | B.106 | C.2 |
| 1.395 | B.107 | C.2 |
| 1.396 | B.108 | C.2 |
| 1.397 | B.109 | C.2 |
| 1.398 | B.110 | C.2 |
| 1.399 | B.111 | C.2 |
| 1.400 | B.112 | C.2 |
| 1.401 | B.113 | C.2 |

| comp. no. | herbi-cide B | safe-ner C |
|---|---|---|
| 1.402 | B.114 | C.2 |
| 1.403 | B.115 | C.2 |
| 1.404 | B.116 | C.2 |
| 1.405 | B.117 | C.2 |
| 1.406 | B.118 | C.2 |
| 1.407 | B.119 | C.2 |
| 1.408 | B.120 | C.2 |
| 1.409 | B.121 | C.2 |
| 1.410 | B.122 | C.2 |
| 1.411 | B.123 | C.2 |
| 1.412 | B.124 | C.2 |
| 1.413 | B.125 | C.2 |
| 1.414 | B.126 | C.2 |
| 1.415 | B.127 | C.2 |
| 1.416 | B.128 | C.2 |
| 1.417 | B.129 | C.2 |
| 1.418 | B.130 | C.2 |
| 1.419 | B.131 | C.2 |
| 1.420 | B.132 | C.2 |
| 1.421 | B.133 | C.2 |
| 1.422 | B.134 | C.2 |
| 1.423 | B.135 | C.2 |
| 1.424 | B.136 | C.2 |
| 1.425 | B.137 | C.2 |
| 1.426 | B.138 | C.2 |
| 1.427 | B.139 | C.2 |
| 1.428 | B.140 | C.2 |
| 1.429 | B.141 | C.2 |
| 1.430 | B.142 | C.2 |
| 1.431 | B.143 | C.2 |
| 1.432 | B.144 | C.2 |

| comp. no. | herbi-cide B | safe-ner C |
|---|---|---|
| 1.433 | B.1 | C.3 |
| 1.434 | B.2 | C.3 |
| 1.435 | B.3 | C.3 |
| 1.436 | B.4 | C.3 |
| 1.437 | B.5 | C.3 |
| 1.438 | B.6 | C.3 |
| 1.439 | B.7 | C.3 |
| 1.440 | B.8 | C.3 |
| 1.441 | B.9 | C.3 |
| 1.442 | B.10 | C.3 |
| 1.443 | B.11 | C.3 |
| 1.444 | B.12 | C.3 |
| 1.445 | B.13 | C.3 |
| 1.446 | B.14 | C.3 |
| 1.447 | B.15 | C.3 |
| 1.448 | B.16 | C.3 |
| 1.449 | B.17 | C.3 |
| 1.450 | B.18 | C.3 |
| 1.451 | B.19 | C.3 |
| 1.452 | B.20 | C.3 |
| 1.453 | B.21 | C.3 |
| 1.454 | B.22 | C.3 |
| 1.455 | B.23 | C.3 |
| 1.456 | B.24 | C.3 |
| 1.457 | B.25 | C.3 |
| 1.458 | B.26 | C.3 |
| 1.459 | B.27 | C.3 |
| 1.460 | B.28 | C.3 |
| 1.461 | B.29 | C.3 |
| 1.462 | B.30 | C.3 |
| 1.463 | B.31 | C.3 |
| 1.464 | B.32 | C.3 |
| 1.465 | B.33 | C.3 |
| 1.466 | B.34 | C.3 |
| 1.467 | B.35 | C.3 |
| 1.468 | B.36 | C.3 |
| 1.469 | B.37 | C.3 |

| comp. no. | herbi-cide B | safe-ner C |
|---|---|---|
| 1.470 | B.38 | C.3 |
| 1.471 | B.39 | C.3 |
| 1.472 | B.40 | C.3 |
| 1.473 | B.41 | C.3 |
| 1.474 | B.42 | C.3 |
| 1.475 | B.43 | C.3 |
| 1.476 | B.44 | C.3 |
| 1.477 | B.45 | C.3 |
| 1.478 | B.46 | C.3 |
| 1.479 | B.47 | C.3 |
| 1.480 | B.48 | C.3 |
| 1.481 | B.49 | C.3 |
| 1.482 | B.50 | C.3 |
| 1.483 | B.51 | C.3 |
| 1.484 | B.52 | C.3 |
| 1.485 | B.53 | C.3 |
| 1.486 | B.54 | C.3 |
| 1.487 | B.55 | C.3 |
| 1.488 | B.56 | C.3 |
| 1.489 | B.57 | C.3 |
| 1.490 | B.58. | C.3 |
| 1.491 | B.59 | C.3 |
| 1.492 | B.60 | C.3 |
| 1.493 | B.61 | C.3 |
| 1.494 | B.62 | C.3 |
| 1.495 | B.63 | C.3 |
| 1.496 | B.64 | C.3 |
| 1.497 | B.65 | C.3 |
| 1.498 | B.66 | C.3 |
| 1.499 | B.67 | C.3 |
| 1.500 | B.68 | C.3 |
| 1.501 | B.69 | C.3 |
| 1.502 | B.70 | C.3 |
| 1.503 | B.71 | C.3 |
| 1.504 | B.72 | C.3 |
| 1.505 | B.73 | C.3 |
| 1.506 | B.74 | C.3 |
| 1.507 | B.75 | C.3 |

| comp. no. | herbi-cide B | safe-ner C |
|---|---|---|
| 1.508 | B.76 | C.3 |
| 1.509 | B.77 | C.3 |
| 1.510 | B.78 | C.3 |
| 1.511 | B.79 | C.3 |
| 1.512 | B.80 | C.3 |
| 1.513 | B.81 | C.3 |
| 1.514 | B.82 | C.3 |
| 1.515 | B.83 | C.3 |
| 1.516 | B.84 | C.3 |
| 1.517 | B.85 | C.3 |
| 1.518 | B.86 | C.3 |
| 1.519 | B.87 | C.3 |
| 1.520 | B.88 | C.3 |
| 1.521 | B.89 | C.3 |
| 1.522 | B.90 | C.3 |
| 1.523 | B.91 | C.3 |
| 1.524 | B.92 | C.3 |
| 1.525 | B.93 | C.3 |
| 1.526 | B.94 | C.3 |
| 1.527 | B.95 | C.3 |
| 1.528 | B.96 | C.3 |
| 1.529 | B.97 | C.3 |
| 1.530 | B.98 | C.3 |
| 1.531 | B.99 | C.3 |
| 1.532 | B.100 | C.3 |
| 1.533 | B.101 | C.3 |
| 1.534 | B.102 | C.3 |
| 1.535 | B.103 | C.3 |
| 1.536 | B.104 | C.3 |
| 1.537 | B.105 | C.3 |
| 1.538 | B.106 | C.3 |
| 1.539 | B.107 | C.3 |
| 1.540 | B.108 | C.3 |
| 1.541 | B.109 | C.3 |
| 1.542 | B.110 | C.3 |
| 1.543 | B.111 | C.3 |
| 1.544 | B.112 | C.3 |
| 1.545 | B.113 | C.3 |

| comp. no. | herbicide B | safener C |
|---|---|---|
| 1.546 | B.114 | C.3 |
| 1.547 | B.115 | C.3 |
| 1.548 | B.116 | C.3 |
| 1.549 | B.117 | C.3 |
| 1.550 | B.118 | C.3 |
| 1.551 | B.119 | C.3 |
| 1.552 | B.120 | C.3 |
| 1.553 | B.121 | C.3 |
| 1.554 | B.122 | C.3 |
| 1.555 | B.123 | C.3 |
| 1.556 | B.124 | C.3 |
| 1.557 | B.125 | C.3 |
| 1.558 | B.126 | C.3 |
| 1.559 | B.127 | C.3 |
| 1.560 | B.128 | C.3 |
| 1.561 | B.129 | C.3 |
| 1.562 | B.130 | C.3 |
| 1.563 | B.131 | C.3 |
| 1.564 | B.132 | C.3 |
| 1.565 | B.133 | C.3 |
| 1.566 | B.134 | C.3 |
| 1.567 | B.135 | C.3 |
| 1.568 | B.136 | C.3 |
| 1.569 | B.137 | C.3 |
| 1.570 | B.138 | C.3 |
| 1.571 | B.139 | C.3 |
| 1.572 | B.140 | C.3 |
| 1.573 | B.141 | C.3 |
| 1.574 | B.142 | C.3 |
| 1.575 | B.143 | C.3 |
| 1.576 | B.144 | C.3 |

| comp. no. | herbicide B | safener C |
|---|---|---|
| 1.577 | B.1 | C.4 |
| 1.578 | B.2 | C.4 |
| 1.579 | B.3 | C.4 |
| 1.580 | B.4 | C.4 |
| 1.581 | B.5 | C.4 |
| 1.582 | B.6 | C.4 |
| 1.583 | B.7 | C.4 |
| 1.584 | B.8 | C.4 |
| 1.585 | B.9 | C.4 |
| 1.586 | B.10 | C.4 |
| 1.587 | B.11 | C.4 |
| 1.588 | B.12 | C.4 |
| 1.589 | B.13 | C.4 |
| 1.590 | B.14 | C.4 |
| 1.591 | B.15 | C.4 |
| 1.592 | B.16 | C.4 |
| 1.593 | B.17 | C.4 |
| 1.594 | B.18 | C.4 |
| 1.595 | B.19 | C.4 |
| 1.596 | B.20 | C.4 |
| 1.597 | B.21 | C.4 |
| 1.598 | B.22 | C.4 |
| 1.599 | B.23 | C.4 |
| 1.600 | B.24 | C.4 |
| 1.601 | B.25 | C.4 |
| 1.602 | B.26 | C.4 |
| 1.603 | B.27 | C.4 |
| 1.604 | B.28 | C.4 |
| 1.605 | B.29 | C.4 |
| 1.606 | B.30 | C.4 |
| 1.607 | B.31 | C.4 |
| 1.608 | B.32 | C.4 |
| 1.609 | B.33 | C.4 |
| 1.610 | B.34 | C.4 |
| 1.611 | B.35 | C.4 |
| 1.612 | B.36 | C.4 |
| 1.613 | B.37 | C.4 |

| comp. no. | herbicide B | safener C |
|---|---|---|
| 1.614 | B.38 | C.4 |
| 1.615 | B.39 | C.4 |
| 1.616 | B.40 | C.4 |
| 1.617 | B.41 | C.4 |
| 1.618 | B.42 | C.4 |
| 1.619 | B.43 | C.4 |
| 1.620 | B.44 | C.4 |
| 1.621 | B.45 | C.4 |
| 1.622 | B.46 | C.4 |
| 1.623 | B.47 | C.4 |
| 1.624 | B.48 | C.4 |
| 1.625 | B.49 | C.4 |
| 1.626 | B.50 | C.4 |
| 1.627 | B.51 | C.4 |
| 1.628 | B.52 | C.4 |
| 1.629 | B.53 | C.4 |
| 1.630 | B.54 | C.4 |
| 1.631 | B.55 | C.4 |
| 1.632 | B.56 | C.4 |
| 1.633 | B.57 | C.4 |
| 1.634 | B.58. | C.4 |
| 1.635 | B.59 | C.4 |
| 1.636 | B.60 | C.4 |
| 1.637 | B.61 | C.4 |
| 1.638 | B.62 | C.4 |
| 1.639 | B.63 | C.4 |
| 1.640 | B.64 | C.4 |
| 1.641 | B.65 | C.4 |
| 1.642 | B.66 | C.4 |
| 1.643 | B.67 | C.4 |
| 1.644 | B.68 | C.4 |
| 1.645 | B.69 | C.4 |
| 1.646 | B.70 | C.4 |
| 1.647 | B.71 | C.4 |
| 1.648 | B.72 | C.4 |
| 1.649 | B.73 | C.4 |
| 1.650 | B.74 | C.4 |
| 1.651 | B.75 | C.4 |

| comp. no. | herbicide B | safener C |
|---|---|---|
| 1.652 | B.76 | C.4 |
| 1.653 | B.77 | C.4 |
| 1.654 | B.78 | C.4 |
| 1.655 | B.79 | C.4 |
| 1.656 | B.80 | C.4 |
| 1.657 | B.81 | C.4 |
| 1.658 | B.82 | C.4 |
| 1.659 | B.83 | C.4 |
| 1.660 | B.84 | C.4 |
| 1.661 | B.85 | C.4 |
| 1.662 | B.86 | C.4 |
| 1.663 | B.87 | C.4 |
| 1.664 | B.88 | C.4 |
| 1.665 | B.89 | C.4 |
| 1.666 | B.90 | C.4 |
| 1.667 | B.91 | C.4 |
| 1.668 | B.92 | C.4 |
| 1.669 | B.93 | C.4 |
| 1.670 | B.94 | C.4 |
| 1.671 | B.95 | C.4 |
| 1.672 | B.96 | C.4 |
| 1.673 | B.97 | C.4 |
| 1.674 | B.98 | C.4 |
| 1.675 | B.99 | C.4 |
| 1.676 | B.100 | C.4 |
| 1.677 | B.101 | C.4 |
| 1.678 | B.102 | C.4 |
| 1.679 | B.103 | C.4 |
| 1.680 | B.104 | C.4 |
| 1.681 | B.105 | C.4 |
| 1.682 | B.106 | C.4 |
| 1.683 | B.107 | C.4 |
| 1.684 | B.108 | C.4 |
| 1.685 | B.109 | C.4 |
| 1.686 | B.110 | C.4 |
| 1.687 | B.111 | C.4 |
| 1.688 | B.112 | C.4 |
| 1.689 | B.113 | C.4 |

| comp. no. | herbi-cide B | safe-ner C |
|---|---|---|
| 1.690 | B.114 | C.4 |
| 1.691 | B.115 | C.4 |
| 1.692 | B.116 | C.4 |
| 1.693 | B.117 | C.4 |
| 1.694 | B.118 | C.4 |
| 1.695 | B.119 | C.4 |
| 1.696 | B.120 | C.4 |
| 1.697 | B.121 | C.4 |
| 1.698 | B.122 | C.4 |
| 1.699 | B.123 | C.4 |
| 1.700 | B.124 | C.4 |
| 1.701 | B.125 | C.4 |
| 1.702 | B.126 | C.4 |
| 1.703 | B.127 | C.4 |
| 1.704 | B.128 | C.4 |
| 1.705 | B.129 | C.4 |
| 1.706 | B.130 | C.4 |
| 1.707 | B.131 | C.4 |
| 1.708 | B.132 | C.4 |
| 1.709 | B.133 | C.4 |
| 1.710 | B.134 | C.4 |
| 1.711 | B.135 | C.4 |
| 1.712 | B.136 | C.4 |
| 1.713 | B.137 | C.4 |
| 1.714 | B.138 | C.4 |
| 1.715 | B.139 | C.4 |
| 1.716 | B.140 | C.4 |
| 1.717 | B.141 | C.4 |
| 1.718 | B.142 | C.4 |
| 1.719 | B.143 | C.4 |
| 1.720 | B.144 | C.4 |

| comp. no. | herbi-cide B | safe-ner C |
|---|---|---|
| 1.721 | B.1 | C.5 |
| 1.722 | B.2 | C.5 |
| 1.723 | B.3 | C.5 |
| 1.724 | B.4 | C.5 |
| 1.725 | B.5 | C.5 |
| 1.726 | B.6 | C.5 |
| 1.727 | B.7 | C.5 |
| 1.728 | B.8 | C.5 |
| 1.729 | B.9 | C.5 |
| 1.730 | B.10 | C.5 |
| 1.731 | B.11 | C.5 |
| 1.732 | B.12 | C.5 |
| 1.733 | B.13 | C.5 |
| 1.734 | B.14 | C.5 |
| 1.735 | B.15 | C.5 |
| 1.736 | B.16 | C.5 |
| 1.737 | B.17 | C.5 |
| 1.738 | B.18 | C.5 |
| 1.739 | B.19 | C.5 |
| 1.740 | B.20 | C.5 |
| 1.741 | B.21 | C.5 |
| 1.742 | B.22 | C.5 |
| 1.743 | B.23 | C.5 |
| 1.744 | B.24 | C.5 |
| 1.745 | B.25 | C.5 |
| 1.746 | B.26 | C.5 |
| 1.747 | B.27 | C.5 |
| 1.748 | B.28 | C.5 |
| 1.749 | B.29 | C.5 |
| 1.750 | B.30 | C.5 |
| 1.751 | B.31 | C.5 |
| 1.752 | B.32 | C.5 |
| 1.753 | B.33 | C.5 |
| 1.754 | B.34 | C.5 |
| 1.755 | B.35 | C.5 |
| 1.756 | B.36 | C.5 |
| 1.757 | B.37 | C.5 |

| comp. no. | herbi-cide B | safe-ner C |
|---|---|---|
| 1.758 | B.38 | C.5 |
| 1.759 | B.39 | C.5 |
| 1.760 | B.40 | C.5 |
| 1.761 | B.41 | C.5 |
| 1.762 | B.42 | C.5 |
| 1.763 | B.43 | C.5 |
| 1.764 | B.44 | C.5 |
| 1.765 | B.45 | C.5 |
| 1.766 | B.46 | C.5 |
| 1.767 | B.47 | C.5 |
| 1.768 | B.48 | C.5 |
| 1.769 | B.49 | C.5 |
| 1.770 | B.50 | C.5 |
| 1.771 | B.51 | C.5 |
| 1.772 | B.52 | C.5 |
| 1.773 | B.53 | C.5 |
| 1.774 | B.54 | C.5 |
| 1.775 | B.55 | C.5 |
| 1.776 | B.56 | C.5 |
| 1.777 | B.57 | C.5 |
| 1.778 | B.58. | C.5 |
| 1.779 | B.59 | C.5 |
| 1.780 | B.60 | C.5 |
| 1.781 | B.61 | C.5 |
| 1.782 | B.62 | C.5 |
| 1.783 | B.63 | C.5 |
| 1.784 | B.64 | C.5 |
| 1.785 | B.65 | C.5 |
| 1.786 | B.66 | C.5 |
| 1.787 | B.67 | C.5 |
| 1.788 | B.68 | C.5 |
| 1.789 | B.69 | C.5 |
| 1.790 | B.70 | C.5 |
| 1.791 | B.71 | C.5 |
| 1.792 | B.72 | C.5 |
| 1.793 | B.73 | C.5 |
| 1.794 | B.74 | C.5 |
| 1.795 | B.75 | C.5 |

| comp. no. | herbi-cide B | safe-ner C |
|---|---|---|
| 1.796 | B.76 | C.5 |
| 1.797 | B.77 | C.5 |
| 1.798 | B.78 | C.5 |
| 1.799 | B.79 | C.5 |
| 1.800 | B.80 | C.5 |
| 1.801 | B.81 | C.5 |
| 1.802 | B.82 | C.5 |
| 1.803 | B.83 | C.5 |
| 1.804 | B.84 | C.5 |
| 1.805 | B.85 | C.5 |
| 1.806 | B.86 | C.5 |
| 1.807 | B.87 | C.5 |
| 1.808 | B.88 | C.5 |
| 1.809 | B.89 | C.5 |
| 1.810 | B.90 | C.5 |
| 1.811 | B.91 | C.5 |
| 1.812 | B.92 | C.5 |
| 1.813 | B.93 | C.5 |
| 1.814 | B.94 | C.5 |
| 1.815 | B.95 | C.5 |
| 1.816 | B.96 | C.5 |
| 1.817 | B.97 | C.5 |
| 1.818 | B.98 | C.5 |
| 1.819 | B.99 | C.5 |
| 1.820 | B.100 | C.5 |
| 1.821 | B.101 | C.5 |
| 1.822 | B.102 | C.5 |
| 1.823 | B.103 | C.5 |
| 1.824 | B.104 | C.5 |
| 1.825 | B.105 | C.5 |
| 1.826 | B.106 | C.5 |
| 1.827 | B.107 | C.5 |
| 1.828 | B.108 | C.5 |
| 1.829 | B.109 | C.5 |
| 1.830 | B.110 | C.5 |
| 1.831 | B.111 | C.5 |
| 1.832 | B.112 | C.5 |
| 1.833 | B.113 | C.5 |

| comp. no. | herbicide B | safener C |
|---|---|---|
| 1.834 | B.114 | C.5 |
| 1.835 | B.115 | C.5 |
| 1.836 | B.116 | C.5 |
| 1.837 | B.117 | C.5 |
| 1.838 | B.118 | C.5 |
| 1.839 | B.119 | C.5 |
| 1.840 | B.120 | C.5 |
| 1.841 | B.121 | C.5 |
| 1.842 | B.122 | C.5 |
| 1.843 | B.123 | C.5 |
| 1.844 | B.124 | C.5 |
| 1.845 | B.125 | C.5 |
| 1.846 | B.126 | C.5 |
| 1.847 | B.127 | C.5 |
| 1.848 | B.128 | C.5 |
| 1.849 | B.129 | C.5 |
| 1.850 | B.130 | C.5 |
| 1.851 | B.131 | C.5 |
| 1.852 | B.132 | C.5 |
| 1.853 | B.133 | C.5 |
| 1.854 | B.134 | C.5 |
| 1.855 | B.135 | C.5 |
| 1.856 | B.136 | C.5 |
| 1.857 | B.137 | C.5 |
| 1.858 | B.138 | C.5 |
| 1.859 | B.139 | C.5 |
| 1.860 | B.140 | C.5 |
| 1.861 | B.141 | C.5 |
| 1.862 | B.142 | C.5 |
| 1.863 | B.143 | C.5 |
| 1.864 | B.144 | C.5 |

| comp. no. | herbicide B | safener C |
|---|---|---|
| 1.865 | B.1 | C.6 |
| 1.866 | B.2 | C.6 |
| 1.867 | B.3 | C.6 |
| 1.868 | B.4 | C.6 |
| 1.869 | B.5 | C.6 |
| 1.870 | B.6 | C.6 |
| 1.871 | B.7 | C.6 |
| 1.872 | B.8 | C.6 |
| 1.873 | B.9 | C.6 |
| 1.874 | B.10 | C.6 |
| 1.875 | B.11 | C.6 |
| 1.876 | B.12 | C.6 |
| 1.877 | B.13 | C.6 |
| 1.878 | B.14 | C.6 |
| 1.879 | B.15 | C.6 |
| 1.880 | B.16 | C.6 |
| 1.881 | B.17 | C.6 |
| 1.882 | B.18 | C.6 |
| 1.883 | B.19 | C.6 |
| 1.884 | B.20 | C.6 |
| 1.885 | B.21 | C.6 |
| 1.886 | B.22 | C.6 |
| 1.887 | B.23 | C.6 |
| 1.888 | B.24 | C.6 |
| 1.889 | B.25 | C.6 |
| 1.890 | B.26 | C.6 |
| 1.891 | B.27 | C.6 |
| 1.892 | B.28 | C.6 |
| 1.893 | B.29 | C.6 |
| 1.894 | B.30 | C.6 |
| 1.895 | B.31 | C.6 |
| 1.896 | B.32 | C.6 |
| 1.897 | B.33 | C.6 |
| 1.898 | B.34 | C.6 |
| 1.899 | B.35 | C.6 |
| 1.900 | B.36 | C.6 |
| 1.901 | B.37 | C.6 |
| 1.902 | B.38 | C.6 |
| 1.903 | B.39 | C.6 |
| 1.904 | B.40 | C.6 |
| 1.905 | B.41 | C.6 |
| 1.906 | B.42 | C.6 |
| 1.907 | B.43 | C.6 |
| 1.908 | B.44 | C.6 |
| 1.909 | B.45 | C.6 |
| 1.910 | B.46 | C.6 |
| 1.911 | B.47 | C.6 |
| 1.912 | B.48 | C.6 |
| 1.913 | B.49 | C.6 |
| 1.914 | B.50 | C.6 |
| 1.915 | B.51 | C.6 |
| 1.916 | B.52 | C.6 |
| 1.917 | B.53 | C.6 |
| 1.918 | B.54 | C.6 |
| 1.919 | B.55 | C.6 |
| 1.920 | B.56 | C.6 |
| 1.921 | B.57 | C.6 |
| 1.922 | B.58. | C.6 |
| 1.923 | B.59 | C.6 |
| 1.924 | B.60 | C.6 |
| 1.925 | B.61 | C.6 |
| 1.926 | B.62 | C.6 |
| 1.927 | B.63 | C.6 |
| 1.928 | B.64 | C.6 |
| 1.929 | B.65 | C.6 |
| 1.930 | B.66 | C.6 |
| 1.931 | B.67 | C.6 |
| 1.932 | B.68 | C.6 |
| 1.933 | B.69 | C.6 |
| 1.934 | B.70 | C.6 |
| 1.935 | B.71 | C.6 |
| 1.936 | B.72 | C.6 |
| 1.937 | B.73 | C.6 |
| 1.938 | B.74 | C.6 |
| 1.939 | B.75 | C.6 |
| 1.940 | B.76 | C.6 |
| 1.941 | B.77 | C.6 |
| 1.942 | B.78 | C.6 |
| 1.943 | B.79 | C.6 |
| 1.944 | B.80 | C.6 |
| 1.945 | B.81 | C.6 |
| 1.946 | B.82 | C.6 |
| 1.947 | B.83 | C.6 |
| 1.948 | B.84 | C.6 |
| 1.949 | B.85 | C.6 |
| 1.950 | B.86 | C.6 |
| 1.951 | B.87 | C.6 |
| 1.952 | B.88 | C.6 |
| 1.953 | B.89 | C.6 |
| 1.954 | B.90 | C.6 |
| 1.955 | B.91 | C.6 |
| 1.956 | B.92 | C.6 |
| 1.957 | B.93 | C.6 |
| 1.958 | B.94 | C.6 |
| 1.959 | B.95 | C.6 |
| 1.960 | B.96 | C.6 |
| 1.961 | B.97 | C.6 |
| 1.962 | B.98 | C.6 |
| 1.963 | B.99 | C.6 |
| 1.964 | B.100 | C.6 |
| 1.965 | B.101 | C.6 |
| 1.966 | B.102 | C.6 |
| 1.967 | B.103 | C.6 |
| 1.968 | B.104 | C.6 |
| 1.969 | B.105 | C.6 |
| 1.970 | B.106 | C.6 |
| 1.971 | B.107 | C.6 |
| 1.972 | B.108 | C.6 |
| 1.973 | B.109 | C.6 |
| 1.974 | B.110 | C.6 |
| 1.975 | B.111 | C.6 |
| 1.976 | B.112 | C.6 |
| 1.977 | B.113 | C.6 |

| comp. no. | herbicide B | safener C |
|---|---|---|
| 1.978 | B.114 | C.6 |
| 1.979 | B.115 | C.6 |
| 1.980 | B.116 | C.6 |
| 1.981 | B.117 | C.6 |
| 1.982 | B.118 | C.6 |
| 1.983 | B.119 | C.6 |
| 1.984 | B.120 | C.6 |
| 1.985 | B.121 | C.6 |
| 1.986 | B.122 | C.6 |
| 1.987 | B.123 | C.6 |
| 1.988 | B.124 | C.6 |
| 1.989 | B.125 | C.6 |
| 1.990 | B.126 | C.6 |
| 1.991 | B.127 | C.6 |
| 1.992 | B.128 | C.6 |
| 1.993 | B.129 | C.6 |
| 1.994 | B.130 | C.6 |
| 1.995 | B.131 | C.6 |
| 1.996 | B.132 | C.6 |
| 1.997 | B.133 | C.6 |
| 1.998 | B.134 | C.6 |
| 1.999 | B.135 | C.6 |
| 1.1000 | B.136 | C.6 |
| 1.1001 | B.137 | C.6 |
| 1.1002 | B.138 | C.6 |
| 1.1003 | B.139 | C.6 |
| 1.1004 | B.140 | C.6 |
| 1.1005 | B.141 | C.6 |
| 1.1006 | B.142 | C.6 |
| 1.1007 | B.143 | C.6 |
| 1.1008 | B.144 | C.6 |

| comp. no. | herbicide B | safener C |
|---|---|---|
| 1.1009 | B.1 | C.7 |
| 1.1010 | B.2 | C.7 |
| 1.1011 | B.3 | C.7 |
| 1.1012 | B.4 | C.7 |
| 1.1013 | B.5 | C.7 |
| 1.1014 | B.6 | C.7 |
| 1.1015 | B.7 | C.7 |
| 1.1016 | B.8 | C.7 |
| 1.1017 | B.9 | C.7 |
| 1.1018 | B.10 | C.7 |
| 1.1019 | B.11 | C.7 |
| 1.1020 | B.12 | C.7 |
| 1.1021 | B.13 | C.7 |
| 1.1022 | B.14 | C.7 |
| 1.1023 | B.15 | C.7 |
| 1.1024 | B.16 | C.7 |
| 1.1025 | B.17 | C.7 |
| 1.1026 | B.18 | C.7 |
| 1.1027 | B.19 | C.7 |
| 1.1028 | B.20 | C.7 |
| 1.1029 | B.21 | C.7 |
| 1.1030 | B.22 | C.7 |
| 1.1031 | B.23 | C.7 |
| 1.1032 | B.24 | C.7 |
| 1.1033 | B.25 | C.7 |
| 1.1034 | B.26 | C.7 |
| 1.1035 | B.27 | C.7 |
| 1.1036 | B.28 | C.7 |
| 1.1037 | B.29 | C.7 |
| 1.1038 | B.30 | C.7 |
| 1.1039 | B.31 | C.7 |
| 1.1040 | B.32 | C.7 |
| 1.1041 | B.33 | C.7 |
| 1.1042 | B.34 | C.7 |
| 1.1043 | B.35 | C.7 |
| 1.1044 | B.36 | C.7 |
| 1.1045 | B.37 | C.7 |

| comp. no. | herbicide B | safener C |
|---|---|---|
| 1.1046 | B.38 | C.7 |
| 1.1047 | B.39 | C.7 |
| 1.1048 | B.40 | C.7 |
| 1.1049 | B.41 | C.7 |
| 1.1050 | B.42 | C.7 |
| 1.1051 | B.43 | C.7 |
| 1.1052 | B.44 | C.7 |
| 1.1053 | B.45 | C.7 |
| 1.1054 | B.46 | C.7 |
| 1.1055 | B.47 | C.7 |
| 1.1056 | B.48 | C.7 |
| 1.1057 | B.49 | C.7 |
| 1.1058 | B.50 | C.7 |
| 1.1059 | B.51 | C.7 |
| 1.1060 | B.52 | C.7 |
| 1.1061 | B.53 | C.7 |
| 1.1062 | B.54 | C.7 |
| 1.1063 | B.55 | C.7 |
| 1.1064 | B.56 | C.7 |
| 1.1065 | B.57 | C.7 |
| 1.1066 | B.58. | C.7 |
| 1.1067 | B.59 | C.7 |
| 1.1068 | B.60 | C.7 |
| 1.1069 | B.61 | C.7 |
| 1.1070 | B.62 | C.7 |
| 1.1071 | B.63 | C.7 |
| 1.1072 | B.64 | C.7 |
| 1.1073 | B.65 | C.7 |
| 1.1074 | B.66 | C.7 |
| 1.1075 | B.67 | C.7 |
| 1.1076 | B.68 | C.7 |
| 1.1077 | B.69 | C.7 |
| 1.1078 | B.70 | C.7 |
| 1.1079 | B.71 | C.7 |
| 1.1080 | B.72 | C.7 |
| 1.1081 | B.73 | C.7 |
| 1.1082 | B.74 | C.7 |
| 1.1083 | B.75 | C.7 |

| comp. no. | herbicide B | safener C |
|---|---|---|
| 1.1084 | B.76 | C.7 |
| 1.1085 | B.77 | C.7 |
| 1.1086 | B.78 | C.7 |
| 1.1087 | B.79 | C.7 |
| 1.1088 | B.80 | C.7 |
| 1.1089 | B.81 | C.7 |
| 1.1090 | B.82 | C.7 |
| 1.1091 | B.83 | C.7 |
| 1.1092 | B.84 | C.7 |
| 1.1093 | B.85 | C.7 |
| 1.1094 | B.86 | C.7 |
| 1.1095 | B.87 | C.7 |
| 1.1096 | B.88 | C.7 |
| 1.1097 | B.89 | C.7 |
| 1.1098 | B.90 | C.7 |
| 1.1099 | B.91 | C.7 |
| 1.1100 | B.92 | C.7 |
| 1.1101 | B.93 | C.7 |
| 1.1102 | B.94 | C.7 |
| 1.1103 | B.95 | C.7 |
| 1.1104 | B.96 | C.7 |
| 1.1105 | B.97 | C.7 |
| 1.1106 | B.98 | C.7 |
| 1.1107 | B.99 | C.7 |
| 1.1108 | B.100 | C.7 |
| 1.1109 | B.101 | C.7 |
| 1.1110 | B.102 | C.7 |
| 1.1111 | B.103 | C.7 |
| 1.1112 | B.104 | C.7 |
| 1.1113 | B.105 | C.7 |
| 1.1114 | B.106 | C.7 |
| 1.1115 | B.107 | C.7 |
| 1.1116 | B.108 | C.7 |
| 1.1117 | B.109 | C.7 |
| 1.1118 | B.110 | C.7 |
| 1.1119 | B.111 | C.7 |
| 1.1120 | B.112 | C.7 |
| 1.1121 | B.113 | C.7 |

| comp. no. | herbicide B | safener C |
|---|---|---|
| 1.1122 | B.114 | C.7 |
| 1.1123 | B.115 | C.7 |
| 1.1124 | B.116 | C.7 |
| 1.1125 | B.117 | C.7 |
| 1.1126 | B.118 | C.7 |
| 1.1127 | B.119 | C.7 |
| 1.1128 | B.120 | C.7 |
| 1.1129 | B.121 | C.7 |
| 1.1130 | B.122 | C.7 |
| 1.1131 | B.123 | C.7 |
| 1.1132 | B.124 | C.7 |
| 1.1133 | B.125 | C.7 |
| 1.1134 | B.126 | C.7 |
| 1.1135 | B.127 | C.7 |
| 1.1136 | B.128 | C.7 |
| 1.1137 | B.129 | C.7 |
| 1.1138 | B.130 | C.7 |
| 1.1139 | B.131 | C.7 |
| 1.1140 | B.132 | C.7 |
| 1.1141 | B.133 | C.7 |
| 1.1142 | B.134 | C.7 |
| 1.1143 | B.135 | C.7 |
| 1.1144 | B.136 | C.7 |
| 1.1145 | B.137 | C.7 |
| 1.1146 | B.138 | C.7 |
| 1.1147 | B.139 | C.7 |
| 1.1148 | B.140 | C.7 |
| 1.1149 | B.141 | C.7 |
| 1.1150 | B.142 | C.7 |
| 1.1151 | B.143 | C.7 |
| 1.1152 | B.144 | C.7 |

| comp. no. | herbicide B | safener C |
|---|---|---|
| 1.1153 | B.1 | C.8 |
| 1.1154 | B.2 | C.8 |
| 1.1155 | B.3 | C.8 |
| 1.1156 | B.4 | C.8 |
| 1.1157 | B.5 | C.8 |
| 1.1158 | B.6 | C.8 |
| 1.1159 | B.7 | C.8 |
| 1.1160 | B.8 | C.8 |
| 1.1161 | B.9 | C.8 |
| 1.1162 | B.10 | C.8 |
| 1.1163 | B.11 | C.8 |
| 1.1164 | B.12 | C.8 |
| 1.1165 | B.13 | C.8 |
| 1.1166 | B.14 | C.8 |
| 1.1167 | B.15 | C.8 |
| 1.1168 | B.16 | C.8 |
| 1.1169 | B.17 | C.8 |
| 1.1170 | B.18 | C.8 |
| 1.1171 | B.19 | C.8 |
| 1.1172 | B.20 | C.8 |
| 1.1173 | B.21 | C.8 |
| 1.1174 | B.22 | C.8 |
| 1.1175 | B.23 | C.8 |
| 1.1176 | B.24 | C.8 |
| 1.1177 | B.25 | C.8 |
| 1.1178 | B.26 | C.8 |
| 1.1179 | B.27 | C.8 |
| 1.1180 | B.28 | C.8 |
| 1.1181 | B.29 | C.8 |
| 1.1182 | B.30 | C.8 |
| 1.1183 | B.31 | C.8 |
| 1.1184 | B.32 | C.8 |
| 1.1185 | B.33 | C.8 |
| 1.1186 | B.34 | C.8 |
| 1.1187 | B.35 | C.8 |
| 1.1188 | B.36 | C.8 |
| 1.1189 | B.37 | C.8 |

| comp. no. | herbicide B | safener C |
|---|---|---|
| 1.1190 | B.38 | C.8 |
| 1.1191 | B.39 | C.8 |
| 1.1192 | B.40 | C.8 |
| 1.1193 | B.41 | C.8 |
| 1.1194 | B.42 | C.8 |
| 1.1195 | B.43 | C.8 |
| 1.1196 | B.44 | C.8 |
| 1.1197 | B.45 | C.8 |
| 1.1198 | B.46 | C.8 |
| 1.1199 | B.47 | C.8 |
| 1.1200 | B.48 | C.8 |
| 1.1201 | B.49 | C.8 |
| 1.1202 | B.50 | C.8 |
| 1.1203 | B.51 | C.8 |
| 1.1204 | B.52 | C.8 |
| 1.1205 | B.53 | C.8 |
| 1.1206 | B.54 | C.8 |
| 1.1207 | B.55 | C.8 |
| 1.1208 | B.56 | C.8 |
| 1.1209 | B.57 | C.8 |
| 1.1210 | B.58. | C.8 |
| 1.1211 | B.59 | C.8 |
| 1.1212 | B.60 | C.8 |
| 1.1213 | B.61 | C.8 |
| 1.1214 | B.62 | C.8 |
| 1.1215 | B.63 | C.8 |
| 1.1216 | B.64 | C.8 |
| 1.1217 | B.65 | C.8 |
| 1.1218 | B.66 | C.8 |
| 1.1219 | B.67 | C.8 |
| 1.1220 | B.68 | C.8 |
| 1.1221 | B.69 | C.8 |
| 1.1222 | B.70 | C.8 |
| 1.1223 | B.71 | C.8 |
| 1.1224 | B.72 | C.8 |
| 1.1225 | B.73 | C.8 |
| 1.1226 | B.74 | C.8 |
| 1.1227 | B.75 | C.8 |

| comp. no. | herbicide B | safener C |
|---|---|---|
| 1.1228 | B.76 | C.8 |
| 1.1229 | B.77 | C.8 |
| 1.1230 | B.78 | C.8 |
| 1.1231 | B.79 | C.8 |
| 1.1232 | B.80 | C.8 |
| 1.1233 | B.81 | C.8 |
| 1.1234 | B.82 | C.8 |
| 1.1235 | B.83 | C.8 |
| 1.1236 | B.84 | C.8 |
| 1.1237 | B.85 | C.8 |
| 1.1238 | B.86 | C.8 |
| 1.1239 | B.87 | C.8 |
| 1.1240 | B.88 | C.8 |
| 1.1241 | B.89 | C.8 |
| 1.1242 | B.90 | C.8 |
| 1.1243 | B.91 | C.8 |
| 1.1244 | B.92 | C.8 |
| 1.1245 | B.93 | C.8 |
| 1.1246 | B.94 | C.8 |
| 1.1247 | B.95 | C.8 |
| 1.1248 | B.96 | C.8 |
| 1.1249 | B.97 | C.8 |
| 1.1250 | B.98 | C.8 |
| 1.1251 | B.99 | C.8 |
| 1.1252 | B.100 | C.8 |
| 1.1253 | B.101 | C.8 |
| 1.1254 | B.102 | C.8 |
| 1.1255 | B.103 | C.8 |
| 1.1256 | B.104 | C.8 |
| 1.1257 | B.105 | C.8 |
| 1.1258 | B.106 | C.8 |
| 1.1259 | B.107 | C.8 |
| 1.1260 | B.108 | C.8 |
| 1.1261 | B.109 | C.8 |
| 1.1262 | B.110 | C.8 |
| 1.1263 | B.111 | C.8 |
| 1.1264 | B.112 | C.8 |
| 1.1265 | B.113 | C.8 |

| comp. no. | herbi-cide B | safe-ner C |
|---|---|---|
| 1.1266 | B.114 | C.8 |
| 1.1267 | B.115 | C.8 |
| 1.1268 | B.116 | C.8 |
| 1.1269 | B.117 | C.8 |
| 1.1270 | B.118 | C.8 |
| 1.1271 | B.119 | C.8 |
| 1.1272 | B.120 | C.8 |
| 1.1273 | B.121 | C.8 |
| 1.1274 | B.122 | C.8 |
| 1.1275 | B.123 | C.8 |
| 1.1276 | B.124 | C.8 |
| 1.1277 | B.125 | C.8 |
| 1.1278 | B.126 | C.8 |
| 1.1279 | B.127 | C.8 |
| 1.1280 | B.128 | C.8 |
| 1.1281 | B.129 | C.8 |
| 1.1282 | B.130 | C.8 |
| 1.1283 | B.131 | C.8 |
| 1.1284 | B.132 | C.8 |
| 1.1285 | B.133 | C.8 |
| 1.1286 | B.134 | C.8 |
| 1.1287 | B.135 | C.8 |
| 1.1288 | B.136 | C.8 |
| 1.1289 | B.137 | C.8 |
| 1.1290 | B.138 | C.8 |
| 1.1291 | B.139 | C.8 |
| 1.1292 | B.140 | C.8 |
| 1.1293 | B.141 | C.8 |
| 1.1294 | B.142 | C.8 |
| 1.1295 | B.143 | C.8 |
| 1.1296 | B.144 | C.8 |

| comp. no. | herbicide B | safener C |
|---|---|---|
| 1.1297 | B.1 | C.9 |
| 1.1298 | B.2 | C.9 |
| 1.1299 | B.3 | C.9 |
| 1.1300 | B.4 | C.9 |
| 1.1301 | B.5 | C.9 |
| 1.1302 | B.6 | C.9 |
| 1.1303 | B.7 | C.9 |
| 1.1304 | B.8 | C.9 |
| 1.1305 | B.9 | C.9 |
| 1.1306 | B.10 | C.9 |
| 1.1307 | B.11 | C.9 |
| 1.1308 | B.12 | C.9 |
| 1.1309 | B.13 | C.9 |
| 1.1310 | B.14 | C.9 |
| 1.1311 | B.15 | C.9 |
| 1.1312 | B.16 | C.9 |
| 1.1313 | B.17 | C.9 |
| 1.1314 | B.18 | C.9 |
| 1.1315 | B.19 | C.9 |
| 1.1316 | B.20 | C.9 |
| 1.1317 | B.21 | C.9 |
| 1.1318 | B.22 | C.9 |
| 1.1319 | B.23 | C.9 |
| 1.1320 | B.24 | C.9 |
| 1.1321 | B.25 | C.9 |
| 1.1322 | B.26 | C.9 |
| 1.1323 | B.27 | C.9 |
| 1.1324 | B.28 | C.9 |
| 1.1325 | B.29 | C.9 |
| 1.1326 | B.30 | C.9 |
| 1.1327 | B.31 | C.9 |
| 1.1328 | B.32 | C.9 |
| 1.1329 | B.33 | C.9 |
| 1.1330 | B.34 | C.9 |
| 1.1331 | B.35 | C.9 |
| 1.1332 | B.36 | C.9 |
| 1.1333 | B.37 | C.9 |

| comp. no. | herbicide B | safener C |
|---|---|---|
| 1.1334 | B.38 | C.9 |
| 1.1335 | B.39 | C.9 |
| 1.1336 | B.40 | C.9 |
| 1.1337 | B.41 | C.9 |
| 1.1338 | B.42 | C.9 |
| 1.1339 | B.43 | C.9 |
| 1.1340 | B.44 | C.9 |
| 1.1341 | B.45 | C.9 |
| 1.1342 | B.46 | C.9 |
| 1.1343 | B.47 | C.9 |
| 1.1344 | B.48 | C.9 |
| 1.1345 | B.49 | C.9 |
| 1.1346 | B.50 | C.9 |
| 1.1347 | B.51 | C.9 |
| 1.1348 | B.52 | C.9 |
| 1.1349 | B.53 | C.9 |
| 1.1350 | B.54 | C.9 |
| 1.1351 | B.55 | C.9 |
| 1.1352 | B.56 | C.9 |
| 1.1353 | B.57 | C.9 |
| 1.1354 | B.58. | C.9 |
| 1.1355 | B.59 | C.9 |
| 1.1356 | B.60 | C.9 |
| 1.1357 | B.61 | C.9 |
| 1.1358 | B.62 | C.9 |
| 1.1359 | B.63 | C.9 |
| 1.1360 | B.64 | C.9 |
| 1.1361 | B.65 | C.9 |
| 1.1362 | B.66 | C.9 |
| 1.1363 | B.67 | C.9 |
| 1.1364 | B.68 | C.9 |
| 1.1365 | B.69 | C.9 |
| 1.1366 | B.70 | C.9 |
| 1.1367 | B.71 | C.9 |
| 1.1368 | B.72 | C.9 |
| 1.1369 | B.73 | C.9 |
| 1.1370 | B.74 | C.9 |
| 1.1371 | B.75 | C.9 |

| comp. no. | herbicide B | safener C |
|---|---|---|
| 1.1372 | B.76 | C.9 |
| 1.1373 | B.77 | C.9 |
| 1.1374 | B.78 | C.9 |
| 1.1375 | B.79 | C.9 |
| 1.1376 | B.80 | C.9 |
| 1.1377 | B.81 | C.9 |
| 1.1378 | B.82 | C.9 |
| 1.1379 | B.83 | C.9 |
| 1.1380 | B.84 | C.9 |
| 1.1381 | B.85 | C.9 |
| 1.1382 | B.86 | C.9 |
| 1.1383 | B.87 | C.9 |
| 1.1384 | B.88 | C.9 |
| 1.1385 | B.89 | C.9 |
| 1.1386 | B.90 | C.9 |
| 1.1387 | B.91 | C.9 |
| 1.1388 | B.92 | C.9 |
| 1.1389 | B.93 | C.9 |
| 1.1390 | B.94 | C.9 |
| 1.1391 | B.95 | C.9 |
| 1.1392 | B.96 | C.9 |
| 1.1393 | B.97 | C.9 |
| 1.1394 | B.98 | C.9 |
| 1.1395 | B.99 | C.9 |
| 1.1396 | B.100 | C.9 |
| 1.1397 | B.101 | C.9 |
| 1.1398 | B.102 | C.9 |
| 1.1399 | B.103 | C.9 |
| 1.1400 | B.104 | C.9 |
| 1.1401 | B.105 | C.9 |
| 1.1402 | B.106 | C.9 |
| 1.1403 | B.107 | C.9 |
| 1.1404 | B.108 | C.9 |
| 1.1405 | B.109 | C.9 |
| 1.1406 | B.110 | C.9 |
| 1.1407 | B.111 | C.9 |
| 1.1408 | B.112 | C.9 |
| 1.1409 | B.113 | C.9 |

| comp. no. | herbi-cide B | safe-ner C |
|---|---|---|
| 1.1410 | B.114 | C.9 |
| 1.1411 | B.115 | C.9 |
| 1.1412 | B.116 | C.9 |
| 1.1413 | B.117 | C.9 |
| 1.1414 | B.118 | C.9 |
| 1.1415 | B.119 | C.9 |
| 1.1416 | B.120 | C.9 |
| 1.1417 | B.121 | C.9 |
| 1.1418 | B.122 | C.9 |
| 1.1419 | B.123 | C.9 |
| 1.1420 | B.124 | C.9 |
| 1.1421 | B.125 | C.9 |
| 1.1422 | B.126 | C.9 |
| 1.1423 | B.127 | C.9 |
| 1.1424 | B.128 | C.9 |
| 1.1425 | B.129 | C.9 |
| 1.1426 | B.130 | C.9 |
| 1.1427 | B.131 | C.9 |
| 1.1428 | B.132 | C.9 |
| 1.1429 | B.133 | C.9 |
| 1.1430 | B.134 | C.9 |
| 1.1431 | B.135 | C.9 |
| 1.1432 | B.136 | C.9 |
| 1.1433 | B.137 | C.9 |
| 1.1434 | B.138 | C.9 |
| 1.1435 | B.139 | C.9 |
| 1.1436 | B.140 | C.9 |
| 1.1437 | B.141 | C.9 |
| 1.1438 | B.142 | C.9 |
| 1.1439 | B.143 | C.9 |
| 1.1440 | B.144 | C.9 |

| comp. no. | herbicide B | safener C |
|---|---|---|
| 1.1441 | B.1 | C.10 |
| 1.1442 | B.2 | C.10 |
| 1.1443 | B.3 | C.10 |
| 1.1444 | B.4 | C.10 |
| 1.1445 | B.5 | C.10 |
| 1.1446 | B.6 | C.10 |
| 1.1447 | B.7 | C.10 |
| 1.1448 | B.8 | C.10 |
| 1.1449 | B.9 | C.10 |
| 1.1450 | B.10 | C.10 |
| 1.1451 | B.11 | C.10 |
| 1.1452 | B.12 | C.10 |
| 1.1453 | B.13 | C.10 |
| 1.1454 | B.14 | C.10 |
| 1.1455 | B.15 | C.10 |
| 1.1456 | B.16 | C.10 |
| 1.1457 | B.17 | C.10 |
| 1.1458 | B.18 | C.10 |
| 1.1459 | B.19 | C.10 |
| 1.1460 | B.20 | C.10 |
| 1.1461 | B.21 | C.10 |
| 1.1462 | B.22 | C.10 |
| 1.1463 | B.23 | C.10 |
| 1.1464 | B.24 | C.10 |
| 1.1465 | B.25 | C.10 |
| 1.1466 | B.26 | C.10 |
| 1.1467 | B.27 | C.10 |
| 1.1468 | B.28 | C.10 |
| 1.1469 | B.29 | C.10 |
| 1.1470 | B.30 | C.10 |
| 1.1471 | B.31 | C.10 |
| 1.1472 | B.32 | C.10 |
| 1.1473 | B.33 | C.10 |
| 1.1474 | B.34 | C.10 |
| 1.1475 | B.35 | C.10 |
| 1.1476 | B.36 | C.10 |
| 1.1477 | B.37 | C.10 |
| 1.1478 | B.38 | C.10 |
| 1.1479 | B.39 | C.10 |
| 1.1480 | B.40 | C.10 |
| 1.1481 | B.41 | C.10 |
| 1.1482 | B.42 | C.10 |
| 1.1483 | B.43 | C.10 |
| 1.1484 | B.44 | C.10 |
| 1.1485 | B.45 | C.10 |
| 1.1486 | B.46 | C.10 |
| 1.1487 | B.47 | C.10 |
| 1.1488 | B.48 | C.10 |
| 1.1489 | B.49 | C.10 |
| 1.1490 | B.50 | C.10 |
| 1.1491 | B.51 | C.10 |
| 1.1492 | B.52 | C.10 |
| 1.1493 | B.53 | C.10 |
| 1.1494 | B.54 | C.10 |
| 1.1495 | B.55 | C.10 |
| 1.1496 | B.56 | C.10 |
| 1.1497 | B.57 | C.10 |
| 1.1498 | B.58. | C.10 |
| 1.1499 | B.59 | C.10 |
| 1.1500 | B.60 | C.10 |
| 1.1501 | B.61 | C.10 |
| 1.1502 | B.62 | C.10 |
| 1.1503 | B.63 | C.10 |
| 1.1504 | B.64 | C.10 |
| 1.1505 | B.65 | C.10 |
| 1.1506 | B.66 | C.10 |
| 1.1507 | B.67 | C.10 |
| 1.1508 | B.68 | C.10 |
| 1.1509 | B.69 | C.10 |
| 1.1510 | B.70 | C.10 |
| 1.1511 | B.71 | C.10 |
| 1.1512 | B.72 | C.10 |
| 1.1513 | B.73 | C.10 |
| 1.1514 | B.74 | C.10 |
| 1.1515 | B.75 | C.10 |
| 1.1516 | B.76 | C.10 |
| 1.1517 | B.77 | C.10 |
| 1.1518 | B.78 | C.10 |
| 1.1519 | B.79 | C.10 |
| 1.1520 | B.80 | C.10 |
| 1.1521 | B.81 | C.10 |
| 1.1522 | B.82 | C.10 |
| 1.1523 | B.83 | C.10 |
| 1.1524 | B.84 | C.10 |
| 1.1525 | B.85 | C.10 |
| 1.1526 | B.86 | C.10 |
| 1.1527 | B.87 | C.10 |
| 1.1528 | B.88 | C.10 |
| 1.1529 | B.89 | C.10 |
| 1.1530 | B.90 | C.10 |
| 1.1531 | B.91 | C.10 |
| 1.1532 | B.92 | C.10 |
| 1.1533 | B.93 | C.10 |
| 1.1534 | B.94 | C.10 |
| 1.1535 | B.95 | C.10 |
| 1.1536 | B.96 | C.10 |
| 1.1537 | B.97 | C.10 |
| 1.1538 | B.98 | C.10 |
| 1.1539 | B.99 | C.10 |
| 1.1540 | B.100 | C.10 |
| 1.1541 | B.101 | C.10 |
| 1.1542 | B.102 | C.10 |
| 1.1543 | B.103 | C.10 |
| 1.1544 | B.104 | C.10 |
| 1.1545 | B.105 | C.10 |
| 1.1546 | B.106 | C.10 |
| 1.1547 | B.107 | C.10 |
| 1.1548 | B.108 | C.10 |
| 1.1549 | B.109 | C.10 |
| 1.1550 | B.110 | C.10 |
| 1.1551 | B.111 | C.10 |
| 1.1552 | B.112 | C.10 |
| 1.1553 | B.113 | C.10 |

| comp. no. | herbicide B | safener C |
|---|---|---|
| 1.1554 | B.114 | C.10 |
| 1.1555 | B.115 | C.10 |
| 1.1556 | B.116 | C.10 |
| 1.1557 | B.117 | C.10 |
| 1.1558 | B.118 | C.10 |
| 1.1559 | B.119 | C.10 |
| 1.1560 | B.120 | C.10 |
| 1.1561 | B.121 | C.10 |
| 1.1562 | B.122 | C.10 |
| 1.1563 | B.123 | C.10 |
| 1.1564 | B.124 | C.10 |
| 1.1565 | B.125 | C.10 |
| 1.1566 | B.126 | C.10 |
| 1.1567 | B.127 | C.10 |
| 1.1568 | B.128 | C.10 |
| 1.1569 | B.129 | C.10 |
| 1.1570 | B.130 | C.10 |
| 1.1571 | B.131 | C.10 |
| 1.1572 | B.132 | C.10 |
| 1.1573 | B.133 | C.10 |
| 1.1574 | B.134 | C.10 |
| 1.1575 | B.135 | C.10 |
| 1.1576 | B.136 | C.10 |
| 1.1577 | B.137 | C.10 |
| 1.1578 | B.138 | C.10 |
| 1.1579 | B.139 | C.10 |
| 1.1580 | B.140 | C.10 |
| 1.1581 | B.141 | C.10 |
| 1.1582 | B.142 | C.10 |
| 1.1583 | B.143 | C.10 |
| 1.1584 | B.144 | C.10 |

| comp. no. | herbicide B | safener C |
|---|---|---|
| 1.1585 | B.1 | C.11 |
| 1.1586 | B.2 | C.11 |
| 1.1587 | B.3 | C.11 |
| 1.1588 | B.4 | C.11 |
| 1.1589 | B.5 | C.11 |
| 1.1590 | B.6 | C.11 |
| 1.1591 | B.7 | C.11 |
| 1.1592 | B.8 | C.11 |
| 1.1593 | B.9 | C.11 |
| 1.1594 | B.10 | C.11 |
| 1.1595 | B.11 | C.11 |
| 1.1596 | B.12 | C.11 |
| 1.1597 | B.13 | C.11 |
| 1.1598 | B.14 | C.11 |
| 1.1599 | B.15 | C.11 |
| 1.1600 | B.16 | C.11 |
| 1.1601 | B.17 | C.11 |
| 1.1602 | B.18 | C.11 |
| 1.1603 | B.19 | C.11 |
| 1.1604 | B.20 | C.11 |
| 1.1605 | B.21 | C.11 |
| 1.1606 | B.22 | C.11 |
| 1.1607 | B.23 | C.11 |
| 1.1608 | B.24 | C.11 |
| 1.1609 | B.25 | C.11 |
| 1.1610 | B.26 | C.11 |
| 1.1611 | B.27 | C.11 |
| 1.1612 | B.28 | C.11 |
| 1.1613 | B.29 | C.11 |
| 1.1614 | B.30 | C.11 |
| 1.1615 | B.31 | C.11 |
| 1.1616 | B.32 | C.11 |
| 1.1617 | B.33 | C.11 |
| 1.1618 | B.34 | C.11 |
| 1.1619 | B.35 | C.11 |
| 1.1620 | B.36 | C.11 |
| 1.1621 | B.37 | C.11 |
| 1.1622 | B.38 | C.11 |
| 1.1623 | B.39 | C.11 |
| 1.1624 | B.40 | C.11 |
| 1.1625 | B.41 | C.11 |
| 1.1626 | B.42 | C.11 |
| 1.1627 | B.43 | C.11 |
| 1.1628 | B.44 | C.11 |
| 1.1629 | B.45 | C.11 |
| 1.1630 | B.46 | C.11 |
| 1.1631 | B.47 | C.11 |
| 1.1632 | B.48 | C.11 |
| 1.1633 | B.49 | C.11 |
| 1.1634 | B.50 | C.11 |
| 1.1635 | B.51 | C.11 |
| 1.1636 | B.52 | C.11 |
| 1.1637 | B.53 | C.11 |
| 1.1638 | B.54 | C.11 |
| 1.1639 | B.55 | C.11 |
| 1.1640 | B.56 | C.11 |
| 1.1641 | B.57 | C.11 |
| 1.1642 | B.58. | C.11 |
| 1.1643 | B.59 | C.11 |
| 1.1644 | B.60 | C.11 |
| 1.1645 | B.61 | C.11 |
| 1.1646 | B.62 | C.11 |
| 1.1647 | B.63 | C.11 |
| 1.1648 | B.64 | C.11 |
| 1.1649 | B.65 | C.11 |
| 1.1650 | B.66 | C.11 |
| 1.1651 | B.67 | C.11 |
| 1.1652 | B.68 | C.11 |
| 1.1653 | B.69 | C.11 |
| 1.1654 | B.70 | C.11 |
| 1.1655 | B.71 | C.11 |
| 1.1656 | B.72 | C.11 |
| 1.1657 | B.73 | C.11 |
| 1.1658 | B.74 | C.11 |
| 1.1659 | B.75 | C.11 |
| 1.1660 | B.76 | C.11 |
| 1.1661 | B.77 | C.11 |
| 1.1662 | B.78 | C.11 |
| 1.1663 | B.79 | C.11 |
| 1.1664 | B.80 | C.11 |
| 1.1665 | B.81 | C.11 |
| 1.1666 | B.82 | C.11 |
| 1.1667 | B.83 | C.11 |
| 1.1668 | B.84 | C.11 |
| 1.1669 | B.85 | C.11 |
| 1.1670 | B.86 | C.11 |
| 1.1671 | B.87 | C.11 |
| 1.1672 | B.88 | C.11 |
| 1.1673 | B.89 | C.11 |
| 1.1674 | B.90 | C.11 |
| 1.1675 | B.91 | C.11 |
| 1.1676 | B.92 | C.11 |
| 1.1677 | B.93 | C.11 |
| 1.1678 | B.94 | C.11 |
| 1.1679 | B.95 | C.11 |
| 1.1680 | B.96 | C.11 |
| 1.1681 | B.97 | C.11 |
| 1.1682 | B.98 | C.11 |
| 1.1683 | B.99 | C.11 |
| 1.1684 | B.100 | C.11 |
| 1.1685 | B.101 | C.11 |
| 1.1686 | B.102 | C.11 |
| 1.1687 | B.103 | C.11 |
| 1.1688 | B.104 | C.11 |
| 1.1689 | B.105 | C.11 |
| 1.1690 | B.106 | C.11 |
| 1.1691 | B.107 | C.11 |
| 1.1692 | B.108 | C.11 |
| 1.1693 | B.109 | C.11 |
| 1.1694 | B.110 | C.11 |
| 1.1695 | B.111 | C.11 |
| 1.1696 | B.112 | C.11 |
| 1.1697 | B.113 | C.11 |

| comp. no. | herbi-cide B | safe-ner C |
|---|---|---|
| 1.1698 | B.114 | C.11 |
| 1.1699 | B.115 | C.11 |
| 1.1700 | B.116 | C.11 |
| 1.1701 | B.117 | C.11 |
| 1.1702 | B.118 | C.11 |
| 1.1703 | B.119 | C.11 |
| 1.1704 | B.120 | C.11 |
| 1.1705 | B.121 | C.11 |
| 1.1706 | B.122 | C.11 |
| 1.1707 | B.123 | C.11 |
| 1.1708 | B.124 | C.11 |
| 1.1709 | B.125 | C.11 |
| 1.1710 | B.126 | C.11 |
| 1.1711 | B.127 | C.11 |
| 1.1712 | B.128 | C.11 |
| 1.1713 | B.129 | C.11 |
| 1.1714 | B.130 | C.11 |
| 1.1715 | B.131 | C.11 |
| 1.1716 | B.132 | C.11 |
| 1.1717 | B.133 | C.11 |
| 1.1718 | B.134 | C.11 |
| 1.1719 | B.135 | C.11 |
| 1.1720 | B.136 | C.11 |
| 1.1721 | B.137 | C.11 |
| 1.1722 | B.138 | C.11 |
| 1.1723 | B.139 | C.11 |
| 1.1724 | B.140 | C.11 |
| 1.1725 | B.141 | C.11 |
| 1.1726 | B.142 | C.11 |
| 1.1727 | B.143 | C.11 |
| 1.1728 | B.144 | C.11 |

| comp. no. | herbi-cide B | safe-ner C |
|---|---|---|
| 1.1729 | B.1 | C.12 |
| 1.1730 | B.2 | C.12 |
| 1.1731 | B.3 | C.12 |
| 1.1732 | B.4 | C.12 |
| 1.1733 | B.5 | C.12 |
| 1.1734 | B.6 | C.12 |
| 1.1735 | B.7 | C.12 |
| 1.1736 | B.8 | C.12 |
| 1.1737 | B.9 | C.12 |
| 1.1738 | B.10 | C.12 |
| 1.1739 | B.11 | C.12 |
| 1.1740 | B.12 | C.12 |
| 1.1741 | B.13 | C.12 |
| 1.1742 | B.14 | C.12 |
| 1.1743 | B.15 | C.12 |
| 1.1744 | B.16 | C.12 |
| 1.1745 | B.17 | C.12 |
| 1.1746 | B.18 | C.12 |
| 1.1747 | B.19 | C.12 |
| 1.1748 | B.20 | C.12 |
| 1.1749 | B.21 | C.12 |
| 1.1750 | B.22 | C.12 |
| 1.1751 | B.23 | C.12 |
| 1.1752 | B.24 | C.12 |
| 1.1753 | B.25 | C.12 |
| 1.1754 | B.26 | C.12 |
| 1.1755 | B.27 | C.12 |
| 1.1756 | B.28 | C.12 |
| 1.1757 | B.29 | C.12 |
| 1.1758 | B.30 | C.12 |
| 1.1759 | B.31 | C.12 |
| 1.1760 | B.32 | C.12 |
| 1.1761 | B.33 | C.12 |
| 1.1762 | B.34 | C.12 |
| 1.1763 | B.35 | C.12 |
| 1.1764 | B.36 | C.12 |
| 1.1765 | B.37 | C.12 |

| comp. no. | herbi-cide B | safe-ner C |
|---|---|---|
| 1.1766 | B.38 | C.12 |
| 1.1767 | B.39 | C.12 |
| 1.1768 | B.40 | C.12 |
| 1.1769 | B.41 | C.12 |
| 1.1770 | B.42 | C.12 |
| 1.1771 | B.43 | C.12 |
| 1.1772 | B.44 | C.12 |
| 1.1773 | B.45 | C.12 |
| 1.1774 | B.46 | C.12 |
| 1.1775 | B.47 | C.12 |
| 1.1776 | B.48 | C.12 |
| 1.1777 | B.49 | C.12 |
| 1.1778 | B.50 | C.12 |
| 1.1779 | B.51 | C.12 |
| 1.1780 | B.52 | C.12 |
| 1.1781 | B.53 | C.12 |
| 1.1782 | B.54 | C.12 |
| 1.1783 | B.55 | C.12 |
| 1.1784 | B.56 | C.12 |
| 1.1785 | B.57 | C.12 |
| 1.1786 | B.58. | C.12 |
| 1.1787 | B.59 | C.12 |
| 1.1788 | B.60 | C.12 |
| 1.1789 | B.61 | C.12 |
| 1.1790 | B.62 | C.12 |
| 1.1791 | B.63 | C.12 |
| 1.1792 | B.64 | C.12 |
| 1.1793 | B.65 | C.12 |
| 1.1794 | B.66 | C.12 |
| 1.1795 | B.67 | C.12 |
| 1.1796 | B.68 | C.12 |
| 1.1797 | B.69 | C.12 |
| 1.1798 | B.70 | C.12 |
| 1.1799 | B.71 | C.12 |
| 1.1800 | B.72 | C.12 |
| 1.1801 | B.73 | C.12 |
| 1.1802 | B.74 | C.12 |
| 1.1803 | B.75 | C.12 |

| comp. no. | herbi-cide B | safe-ner C |
|---|---|---|
| 1.1804 | B.76 | C.12 |
| 1.1805 | B.77 | C.12 |
| 1.1806 | B.78 | C.12 |
| 1.1807 | B.79 | C.12 |
| 1.1808 | B.80 | C.12 |
| 1.1809 | B.81 | C.12 |
| 1.1810 | B.82 | C.12 |
| 1.1811 | B.83 | C.12 |
| 1.1812 | B.84 | C.12 |
| 1.1813 | B.85 | C.12 |
| 1.1814 | B.86 | C.12 |
| 1.1815 | B.87 | C.12 |
| 1.1816 | B.88 | C.12 |
| 1.1817 | B.89 | C.12 |
| 1.1818 | B.90 | C.12 |
| 1.1819 | B.91 | C.12 |
| 1.1820 | B.92 | C.12 |
| 1.1821 | B.93 | C.12 |
| 1.1822 | B.94 | C.12 |
| 1.1823 | B.95 | C.12 |
| 1.1824 | B.96 | C.12 |
| 1.1825 | B.97 | C.12 |
| 1.1826 | B.98 | C.12 |
| 1.1827 | B.99 | C.12 |
| 1.1828 | B.100 | C.12 |
| 1.1829 | B.101 | C.12 |
| 1.1830 | B.102 | C.12 |
| 1.1831 | B.103 | C.12 |
| 1.1832 | B.104 | C.12 |
| 1.1833 | B.105 | C.12 |
| 1.1834 | B.106 | C.12 |
| 1.1835 | B.107 | C.12 |
| 1.1836 | B.108 | C.12 |
| 1.1837 | B.109 | C.12 |
| 1.1838 | B.110 | C.12 |
| 1.1839 | B.111 | C.12 |
| 1.1840 | B.112 | C.12 |
| 1.1841 | B.113 | C.12 |

| comp. no. | herbi-cide B | safe-ner C |
|---|---|---|
| 1.1842 | B.114 | C.12 |
| 1.1843 | B.115 | C.12 |
| 1.1844 | B.116 | C.12 |
| 1.1845 | B.117 | C.12 |
| 1.1846 | B.118 | C.12 |
| 1.1847 | B.119 | C.12 |
| 1.1848 | B.120 | C.12 |
| 1.1849 | B.121 | C.12 |
| 1.1850 | B.122 | C.12 |
| 1.1851 | B.123 | C.12 |
| 1.1852 | B.124 | C.12 |
| 1.1853 | B.125 | C.12 |
| 1.1854 | B.126 | C.12 |
| 1.1855 | B.127 | C.12 |
| 1.1856 | B.128 | C.12 |
| 1.1857 | B.129 | C.12 |
| 1.1858 | B.130 | C.12 |
| 1.1859 | B.131 | C.12 |
| 1.1860 | B.132 | C.12 |
| 1.1861 | B.133 | C.12 |
| 1.1862 | B.134 | C.12 |
| 1.1863 | B.135 | C.12 |
| 1.1864 | B.136 | C.12 |
| 1.1865 | B.137 | C.12 |
| 1.1866 | B.138 | C.12 |
| 1.1867 | B.139 | C.12 |
| 1.1868 | B.140 | C.12 |
| 1.1869 | B.141 | C.12 |
| 1.1870 | B.142 | C.12 |
| 1.1871 | B.143 | C.12 |
| 1.1872 | B.144 | C.12 |

| comp. no. | herbicide B | safener C |
|---|---|---|
| 1.1873 | B.1 | C.13 |
| 1.1874 | B.2 | C.13 |
| 1.1875 | B.3 | C.13 |
| 1.1876 | B.4 | C.13 |
| 1.1877 | B.5 | C.13 |
| 1.1878 | B.6 | C.13 |
| 1.1879 | B.7 | C.13 |
| 1.1880 | B.8 | C.13 |
| 1.1881 | B.9 | C.13 |
| 1.1882 | B.10 | C.13 |
| 1.1883 | B.11 | C.13 |
| 1.1884 | B.12 | C.13 |
| 1.1885 | B.13 | C.13 |
| 1.1886 | B.14 | C.13 |
| 1.1887 | B.15 | C.13 |
| 1.1888 | B.16 | C.13 |
| 1.1889 | B.17 | C.13 |
| 1.1890 | B.18 | C.13 |
| 1.1891 | B.19 | C.13 |
| 1.1892 | B.20 | C.13 |
| 1.1893 | B.21 | C.13 |
| 1.1894 | B.22 | C.13 |
| 1.1895 | B.23 | C.13 |
| 1.1896 | B.24 | C.13 |
| 1.1897 | B.25 | C.13 |
| 1.1898 | B.26 | C.13 |
| 1.1899 | B.27 | C.13 |
| 1.1900 | B.28 | C.13 |
| 1.1901 | B.29 | C.13 |
| 1.1902 | B.30 | C.13 |
| 1.1903 | B.31 | C.13 |
| 1.1904 | B.32 | C.13 |
| 1.1905 | B.33 | C.13 |
| 1.1906 | B.34 | C.13 |
| 1.1907 | B.35 | C.13 |
| 1.1908 | B.36 | C.13 |
| 1.1909 | B.37 | C.13 |

| comp. no. | herbicide B | safener C |
|---|---|---|
| 1.1910 | B.38 | C.13 |
| 1.1911 | B.39 | C.13 |
| 1.1912 | B.40 | C.13 |
| 1.1913 | B.41 | C.13 |
| 1.1914 | B.42 | C.13 |
| 1.1915 | B.43 | C.13 |
| 1.1916 | B.44 | C.13 |
| 1.1917 | B.45 | C.13 |
| 1.1918 | B.46 | C.13 |
| 1.1919 | B.47 | C.13 |
| 1.1920 | B.48 | C.13 |
| 1.1921 | B.49 | C.13 |
| 1.1922 | B.50 | C.13 |
| 1.1923 | B.51 | C.13 |
| 1.1924 | B.52 | C.13 |
| 1.1925 | B.53 | C.13 |
| 1.1926 | B.54 | C.13 |
| 1.1927 | B.55 | C.13 |
| 1.1928 | B.56 | C.13 |
| 1.1929 | B.57 | C.13 |
| 1.1930 | B.58. | C.13 |
| 1.1931 | B.59 | C.13 |
| 1.1932 | B.60 | C.13 |
| 1.1933 | B.61 | C.13 |
| 1.1934 | B.62 | C.13 |
| 1.1935 | B.63 | C.13 |
| 1.1936 | B.64 | C.13 |
| 1.1937 | B.65 | C.13 |
| 1.1938 | B.66 | C.13 |
| 1.1939 | B.67 | C.13 |
| 1.1940 | B.68 | C.13 |
| 1.1941 | B.69 | C.13 |
| 1.1942 | B.70 | C.13 |
| 1.1943 | B.71 | C.13 |
| 1.1944 | B.72 | C.13 |
| 1.1945 | B.73 | C.13 |
| 1.1946 | B.74 | C.13 |
| 1.1947 | B.75 | C.13 |

| comp. no. | herbicide B | safener C |
|---|---|---|
| 1.1948 | B.76 | C.13 |
| 1.1949 | B.77 | C.13 |
| 1.1950 | B.78 | C.13 |
| 1.1951 | B.79 | C.13 |
| 1.1952 | B.80 | C.13 |
| 1.1953 | B.81 | C.13 |
| 1.1954 | B.82 | C.13 |
| 1.1955 | B.83 | C.13 |
| 1.1956 | B.84 | C.13 |
| 1.1957 | B.85 | C.13 |
| 1.1958 | B.86 | C.13 |
| 1.1959 | B.87 | C.13 |
| 1.1960 | B.88 | C.13 |
| 1.1961 | B.89 | C.13 |
| 1.1962 | B.90 | C.13 |
| 1.1963 | B.91 | C.13 |
| 1.1964 | B.92 | C.13 |
| 1.1965 | B.93 | C.13 |
| 1.1966 | B.94 | C.13 |
| 1.1967 | B.95 | C.13 |
| 1.1968 | B.96 | C.13 |
| 1.1969 | B.97 | C.13 |
| 1.1970 | B.98 | C.13 |
| 1.1971 | B.99 | C.13 |
| 1.1972 | B.100 | C.13 |
| 1.1973 | B.101 | C.13 |
| 1.1974 | B.102 | C.13 |
| 1.1975 | B.103 | C.13 |
| 1.1976 | B.104 | C.13 |
| 1.1977 | B.105 | C.13 |
| 1.1978 | B.106 | C.13 |
| 1.1979 | B.107 | C.13 |
| 1.1980 | B.108 | C.13 |
| 1.1981 | B.109 | C.13 |
| 1.1982 | B.110 | C.13 |
| 1.1983 | B.111 | C.13 |
| 1.1984 | B.112 | C.13 |
| 1.1985 | B.113 | C.13 |

| comp. no. | herbi-cide B | safe-ner C |
|---|---|---|
| 1.1986 | B.114 | C.13 |
| 1.1987 | B.115 | C.13 |
| 1.1988 | B.116 | C.13 |
| 1.1989 | B.117 | C.13 |
| 1.1990 | B.118 | C.13 |
| 1.1991 | B.119 | C.13 |
| 1.1992 | B.120 | C.13 |
| 1.1993 | B.121 | C.13 |
| 1.1994 | B.122 | C.13 |
| 1.1995 | B.123 | C.13 |
| 1.1996 | B.124 | C.13 |
| 1.1997 | B.125 | C.13 |
| 1.1998 | B.126 | C.13 |
| 1.1999 | B.127 | C.13 |
| 1.2000 | B.128 | C.13 |
| 1.2001 | B.129 | C.13 |
| 1.2002 | B.130 | C.13 |
| 1.2003 | B.131 | C.13 |
| 1.2004 | B.132 | C.13 |
| 1.2005 | B.133 | C.13 |
| 1.2006 | B.134 | C.13 |
| 1.2007 | B.135 | C.13 |
| 1.2008 | B.136 | C.13 |
| 1.2009 | B.137 | C.13 |
| 1.2010 | B.138 | C.13 |
| 1.2011 | B.139 | C.13 |
| 1.2012 | B.140 | C.13 |
| 1.2013 | B.141 | C.13 |
| 1.2014 | B.142 | C.13 |
| 1.2015 | B.143 | C.13 |
| 1.2016 | B.144 | C.13 |

| comp. no. | herbicide B | safener C |
|---|---|---|
| 1.2017 | -- | C.1 |
| 1.2018 | -- | C.2 |
| 1.2019 | -- | C.3 |
| 1.2020 | -- | C.4 |
| 1.2021 | -- | C.5 |

| comp. no. | herbicide B | safener C |
|---|---|---|
| 1.2022 | -- | C.6 |
| 1.2023 | -- | C.7 |
| 1.2024 | -- | C.8 |
| 1.2025 | -- | C.9 |
| 1.2026 | -- | C.10 |
| 1.2027 | -- | C.11 |

| comp. no. | herbicide B | safener C |
|---|---|---|
| 1.2028 | -- | C.12 |
| 1.2029 | -- | C.13 |

The specific number for each single composition is deductible as follows:

Composition 1.777 for example comprises the compound I, terbutryn (B.67) and fenchlorazole (C.5) (*see table I, entry 1.777; as well as table B, entry B.67 and table C, entry C.5*).

Composition 2.777 for example comprises the compound I (*see the definition for compositions 2.1 to 2.2029 below),* terbutryn (B.67) and fenchlorazole (C.5) (*see table I, entry 1.777; as well as table B, entry B.67 and table C, entry C.5*).

Composition 7.777 for example comprises imazapyr (B31) (*see the definition for compositions 7.1 to 7.2029 below),* and the compound I, terbutryn (B.67) and fenchlorazole (C.5) (*see table I, entry 1.777; as well as table B, entry B.67 and table C, entry C. 5).*

Also especially preferred are compositions 3.1. to 3.2029 which differ from the corresponding compositions 1.1 to 1.2029 only in that they additionally comprise B.2 as further herbicide B.
Also especially preferred are compositions 4.1. to 4.2029 which differ from the corresponding compositions 1.1 to 1.2029 only in that they additionally comprise B.7 as further herbicide B.
Also especially preferred are compositions 5.1. to 5.2029 which differ from the corresponding compositions 1.1 to 1.2029 only in that they additionally comprise B.29 as further herbicide B.
Also especially preferred are compositions 6.1. to 6.2029 which differ from the corresponding compositions 1.1 to 1.2029 only in that they additionally comprise B.30 as further herbicide B.
Also especially preferred are compositions 7.1. to 7.2029 which differ from the corresponding compositions 1.1 to 1.2029 only in that they additionally comprise B.31 as further herbicide B.
Also especially preferred are compositions 8.1. to 8.2029 which differ from the corresponding compositions 1.1 to 1.2029 only in that they additionally comprise B.32 as further herbicide B.

Also especially preferred are compositions 9.1. to 9.2029 which differ from the corresponding compositions 1.1 to 1.2029 only in that they additionally comprise B.33 as further herbicide B.
Also especially preferred are compositions 10.1. to 10.2029 which differ from the corresponding compositions 1.1 to 1.2029 only in that they additionally comprise B.40 as further herbicide B.
Also especially preferred are compositions 11.1. to 11.2029 which differ from the corresponding compositions 1.1 to 1.2029 only in that they additionally comprise B.44 as further herbicide B.
Also especially preferred are compositions 12.1. to 12.2029 which differ from the corresponding compositions 1.1 to 1.2029 only in that they additionally comprise B.45 as further herbicide B.
Also especially preferred are compositions 13.1. to 13.2029 which differ from the corresponding compositions 1.1 to 1.2029 only in that they additionally comprise B.52 as further herbicide B.
Also especially preferred are compositions 14.1. to 14.2029 which differ from the corresponding compositions 1.1 to 1.2029 only in that they additionally comprise B.53 as further herbicide B.
Also especially preferred are compositions 15.1. to 15.2029 which differ from the corresponding compositions 1.1 to 1.2029 only in that they additionally comprise B.54 as further herbicide B.
Also especially preferred are compositions 16.1. to 16.2029 which differ from the corresponding compositions 1.1 to 1.2029 only in that they additionally comprise B.55 as further herbicide B.
Also especially preferred are compositions 17.1. to 17.2029 which differ from the corresponding compositions 1.1 to 1.2029 only in that they additionally comprise B.56 as further herbicide B.
Also especially preferred are compositions 18.1. to 18.2029 which differ from the corresponding compositions 1.1 to 1.2029 only in that they additionally comprise B.57 as further herbicide B.
Also especially preferred are compositions 19.1. to 19.2029 which differ from the corresponding compositions 1.1 to

1.2029 only in that they additionally comprise B.60 as further herbicide B.
Also especially preferred are compositions 20.1. to 20.2029 which differ from the corresponding compositions 1.1 to 1.2029 only in that they additionally comprise B.65 as further herbicide B.
Also especially preferred are compositions 21.1. to 21.2029 which differ from the corresponding compositions 1.1 to 1.2029 only in that they additionally comprise B.66 as further herbicide B.
Also especially preferred are compositions 22.1. to 22.2029 which differ from the corresponding compositions 1.1 to 1.2029 only in that they additionally comprise B.69 as further herbicide B.

Also especially preferred are compositions 23.1. to 23.2029 which differ from the corresponding compositions 1.1 to 1.2029 only in that they additionally comprise B.72 as further herbicide B.
Also especially preferred are compositions 24.1. to 24.2029 which differ from the corresponding compositions 1.1 to 1.2029 only in that they additionally comprise B.73 as further herbicide B.
Also especially preferred are compositions 25.1. to 25.2029 which differ from the corresponding compositions 1.1 to 1.2029 only in that they additionally comprise B.76 as further herbicide B.
Also especially preferred are compositions 26.1. to 26.2029 which differ from the corresponding compositions 1.1 to 1.2029 only in that they additionally comprise B.77 as further herbicide B.
Also especially preferred are compositions 27.1. to 27.2029 which differ from the corresponding compositions 1.1 to 1.2029 only in that they additionally comprise B.83 as further herbicide B.
Also especially preferred are compositions 28.1. to 28.2029 which differ from the corresponding compositions 1.1 to 1.2029 only in that they additionally comprise B.84 as further herbicide B.
Also especially preferred are compositions 29.1. to 29.2029 which differ from the corresponding compositions 1.1 to 1.2029 only in that they additionally comprise B.87 as further herbicide B.
Also especially preferred are compositions 30.1. to 30.2029 which differ from the corresponding compositions 1.1 to 1.2029 only in that they additionally comprise B.87 and B.54 as further herbicides B.
Also especially preferred are compositions 31.1. to 31.2029 which differ from the corresponding compositions 1.1 to 1.2029 only in that they additionally comprise B.87 and B.60 as further herbicides B.
Also especially preferred are compositions 32.1. to 32.2029 which differ from the corresponding compositions 1.1 to 1.2029 only in that they additionally comprise B.87 and B.66 as further herbicides B.
Also especially preferred are compositions 33.1. to 33.2029 which differ from the corresponding compositions 1.1 to 1.2029 only in that they additionally comprise B.88 as further herbicide B.
Also especially preferred are compositions 34.1. to 34.2029 which differ from the corresponding compositions 1.1 to 1.2029 only in that they additionally comprise B. 88 and B.54 as further herbicides B.
Also especially preferred are compositions 35.1. to 35.2029 which differ from the corresponding compositions 1.1 to 1.2029 only in that they additionally comprise B. 88 and B.60 as further herbicides B.
Also especially preferred are compositions 36.1. to 36.2029 which differ from the corresponding compositions 1.1 to 1.2029 only in that they additionally comprise B. 88 and B.66 as further herbicides B.

Also especially preferred are compositions 37.1. to 37.2029 which differ from the corresponding compositions 1.1 to 1.2029 only in that they additionally comprise B.90 as further herbicide B.
Also especially preferred are compositions 38.1. to 38.2029 which differ from the corresponding compositions 1.1 to 1.2029 only in that they additionally comprise B.91 as further herbicide B.
Also especially preferred are compositions 39.1. to 39.2029 which differ from the corresponding compositions 1.1 to 1.2029 only in that they additionally comprise B.91 and B.54 as further herbicides B.
Also especially preferred are compositions 40.1. to 40.2029 which differ from the corresponding compositions 1.1 to 1.2029 only in that they additionally comprise B.91 and B.60 as further herbicides B.
Also especially preferred are compositions 41.1. to 41.2029 which differ from the corresponding compositions 1.1 to 1.2029 only in that they additionally comprise B.91 and B.66 as further herbicides B.
Also especially preferred are compositions 42.1. to 42.2029 which differ from the corresponding compositions 1.1 to 1.2029 only in that they additionally comprise B.93 as further herbicide B.
Also especially preferred are compositions 43.1. to 43.2029 which differ from the corresponding compositions 1.1 to 1.2029 only in that they additionally comprise B.94 as further herbicide B.
Also especially preferred are compositions 44.1. to 44.2029 which differ from the corresponding compositions 1.1 to 1.2029 only in that they additionally comprise B.94 and B.54 as further herbicides B.
Also especially preferred are compositions 45.1. to 45.2029 which differ from the corresponding compositions 1.1 to 1.2029 only in that they additionally comprise B.94 and B.60 as further herbicides B.
Also especially preferred are compositions 46.1. to 46.2029 which differ from the corresponding compositions 1.1 to 1.2029 only in that they additionally comprise B.94 and B.66 as further herbicides B.
Also especially preferred are compositions 47.1. to 47.2029 which differ from the corresponding compositions 1.1 to 1.2029 only in that they additionally comprise B.98 as further herbicide B.
Also especially preferred are compositions 48.1. to 48.2029 which differ from the corresponding compositions 1.1 to

1.2029 only in that they additionally comprise B.98 and B.54 as further herbicides B.
Also especially preferred are compositions 49.1. to 49.2029 which differ from the corresponding compositions 1.1 to 1.2029 only in that they additionally comprise B.98 and B.76 as further herbicides B.
Also especially preferred are compositions 50.1. to 50.2029 which differ from the corresponding compositions 1.1 to 1.2029 only in that they additionally comprise B.98 and B.87 as further herbicides B.

Also especially preferred are compositions 51.1. to 51.2029 which differ from the corresponding compositions 1.1 to 1.2029 only in that they additionally comprise B.98 and B.106 as further herbicides B.
Also especially preferred are compositions 52.1. to 52.2029 which differ from the corresponding compositions 1.1 to 1.2029 only in that they additionally comprise B.98 and B.88 as further herbicides B.
Also especially preferred are compositions 53.1. to 53.2029 which differ from the corresponding compositions 1.1 to 1.2029 only in that they additionally comprise B.98 and B.91 as further herbicides B.
Also especially preferred are compositions 54.1. to 54.2029 which differ from the corresponding compositions 1.1 to 1.2029 only in that they additionally comprise B.98 and B.94 as further herbicides B.
Also especially preferred are compositions 55.1. to 55.2029 which differ from the corresponding compositions 1.1 to 1.2029 only in that they additionally comprise B.101 as further herbicide B.
Also especially preferred are compositions 56.1. to 56.2029 which differ from the corresponding compositions 1.1 to 1.2029 only in that they additionally comprise B.104 as further herbicide B.
Also especially preferred are compositions 57.1. to 57.2029 which differ from the corresponding compositions 1.1 to 1.2029 only in that they additionally comprise B.106 as further herbicide B.
Also especially preferred are compositions 58.1. to 58.2029 which differ from the corresponding compositions 1.1 to 1.2029 only in that they additionally comprise B.109 as further herbicide B.
Also especially preferred are compositions 59.1. to 59.2029 which differ from the corresponding compositions 1.1 to 1.2029 only in that they additionally comprise B.110 as further herbicide B.
Also especially preferred are compositions 60.1. to 60.2029 which differ from the corresponding compositions 1.1 to 1.2029 only in that they additionally comprise B.111 as further herbicide B.
Also especially preferred are compositions 61.1. to 61.2029 which differ from the corresponding compositions 1.1 to 1.2029 only in that they additionally comprise B.113 as further herbicide B.
Also especially preferred are compositions 62.1. to 62.2029 which differ from the corresponding compositions 1.1 to 1.2029 only in that they additionally comprise B.115 as further herbicide B.
Also especially preferred are compositions 63.1. to 63.2029 which differ from the corresponding compositions 11.1 to 1.2029 only in that they additionally comprise B.116 as further herbicide B.
Also especially preferred are compositions 64.1. to 64.2029 which differ from the corresponding compositions 1.1 to 1.2029 only in that they additionally comprise B.120 as further herbicide B.

Also especially preferred are compositions 65.1. to 65.2029 which differ from the corresponding compositions 1.1 to 1.2029 only in that they additionally comprise B.122 as further herbicide B.
Also especially preferred are compositions 66.1. to 66.2029 which differ from the corresponding compositions 1.1 to 1.2029 only in that they additionally comprise B.123 as further herbicide B.
Also especially preferred are compositions 67.1. to 67.2029 which differ from the corresponding compositions 1.1 to 1.2029 only in that they additionally comprise B.125 as further herbicide B.
Also especially preferred are compositions 68.1. to 68.2029 which differ from the corresponding compositions 1.1 to 1.2029 only in that they additionally comprise B.126 as further herbicide B.
Also especially preferred are compositions 69.1. to 69.2029 which differ from the corresponding compositions 1.1 to 1.2029 only in that they additionally comprise B.133 as further herbicide B.

The compositions according to the invention are suitable as herbicides. They are suitable as such or as an appropriately formulated composition. The compositions according to the invention control vegetation on non-crop areas very efficiently, especially at high rates of application. They act against broad-leafed weeds and grass weeds in crops such as wheat, rice, corn, soybeans and cotton without causing any significant damage to the crop plants. This effect is mainly observed at low rates of application.

Depending on the application method in question, the compositions according to the invention can additionally be employed in a further number of crop plants for eliminating undesirable plants. Examples of suitable crops are the following:

Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera, Zea mays.

Preferred crops are: Arachis hypogaea, Beta vulgaris spec. altissima, Brassica napus var. napus, Brassica oleracea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatissimum, Lycopersicon lycopersicum, Malus spec., Medicago sativa, Nicotiana tabacum (N.rustica), Olea europaea, Oryza sativa, Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays

Especially preferred crops are crops of cereals, corn, soybeans, rice, oilseed rape, cotton, potatoes, peanuts or permanent crops.

The compositions according to the invention can also be used in genetically modified plants. The term "genetically modified plants" is to be understood as plants whose genetic material has been modified by the use of recombinant DNA techniques to include an inserted sequence of DNA that is not native to that plant species' genome or to exhibit a deletion of DNA that was native to that species'genome, wherein the modification(s) cannot readily be obtained by cross breeding, mutagenesis or natural recombination alone. Often, a particular genetically modified plant will be one that has obtained its genetic modification(s) by inheritance through a natural breeding or propagation process from an ancestral plant whose genome was the one directly treated by use of a recombinant DNA technique. Typically, one or more genes have been integrated into the genetic material of a genetically modified plant in order to improve certain properties of the plant. Such genetic modifications also include but are not limited to targeted post-translational modification of protein (s), oligo- or polypeptides. e. g., by inclusion therein of amino acid mutation(s) that permit, decrease, or promote glycosylation or polymer additions such as prenylation, acetylation farnesylation, or PEG moiety attachment.

Plants that have been modified by breeding, mutagenesis or genetic engineering, e.g. have been rendered tolerant to applications of specific classes of herbicides, such as auxinic herbicides such as dicamba or 2,4-D; bleacher herbicides such as 4-hydroxyphenylpyruvate dioxygenase (HPPD) inhibitors or phytoene desaturase (PDS) inhibitors; acetolactate synthase (ALS) inhibitors such as sulfonylureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase inhibitors; lipid biosynthesis inhibitors such as acetylCoA carboxylase (ACCase) inhibitors; or oxynil (i. e. bromoxynil or ioxynil) herbicides as a result of conventional methods of breeding or genetic engineering; furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutgenesis and conventional methods of breeding, e. g., Clearfield® summer rape (Canola, BASF SE, Germany) being tolerant to imidazolinones, e. g., imazamox, or ExpressSun® sunflowers (DuPont, USA) being tolerant to sulfonyl ureas, e. g., tribenuron. Genetic engineering methods have been used to render cultivated plants such as soybean, cotton, corn, beets and rape, tolerant to herbicides such as glyphosate, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

Furthermore, plants are also covered that are by the use of recombinant DNA techniques capable to synthesize one or more insecticidal proteins, especially those known from the bacterial genus Bacillus, particularly from Bacillus thuringiensis, such as delta-endotoxins, e. g., CryIA(b), CryIA(c), CryIF, CryIF(a2), CryIIIA(b), CryIIIA, CryIIIB(b1) or Cry9c; vegetative insecticidal proteins (VIP), e. g., VIP1, VIP2, VIP3 or VIP3A; insecticidal proteins of bacteria colonizing nematodes, e. g., Photorhabdus spp. or Xenorhabdus spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of

sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g., in the publications mentioned above. These insecticidal proteins contained in the genetically modified plants impart to the plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the CrylAb toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called " pathogenesis-related proteins" (PR proteins, see, e.g., EP-A 392 225), plant disease resistance genes (e. g., potato culti-vars, which express resistance genes acting against Phytophthora infestans derived from the Mexican wild potato, Solanum bulbocastanum) or T4-lyso-zym (e.g., potato cultivars capable of synthesizing these proteins with increased resistance against bacteria such as Erwinia amylovora). The methods for producing such genetically modified plants are generally known to the person skilled in the art and are described, e.g., in the publications mentioned above.

Furthermore, plants are also covered that are by the use of recombinant DNA techniques capable to synthesize one or more proteins to increase the productivity (e.g., bio-mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of ingredients or new ingredients, specifically to improve human or animal nutrition, e. g., oil crops that produce health-promoting long-chain omega-3 fatty acids or unsaturated omega-9 fatty acids (e. g., Nexera® rape, Dow AgroSciences, Canada).

Furthermore, plants are also covered that contain by the use of recombinant DNA techniques a modified amount of ingredients or new ingredients, specifically to improve raw material production, e.g., potatoes that produce increased amounts of amylopectin (e.g. Amflora® potato, BASF SE, Germany).

Furthermore, it has been found that the the compositions according to the invention are also suitable for the defoliation and/or desiccation of plant parts, for which crop plants such as cotton, potato, oilseed rape, sunflower, soybean or field beans, in particular cotton, are suitable. In this regard compositions have been found for the desiccation and/or defoliation of plants, processes for preparing these compositions, and methods for desiccating and/or defoliating plants using the compositions according to the invention.

As desiccants, the compositions according to the invention are suitable in particular for desiccating the above-ground parts of crop plants such as potato, oilseed rape, sunflower and soybean, but also cereals. This makes possible the fully mechanical harvesting of these important crop plants.

Also of economic interest is the facilitation of harvesting, which is made possible by concentrating within a certain period of time the dehiscence, or reduction of adhesion to the tree, in citrus fruit, olives and other species and varieties of pomaceous fruit, stone fruit and nuts. The same mechanism, i.e. the promotion of the development of abscission tissue between fruit part or leaf part and shoot part of the plants is also essential for the controlled defoliation of useful plants, in particular cotton. Moreover, a shortening of the time interval in which the individual cotton plants mature leads to an increased fiber quality after harvesting.

The compositions according to the invention or the crop protection compositions comprising them or formulated therefrom can be used, for example, in the form of ready-to-spray aqueous solutions, powders, suspensions, also highly

concentrated aqueous, oily or other suspensions or dispersions, emulsions, oil dispersions, pastes, dusts, materials for broadcasting, or granules, by means of spraying, atomizing, dusting, broadcasting or watering or treatment of the seed or mixing with the seed. The use forms depend on the intended purpose; in any case, they should ensure the finest possible distribution of the active compounds according to the invention.

The crop protection compositions comprise a herbicidally effective amount of the composition according to the invention, i.e. at least one compound I or at least one compound I or an agriculturally useful salt of I and at least one further active compound, selected from herbicides B and the abovementioned safeners C, and also auxiliaries customary for formulating crop protection agents.

Examples of auxiliaries customary for the formulation of crop protection agents are inert auxilaries, solid or liquid carriers, surfactants (such as dispersants, protective colloids, emulsifiers, wetting agents and tackifiers), organic and inorganic thickeners, bactericides, antifreeze agents, antifoams, optionally colorants and, for seed formulations, adhesives.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

Suitable inert auxiliaries are, for example, the following:

> mineral oil fractions of medium to high boiling point, such as kerosene and diesel oil, furthermore coal tar oils and oils of vegetable or animal origin, aliphatic, cyclic and aromatic hydrocarbons, for example paraffin, tetrahydronaphthalene, alkylated naphthalenes and their derivatives, alkylated benzenes and their derivatives, alcohols such as methanol, ethanol, propanol, butanol and cyclohexanol, ketones such as cyclohexanone or strongly polar solvents, for example amines such as N-methylpyrrolidone, and water.

Suitable carriers include liquid and solid carriers.
Liquid carriers include e.g. non-aqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof.
Solid carriers include e.g. mineral earths such as silicas, silica gels, silicates, talc, kaolin, limestone, lime, chalk, bole, loess, clay, dolomite, diatomaceous earth, calcium sulfate, magnesium sulfate and magnesium oxide, ground synthetic materials, fertilizers such as ammonium sulfate, ammonium phosphate, ammonium nitrate and ureas, and products of vegetable origin, such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF AG), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or

polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF AG, Sokalan types), polyalkoxylates, polyvinylamine (BASF AG, Lupamine types), polyethyleneimine (BASF AG, Lupasol types), polyvinylpyrrolidone and copolymers thereof.

Powders, materials for broadcasting and dusts can be prepared by mixing or grinding the active ingredients together with a solid carrier.

Granules, for example coated granules, impregnated granules and homogeneous granules, can be prepared by binding the active ingredients to solid carriers.

Aqueous use forms can be prepared from emulsion concentrates, suspensions, pastes, wettable powders or water-dispersible granules by adding water. To prepare emulsions, pastes or oil dispersions, the compounds of the formula I, especially the compounds I.a, I.b, I.c or I.d (in particular the compounds I.26.1, I.26.2, I.27.1, I.27.2, I.30.1, I. 30.2, I.153.1 or I.153.2), either as such or dissolved in an oil or solvent, can be homogenized in water by means of a wetting agent, tackifier, dispersant or emulsifier. Alternatively, it is also possible to prepare concentrates comprising active compound, wetting agent, tackifier, dispersant or emulsifier and, if desired, solvent or oil, which are suitable for dilution with water.

In the formulation of the compositions according to the present invention the active ingredients are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

The compositions of the invention can for example be formulated as follows:

1. Products for dilution with water

A Water-soluble concentrates 10 parts by weight of active compound are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates 20 parts by weight of active compound are dissolved in 70 parts by weight of cyclohexanone with addition of 10 parts by weight of a dispersant, for example polyvinylpyrrolidone. Dilution with water gives a dispersion. The active compound content is 20% by weight

C Emulsifiable concentrates 15 parts by weight of active compound are dissolved in 75 parts by weight of an organic solvent (eg. alkylaromatics) with addition of calcium dodecylbenzenesulfonate and castor oil ethoxylate (in each case 5 parts by weight). Dilution with water gives an emulsion. The formulation has an active compound content of 15% by weight.

D Emulsions 25 parts by weight of active compound are dissolved in 35 parts by weight of an organic solvent (eg. alkylaromatics) with addition of calcium dodecylbenzenesulfonate and castor oil ethoxylate (in each case 5 parts by weight). This mixture is introduced into 30 parts by weight of water by means of an emulsifier (e.g. Ultraturrax) and made into a homogeneous emulsion. Dilution with water gives an emulsion. The formulation has an active compound content of 25% by weight.

E Suspensions In an agitated ball mill, 20 parts by weight of active compound are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules 50 parts by weight of active compound are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders 75 parts by weight of active compound are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations In a ball mill, 20 parts by weight of active compound, 10 parts by weight of dispersant, 1 part by weight of gelling agent and 70 parts by weight of water or of an organic solvent are mixed to give a fine suspension. Dilution with water gives a stable suspension with active compound content of 20% by weight.

2. Products to be applied undiluted

I Dusts 5 parts by weight of active compound are ground finely and mixed intimately with 95 parts by weight of finely divided kaolin. This gives a dusting powder with an active compound content of 5% by weight.

J Granules (GR, FG, GG, MG) 0.5 parts by weight of active compound are ground finely and associated with 99.5 parts by weight of carriers. Current methods here are extrusion, spray-drying or the fluidized bed. This gives granules to be applied undiluted with an active compound content of 0.5% by weight.

K ULV solutions (UL) 10 parts by weight of active compound are dissolved in 90 parts by weight of an organic solvent, for example xylene. This gives a product to be applied undiluted with an active compound content of 10% by weight.

The concentrations of the active compounds in the ready-to-use preparations can be varied within wide ranges. In general, the formulations comprise from 0.001 to 98% by weight, preferably 0.01 to 95% by weight of at least one active compound. The active compounds are employed in a purity of from 90% to 100%, preferably 95% to 100% (according to NMR spectrum).

In the ready-to-use preparations, i.e. in the compositions according to the invention in the form of crop protection compositions, the components A and B and/or C can be present formulated jointly or separately in suspended, emulsified or dissolved form. The use forms depend entirely on the intended applications.

Accordingly, a first embodiment of the invention relates to compositions in the form of a crop protection composition formulated as a 1-component composition comprising the at least one active compound of the formula I or the at least one active compound of the formula I (active compound A) and at least one further active compound selected from the herbicides B and the safeners C and also a solid or liquid carrier and, if appropriate, one or more surfactants.

Accordingly, a second embodiment of the invention relates to compositions in the form of a crop protection composition formulated as a 2-component composition comprising a first formulation (component) comprising the at least one active compound A, a solid or liquid carrier and, if appropriate, one or more surfactants, and a second component comprising at least one further active compound selected from the herbicides B and safeners C, a solid or liquid carrier and, if appropriate, one or more surfactants.

The active compound A and the at least one further active compound B and/or C can be formulated and applied jointly or separately, simultaneously or in succession, before, during or after the emergence of the plants. In case of separate application, the order of the application of the active compounds A, B and/or C is of minor importance. The only thing that is important is that the at least one active compound A and the at least one further active compound B and/or C are present simultaneously at the site of action, i.e. are at the same time in contact with or taken up by the plant to be controlled / safened.

The required application rate of pure active compound composition, i.e. A and B and, if appropriate, C without formulation auxiliaries depends on the composition of the plant stand, on the development stage of the plants, on the climatic conditions at the site of use and on the application technique. In general, the application rate of A and B and, if appropriate, C, is from 0.001 to 3 kg/ha, preferably from 0.005 to 2.5 kg/ha and in particular from 0.01 to 2 kg/ha of active substance (a.s.).

The required application rates of compounds I are generally in the range of from 0.0005 kg/ha to 2.5 kg/ha and preferably in the range of from 0.005 kg/ha to 2 kg/ha or 0.01 kg/ha to 1.5 kg/h of a.s.

The required application rates of compounds B are generally in the range of from 0.0005 kg/ha to 2.5 kg/ha and preferably in the range of from 0.005 kg/ha to 2 kg/ha or 0.01 kg/ha to 1.5 kg/h of a.s.

The required application rates of compounds C are generally in the range of from 0.0005 kg/ha to 2.5 kg/ha and preferably in the range of from 0.005 kg/ha to 2 kg/ha or 0.01 kg/ha to 1.5 kg/h of a.s.

The compositions according to the invention are applied to the plants mainly by spraying the leaves. Here, the application can be carried out using, for example, water as carrier by customary spraying techniques using spray liquor amounts of from about 100 to 1000 l/ha (for example from 300 to 400 l/ha). The herbicidal compositions may also be applied by the low-volume or the ultra-low-volume method, or in the form of microgranules.

Application of the herbicidal compositions according to the present invention can be done before, during and/or after, preferably during and/or after, the emergence of the undesirable plants.

The herbicidal compositions according to the present invention can be applied pre- or post-emergence or together with the seed of a crop plant. It is also possible to apply the compounds and compositions by applying seed, pretreated with a composition of the invention, of a crop plant. If the active compounds A and B and, if appropriate C, are less well tolerated by certain crop plants, application techniques may be used in which the herbicidal compositions are sprayed, with the aid of the spraying equipment, in such a way that as far as possible they do not come into contact with the leaves of the sensitive crop plants, while the active compounds reach the leaves of undesirable plants growing underneath, or the bare soil surface (post-directed, lay-by).

In a further embodiment, the composition according to the invention can be applied by treating seed. The treatment of seed comprises essentially all procedures familiar to the person skilled in the art (seed dressing, seed coating, seed dusting, seed soaking, seed film coating, seed multilayer coating, seed encrusting, seed dripping and

seed pelleting) based on the compounds of the formula I according to the invention or the compositions prepared therefrom. Here, the herbicidal compositions can be applied diluted or undiluted.

The term seed comprises seed of all types, such as, for example, corns, seeds, fruits, tubers, seedlings and similar forms. Here, preferably, the term seed describes corns and seeds.

The seed used can be seed of the useful plants mentioned above, but also the seed of transgenic plants or plants obtained by customary breeding methods.

The rates of application of the active compound are from 0.0001 to 3.0, preferably 0.01 to 1.0 kg/ha of active substance (a.s.), depending on the control target, the season, the target plants and the growth stage. To treat the seed, the compounds I are generally employed in amounts of from 0.001 to 10 kg per 100 kg of seed.

Moreover, it may be advantageous to apply the compounds I or the compositions of the present invention on their own or jointly in combination with other crop protection agents, for example with agents for controlling pests or phytopathogenic fungi or bacteria or with groups of active compounds which regulate growth. Also of interest is the miscibility with mineral salt solutions which are employed for treating nutritional and trace element deficiencies. Non-phytotoxic oils and oil concentrates can also be added.

The following examples serve to illustrate the invention.

A. Preparation examples

With appropriate modification of the starting materials, the procedures given in the preparation examples below were used to obtain further cyanobutyrates of the formula I. The compounds obtained in this manner are listed in the table that follows, together with physical data.

The products shown below were characterized by melting point determination, by NMR spectroscopy or by the masses ([m/z]) or retention time (RT; [min.]) determined by HPLC-MS spectrometry.

[HPLC-MS = high performance liquid chromatography-coupled mass spectrometry; HPLC column:

RP-18 column (Chromolith Speed ROD from Merck KgaA, Germany), 50*4.6 mm; mobile phase: A: water + 0.1 % TFA; B: acetonitrile + 0.1 % trifluoroacetic acid (TFA), using a gradient of 5-100 % B over 5 minutes at 40˚C, flow rate 1.8-2.1 ml/min.

MS: quadrupole electrospray ionization, 80 V (positive mode).]

Preparation Example 1: Preparation of 4-Cyano-3-(3,5-dichloro-phenyl)-4-phenylbutyric acid methyl ester [referred to as compound No. I-6 in table II below]

At -78˚C and under an atmosphere of protective gas (argon), a solution of 5.09 g of potassium tertbutylate in 30 ml of THF was added dropwise to a solution of 5.07 g of benzylcyanide in 20 ml of THF. After 10 min, a solution of 10.0 g of 3-(3,5-Dichlorophenyl)-acrylic acid methyl ester in 50 ml of THF was added. After 30 min, the reaction solution was, at 20-25˚C, quenched with $NH_4Cl$-solution and washed with 2N HCl, sat. ethyl acetate. After drying and removal of the solvent, the residue was purified on silica gel (50 g cartridge, cyclohexane:ethyl acetate 10:1-3:2). This gave 12.6 g of the title compound.

Preparation Example 2: Preparation of 4-Cyano-3-(3,5-dichloro-phenyl)-4-phenylbutyric acid prop-2-ynyl ester [referred to as compound No. I-4 in table II below which is identical to compound I.153.1]

A mixture of 30.0 mg $K_3PO_4$, 1.0 g of the ester from Preparation Example 1 and 1.0 g of molecular sieves 3Å in 20 ml of propargyl alcohol was stirred at 80˚C. After 4 h, the reaction mixture was diluted with ethyl acetate and washed successively with sat. NHaCl solution and sat. NaCl solution. After drying and removal of the solvent, the residue was purified on silica gel (10 g cartridge, cyclohexane:ethyl acetate 9: 1). This gave 480 mg g of the title compound.

Table II: Cyanobutyrates of the formula I

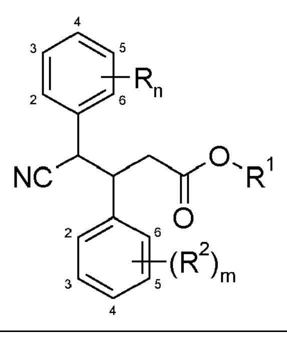

I

(continued)

| No. | $R_n$ | $R^1$ | $(R^2)_m$ | phys. data (HPLC: RT[min] /m/z) |
|---|---|---|---|---|
| I-1 | 4-F | H | 3,5-$F_2$ | 2.914/342(M+23) |
| I-2 | 4-F | $CH_3$ | 2,5-$F_2$ | 3.414/334(M+1) |
| I-3 | 4-F | $CH_2C\equiv CH$ | 2-F,5-Cl | 3.742/318(M-55) |
| I-4 | - | $CH_2CH\equiv CH$ | 3,5-$Cl_2$ | 3.902 / 394 (M+22) |
| I-5 | - | $CH_3$ | 3-F,5-Cl | 3.423 / 354 (M+23) |
| I-6 | - | $CH_3$ | 3,5-$Cl_2$ | 3.823 / 347 (M-1) |
| I-7 | - | $CH_3$ | 3-F,5-Br | 3.669 / 375 (M-1) |
| I-8 | - | $CH_3$ | 3-F,5-$OCHF_2$ | 3.612 / 364 (M+1) |

B. Use examples

The herbicidal action of the compounds and compositions according to the invention is demonstrated by the following greenhouse experiments:

The culture containers used are plastic pots containing loamy sand with approximately 3.0% of humus as substrate. The seeds of the test plants are sown separately for each species.
For the pre-emergence treatment, the active compounds, suspended or emulsified in water, are applied directly after sowing by means of finely distributing nozzles. The containers are irrigated gently to promote germination and growth and subsequently covered with transparent plastic hoods until the plants had rooted. This cover causes uniform germination of the test plants unless this is adversely affected by the active compounds.
For the post-emergence treatment, the test plants are grown to a plant height of from 3 to 15 cm, depending on the plant habit, and only then treated with the active compounds which has been suspended or emulsified in water. To this end, the test plants are either sown directly, and grown in the same containers, or they are first grown separately as seedlings and transplanted into the test containers a few days prior to treatment.
Depending on the species, the plants are kept at 10 - 25˚C and 20 - 35˚C, respectively. The test period extended over 2 to 4 weeks. During this time, the plants are tended and their response to the individual treatments is evaluated.
Evaluation is carried out using a scale from 0 to 100. 100 means no emergence of the plants, or complete destruction of at least the above-ground parts, and 0 means no damage or normal course of growth. Good herbicidal activity is given at values of at least 70, and very good herbicidal activity is given at values of at least 85.

The respective stated components A and B, and if appropriate, C are formulated as a 10% by weight strength emulsion concentrate and, with addition of the amount of solvent system, introduced into the spray liquor used for applying the active compound. In the examples, the solvent used is water.
The test period extends over 20 and 21 days, respectively. During this time, the plants are tended, and their reaction to the treatment with active compound is monitored.
In the examples below, using the method of S. R. Colby (1967) "Calculating synergistic and antagonistic responses of herbicide combinations" , Weeds 15, p. 22ff., the value E, which is expected if the activity of the individual active compounds is only additive, is calculated.

$$E = X + Y - (X \cdot Y/100)$$

where

X = percent activity using active compound A at an application rate a;
Y = percent activity using active compound B at an application rate b;
E = expected activity (in %) by A + B at application rates a + b.

If the value found experimentally is higher than the value E calculated according to Colby, a synergistic effect is present.

The plants used in the greenhouse experiments can be selected from the following species:

| Bayer code | Scientifc name | English name |
|---|---|---|
| ABUTH | Abutilon theophrasti | velvetleaf |
| ALOMY | Alopercurus myosuroides | blackgrass |
| AMARE | Amaranthus retroflexus | common amaranth |
| AMBEL | Ambrosia artemisiifolia | Common ragweed |
| APESV | Apera spica-venti | windgrass |
| BIDPI | Bidens pilosa | blackjack |
| BRADE | Brachiaria deflexa | -- |
| BRAPL | Brachiaria plantaginea | alexandergrass |
| CHEAL | Chenopodium album | lampsquaters |
| COMBE | Commenline benghalensis | bengal commenlina |
| DIGSA | Digitaria sanguinales | large crabcrass |
| ECHCG | Echinocloa crus-galli | comon barnyardgrass |
| ELEIN | Eleusine indica | wiregrass |
| ERBVI | Eriochloa villosa | Woolly cupgrass |
| ERICA | Erigeron canadensis | canada horseweed |
| LAMAM | Lamium amplexicaule | henbit |
| LAMPU | Lamium purpureum | red deadnettle |
| PANDI | Panicum dichotomiflorun | fall panicum |
| PHBPU | Pharbitis purpurea | common morningglory |
| POAAN | Poa annua | annual bluegrass |
| POLCO | Polygonum convolvulus | wild buckwheat |
| SETLU | Setaria lutescens | yellow foxtail |
| SETFA | Setaria faberi | Faber’s foxtail |
| SETVE | Setaria verticillata | bristly foxtail |
| SETVI | Setaria viridis | green foxtail |
| SOLNI | Solanum nigrum | black nightshade |
| SORHA | Sorghum halepense | johnsongrass |
| STEME | Stellaria media | Common chickweed |
| VERPE | Veronica persica | speedwell |

## Claims

**1.** A herbicidal composition comprising:

A) at least one cyanobutyrate of the formula I

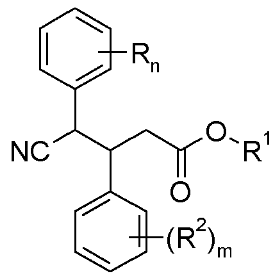

I

wherein

R is halogen, cyano, nitro, $C_1$-$C_4$-alkyl, $C_1$-$C_4$-haloalkyl, $C_2$-$C_6$-alkenyl, $C_2$-$C_6$-alkynyl, $C_1$-$C_4$-alkoxy, $C_1$-$C_4$-haloalkoxy, $S(O)_xR^{aa}$ or Z-tri($C_1$-$C_4$-alkyl)silyl, x is 0, 1 or 2;
$R^{aa}$ is $C_1$-$C_4$-alkyl, $C_1$-$C_4$-haloalkyl, $C_2$-$C_6$-alkenyl or $C_2$-$C_6$-alkynyl; $R^1$ is hydrogen, Z-CN, $C_1$-$C_8$-alkyl, Z-$C_3$-$C_6$-cycloalkyl, $C_1$-$C_8$-haloalkyl, $C_1$-$C_4$-alkoxy-$C_1$-$C_4$-alkyl, $C_1$-$C_4$-alkylthio-$C_1$-$C_4$-alkyl, $C_3$-$C_8$-alkenyl, Z-$C_3$-$C_6$-cycloalkenyl, $C_3$-$C_8$-alkynyl, $NR^iR^{ii}$, Z-(tri-$C_1$-$C_4$-alkyl)silyl, Z-N=C($R^a$)$_2$, Z-C($R^a$)=N$R^a$, Z-C(=T)-$R^a$, Z-P(=T)($R^a$)$_2$, Z-phenyl, or a 3- to 7-membered monocyclic or 9- or 10-membered bicyclic saturated, unsaturated or aromatic heterocycle which is attached via car-bon or nitrogen, contains 1, 2, 3 or 4 heteroatoms selected from the group consisting of O, N and S and may carry carbonyl or thiocar-bonyl groups;

T is O or S,
$R^a$ is OH, $C_1$-$C_8$-alkyl, $C_1$-$C_4$-haloalkyl, Z-$C_3$-$C_6$-cycloalkyl, $C_2$-$C_8$-alkenyl, Z-$C_5$-$C_6$-cycloalkenyl, $C_2$-$C_8$-alkynyl, Z-$C_1$-$C_6$-alkoxy, Z-$C_1$-$C_4$-haloalkoxy, Z-$C_3$-$C_8$-alkenyloxy, Z-$C_3$-$C_8$-alkynyloxy, $NR^iR^{ii}$, $C_1$-$C_6$-alkylsulfonyl, Z-(tri-$C_1$-$C_4$-alkyl)silyl, Z-phenyl, Z-phenoxy, Z-phenylamino or a 5- or 6-membered monocyclic or 9- or 10-membered bicyclic heterocycle which contains 1, 2, 3 or 4 heteroatoms selected from the group consisting of O, N and S, where the cyclic groups are unsubstituted or substituted by 1, 2, 3 or 4 groups $R^b$;
$R^i$, $R^{ii}$ independently of one another are hydrogen, $C_1$-$C_8$-alkyl, $C_1$-$C_4$-haloalkyl, $C_3$-$C_8$-alkenyl, $C_3$-$C_8$-alkynyl, Z-$C_3$-$C_6$-cycloalkyl, Z-$C_1$-$C_8$-alkoxy, Z-$C_1$-$C_8$-haloalkoxy or Z-C(=O)-$R^A$, where $R^A$ is OH or $C_1$-$C_4$-alkoxy;
$R^i$ and $R^{ii}$ together with the nitrogen atom to which they are attached may also form a 5- or 6-membered monocyclic or 9- or 10-membered bicyclic heterocycle which contains 1, 2, 3 or 4 heteroatoms selected from the group consisting of O, N and S; $R^b$ independently of one another are Z-CN, Z-OH, Z-$NO_2$, Z-halogen, $C_1$-$C_8$-alkyl, $C_1$-$C_4$-haloalkyl, $C_2$-$C_8$-alkenyl, $C_2$-$C_8$-alkynyl, Z-$C_1$-$C_8$-alkoxy, Z-$C_1$-$C_8$-haloalkoxy, Z-$C_3$-$C_{10}$-cycloalkyl, O-Z-$C_3$-$C_{10}$-cycloalkyl, Z-C(=O)-$R^a$, $NR^iR^{ii}$, Z-(tri-$C_1$-$C_4$-alkyl)silyl, Z-phenyl or $S(O)_xR^{bb}$, where $R^{bb}$ is $C_1$-$C_8$-alkyl or $C_1$-$C_6$-haloalkyl; $R^b$ together with the group $R^b$ attached to the adjacent carbon atom may also form a 5- or 6-membered saturated or partially or fully unsaturated ring which, in addition to carbon atoms, may contain 1, 2 or 3 heteroatoms selected from the group consisting of O, N and S;
Z is a covalent bond or $C_1$-$C_8$-alkylene;

$R^2$ is halogen, cyano, nitro, $C_1$-$C_4$-alkyl, $C_1$-$C_4$-alkoxy, $S(O)_xR^{bb}$, $NR^iR^{ii}$, $C_1$-$C_4$-haloalkyl or $C_1$-$C_4$-haloalkoxy;
m, n independently of one another are 0, 1, 2, 3, 4 or 5;

where in the groups R, $R^1$ and $R^2$ and their substituents, the carbon chains and/or the cyclic groups may be partially or fully substituted by groups $R^a$ and/or $R^b$,
or a N-oxide or an agriculturally suitable salt thereof and at least one further active compound selected from B) herbicides of class b1) to b15):

b1) lipid biosynthesis inhibitors;
b2) acetolactate synthase inhibitors (ALS inhibitors);
b3) photosynthesis inhibitors;
b4) protoporphyrinogen-IX oxidase inhibitors,
b5) bleacher herbicides;

b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitosis inhibitors;
b10) inhibitors of the synthesis of very long chain fatty acids (VLCFA inhibi-tors);
b11) cellulose biosynthesis inhibitors;
b12) decoupler herbicides;
b13) auxinic herbicides;
b14) auxin transport inhibitors; and
b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop- isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin (CAS 403640-27-7), methyl azide, methyl bromide, methyldymron, methyl iodide, MSMA, oleic acid, oxaziclomefone, pelargonic acid, pyributicarb, quinoclamine, triaziflam, tridiphane and 6-chloro-3(2-cyclopropyl-6-methylphenoxy)-4-pyridazinol (CAS 499223-49-3) and its salts and esters;

including their agriculturally acceptable salts or derivatives; and
C) safeners.

**2.** The composition according to claim 1, wherein the variables R, $R^1$, $R^2$, n and m in formula I have the following meaning:

R is halogen or cyano;
$R^1$ is hydrogen, $C_1$-$C_4$-alkyl, cyano-$C_1$-$C_4$-alkyl, $C_1$-$C_4$-haloalkyl, $C_1$-$C_4$-alkoxy-$C_1$-$C_4$-alkyl, $C_3$-$C_6$-alkynyl, phenyl being unsubstituted or substituted by 1 or 2 halogen atoms at any position or benzyl being unsubstituted or substituted at any position by 1 or 2 groups independently selected from halogen or $C_1$-$C_4$-alkyl;
$R^2$ is halogen, cyano, nitro, $C_1$-$C_4$-alkyl, $C_1$-$C_4$-alkoxy, $C_1$-$C_4$-haloalkyl or $C_1$-$C_4$-haloalkoxy;
n is 0, 1, 2 or 3; and
m is 0, 1, 2, 3 or 4.

**3.** The composition according to any of claims 1 or 2 comprising at least one herbicide B selected from herbicides of class b2, b3, b4, b5, b6, b9 and b10.

**4.** The composition according to any of claims 1 to 3 comprising at least one safener selected from the group consisting of benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

**5.** The composition according to any of claims 1 to 4 wherein the weight ratio of component A to component B is in the range of 1:1000 to 1000:1.

**6.** The composition according to any of claims 1 to 5 wherein the weight ratio of component A to component C is in the range of 1:1000 to 1000:1.

**7.** The composition according to any of claims 1 to 6 in the form of a crop protection composition further comprising auxiliaries customary for formulating crop protection agents.

**8.** A method for controlling unwanted vegetation wherein a herbicidally effective amount of a composition as defined in any of claims 1 to 7 is allowed to act on plants, their habitat or seed.

**9.** The method according to claim 8 wherein a composition as defined in any of claims 1 to 8 is applied before, during and/or after emergence of the unwanted plants, where the herbicidal active components A) and B) and/or C) are applied simultaneously or in succession.

**10.** The method according to claim 8 wherein the leaves of the crop plants and the unwanted plants are treated.

**11.** The use of a composition as defined in any of claims 1 to 7 for controlling unwanted vegetation.

Europäisches Patentamt
European Patent Office
Office européen des brevets

# EUROPEAN SEARCH REPORT

Application Number
EP 12 15 0224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2011/003775 A2 (BASF SE) 13 January 2011 (2011-01-13) * the whole document * ----- | 1-11 | INV. A01N25/32 A01N37/34 A01P13/00 |
| X,P | WO 2011/073143 A1 (BASF SE) 23 June 2011 (2011-06-23) * the whole document * ----- | 1-11 | |
| X,P | WO 2011/098417 A1 (BASF SE) 18 August 2011 (2011-08-18) * the whole document * ----- | 1-11 | |
| X,P | WO 2011/042378 A1 (BASF SE) 14 April 2011 (2011-04-14) * the whole document * ----- | 1-11 | |
| X,P | WO 2011/003776 A2 (BASF SE) 13 January 2011 (2011-01-13) * the whole document * ----- | 1-11 | |

TECHNICAL FIELDS SEARCHED (IPC)

A01N

The present search report has been drawn up for all claims

1

| Place of search | Date of completion of the search | Examiner |
|---|---|---|
| Munich | 18 April 2012 | Breimaier, Waltraud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 15 0224

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2012

| Patent document cited in search report | Publication date | Patent family member(s) | Publication date |
|---|---|---|---|
| WO 2011003775 A2 | 13-01-2011 | NONE | |
| WO 2011073143 A1 | 23-06-2011 | AR 079524 A1 | 01-02-2012 |
| | | WO 2011073143 A1 | 23-06-2011 |
| WO 2011098417 A1 | 18-08-2011 | NONE | |
| WO 2011042378 A1 | 14-04-2011 | AR 079191 A1 | 04-01-2012 |
| | | TW 201127285 A | 16-08-2011 |
| | | UY 32936 A | 30-06-2011 |
| | | WO 2011042378 A1 | 14-04-2011 |
| WO 2011003776 A2 | 13-01-2011 | AR 079400 A1 | 25-01-2012 |
| | | AR 079401 A1 | 25-01-2012 |
| | | TW 201105235 A | 16-02-2011 |
| | | TW 201127284 A | 16-08-2011 |
| | | UY 32777 A | 31-01-2011 |
| | | UY 32779 A | 31-01-2011 |
| | | WO 2011003776 A2 | 13-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 5341 A
- EP 266725 A
- EP 270830 A
- JP 4297454 A
- JP 4297455 A
- JP 5058979 A
- WO 2006024820 A
- WO 2006037945 A
- WO 2007071900 A
- WO 2007096576 A
- WO 2010049369 A
- WO 2010037727 A
- WO 2010012649 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A


### Non-patent literature cited in the description


- *J. Chem. Soc.,* 1945, 438
- *J. Org. Chem.,* 2002, vol. 67, 431
- *J. Am. Chem. Soc.,* 2007, vol. 129 (43), 13321
- *J. Org. Chem.,* 1984, vol. 49 (22), 4287
- Farm Chemicals Handbook 2000. Meister Publishing Company, 2000, vol. 86
- **B. HOCK ; C. FEDTKE ; R. R. SCHMIDT.** Herbizide [Herbicides. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- *Pest Management Science,* 2005, vol. 61, 246
- *PEST MANAGEMENT SCIENCE,* vol. 61, 258
- *PEST MANAGEMENT SCIENCE,* vol. 61, 277
- *PEST MANAGEMENT SCIENCE,* vol. 61, 269
- *PEST MANAGEMENT SCIENCE,* vol. 61, 286
- *PEST MANAGEMENT SCIENCE,* vol. 64, 326
- *PEST MANAGEMENT SCIENCE,* vol. 64, 332
- *Weed Science,* 2009, vol. 57, 108
- *Australian Journal of Agricultural Research,* 2007, vol. 58, 708
- *Science,* 2007, vol. 316, 1185